(19) Europäisches Patentamt / European Patent Office / Office européen des brevets

(11) EP 2 843 004 A1

(12) **EUROPEAN PATENT APPLICATION**
published in accordance with Art. 153(4) EPC

(43) Date of publication:
**04.03.2015 Bulletin 2015/10**

(21) Application number: **12870367.5**

(22) Date of filing: **13.12.2012**

(51) Int Cl.:
***C09B 47/18*** (2006.01) ***B41J 2/01*** (2006.01)
***B41M 5/00*** (2006.01) ***C09B 67/20*** (2006.01)
***C09D 11/00*** (2014.01) ***D06P 1/14*** (2006.01)
***D06P 3/24*** (2006.01) ***D06P 5/00*** (2006.01)

(86) International application number:
**PCT/JP2012/082391**

(87) International publication number:
**WO 2013/132718 (12.09.2013 Gazette 2013/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.03.2012 JP 2012050902**
**17.05.2012 JP 2012113691**
**29.08.2012 JP 2012189163**
**12.11.2012 JP 2012248534**

(71) Applicant: **FUJIFILM Corporation**
**Tokyo 106-8620 (JP)**

(72) Inventors:
- **KOBAYASHI, Hiromi**
  **Ashigarakami-gun**
  **Kanagawa 258-8577 (JP)**
- **KONDOU, Yoshiaki**
  **Ashigarakami-gun**
  **Kanagawa 258-8577 (JP)**
- **YABUKI, Yoshiharu**
  **Ashigarakami-gun**
  **Kanagawa 258-8577 (JP)**
- **YAGI, Kazunari**
  **Ashigarakami-gun**
  **Kanagawa 258-8577 (JP)**

(74) Representative: **Morpeth, Fraser Forrest**
**Fujifilm Imaging Colorants Limited**
**Intellectual Property Group**
**P.O. Box 42**
**Hexagon Tower**
**Blackley, Manchester M9 8ZS (GB)**

# (54) COLORED COMPOSITION FOR PRINTING USE, PRINTING METHOD, AND CLOTH

(57) A coloring composition for textile printing including a dye represented by Formula (X) and water are provided [in Formula (X), each of $X^{21}$ to $X^{24}$ independently represents an oxygen atom or a sulfur atom; each of $R^{21}$ to $R^{24}$ represents an alkyl group, an aryl group, or a heteroaryl group; M represents a hydrogen atom, a metal element, a metal oxide, a metal hydroxide, or a metal halide; each of $P^1$ to $P^4$ independently represents an aromatic ring, and the aromatic ring may have a particular substituent; each of $n^{21}$ to $n^{24}$ independently represents from 0 to 4, and the sum of $n^{21}$ to $n^{24}$ is at least 1; provided that, the structure of Formula (X) contains at least two ionic hydrophilic groups].

EP 2 843 004 A1

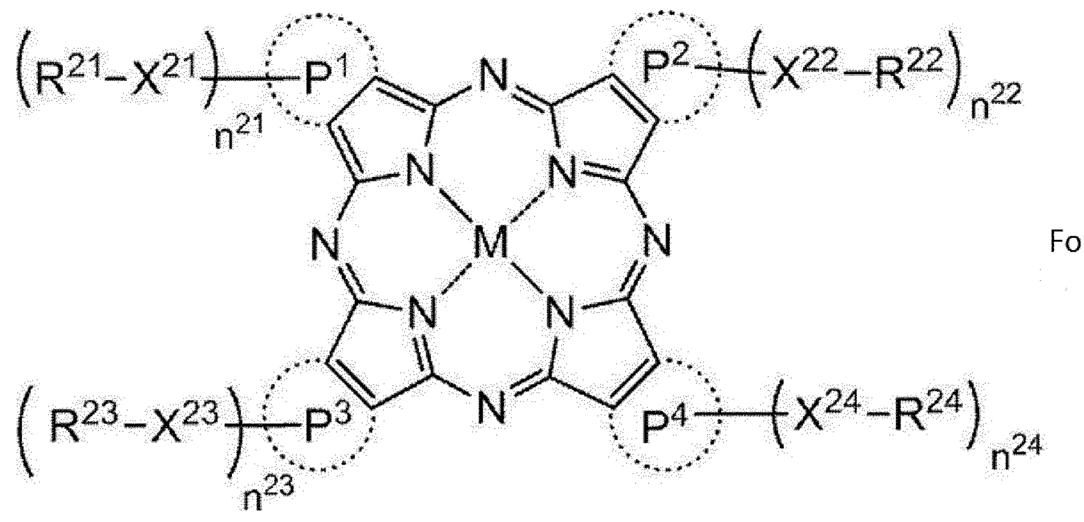

Formula (X)

## Description

### Technical Field

The present invention relates to a coloring composition for textile printing, a textile printing method, and a fabric.

### Background Art

A method of printing an image by an inkjet system is a method of printing by scattering minute liquid droplets of ink from an inkjet recording head, and causing the liquid droplets to adhere to a recording medium as an object of printing. The inkjet system is advantageous in that the mechanism is relatively simple, and high-resolution images can be formed with high accuracy at low cost.

Meanwhile, fabric printing in recent years is carried out by screen printing or the like. In regard to screen printing or the like, it is necessary to produce a copper plate or a screen plate for printing use. Since production of plates takes time and efforts, the plates become highly expensive, and if the production quantity is not brought to a certain quantity, a balance may not be attained in terms of cost. Therefore, there is a demand for a plateless printing system intended for small-scale production, sample making and the like.

In this regard, inkjet textile printing using the inkjet system such as described above, by which dyes can be supplied directly to fabrics, has been suggested. Inkjet textile printing has an advantage that, unlike conventional textile printing, it is not necessary to produce a plate, and images having excellent gradation characteristics can be formed rapidly. Furthermore, according to inkjet textile printing, the delivery period can be shortened, and the method can cope with the production of a large variety of products in small quantities. Moreover, since ink is used only in an amount necessary for the formed images, inkjet textile printing is said to be an excellent image forming method which also has environmental merits such as reduced effluent production, as compared with conventional methods.

In textile printing, the kind of the dye used is limited by the kind of the fiber in the fabric. For example, in a case in which an image is formed on a fabric primarily based on a polyamide fiber such as silk, wool or nylon, a method of using acidic dyes has been suggested, and phthalocyanine dyes also constitute one class of the acidic dyes.

For example, on the occasion of carrying out an inkjet printing method of applying inks of at least two colors onto a fabric by an inkjet system, it has been disclosed to use general-purpose phthalocyanine dyes such as C.I. Direct Blue 87 (DB87) and C.I. Direct Blue 199 (DB199) (see, for example, Japanese Patent No. 3011830).

Furthermore, technologies using phthalocyanine dyes that are not general-purpose phthalocyanine dyes have also been developed, but those technologies are being applied to image display devices such as color filters and liquid crystal displays. For example, it has been disclosed to use an ink obtained by further incorporating a sulfonated phthalocyanine dye into a recording ink characterized by containing at least a water-soluble azopyridone-based dye and a water-soluble organic solvent (see, for example, Japanese Patent Application Laid-Open (JP-A) Nos. 2002-302626 and 2003-138180).

### Citation List

#### Patent Documents

Patent Document 1: Japanese Patent No. 3011830
Patent Document 2: JP-A No. 2002-302626
Patent Document 3: JP-ANo. 2003-138180


### SUMMARY OF INVENTION

#### Technical Problem

In general, an ink for inkjet textile printing is required to have the following characteristics:

(1) developing a color at a sufficient density;
(2) having excellent color reproducibility;
(3) suppressing blurring of formed images or contamination of non-image areas or other fabrics during a post-treatment step or laundering;
(4) suppressing clogging of the nozzles of a recording head;

(5) having no change in the properties (for example, viscosity) or precipitation of solid components during storage of the ink;
(6) being capable of performing stabilized ejection without any change in the ejection characteristics even after a long-term storage; and
(7) forming an image with excellent fastness (water resistance, light resistance or the like).

However, when the general-purpose phthalocyanine dye disclosed in Japanese Patent No. 3011830 is used for textile printing on a nylon fabric, the light resistance of images is insufficient. Furthermore, the inks disclosed in JP-A Nos. 2002-302626 and 2003-138180 are inks used to produce image-forming devices such as a color filter, and cannot be applied to textile printing of fabrics.
The invention has been made in view of such circumstances, and it is an object thereof to achieve the following purpose. That is, the invention is to provide a coloring composition for textile printing which gives a dyed section having excellent light resistance when used for textile printing on a nylon fabric, and a textile printing method using the composition. Another object of the invention is to provide a fabric which gives a dyed section having excellent light resistance.

Solution to Problem

Specific means for solving the problem described above are as follows.

<1> A coloring composition for textile printing, including a dye represented by the following Formula (X), and water:

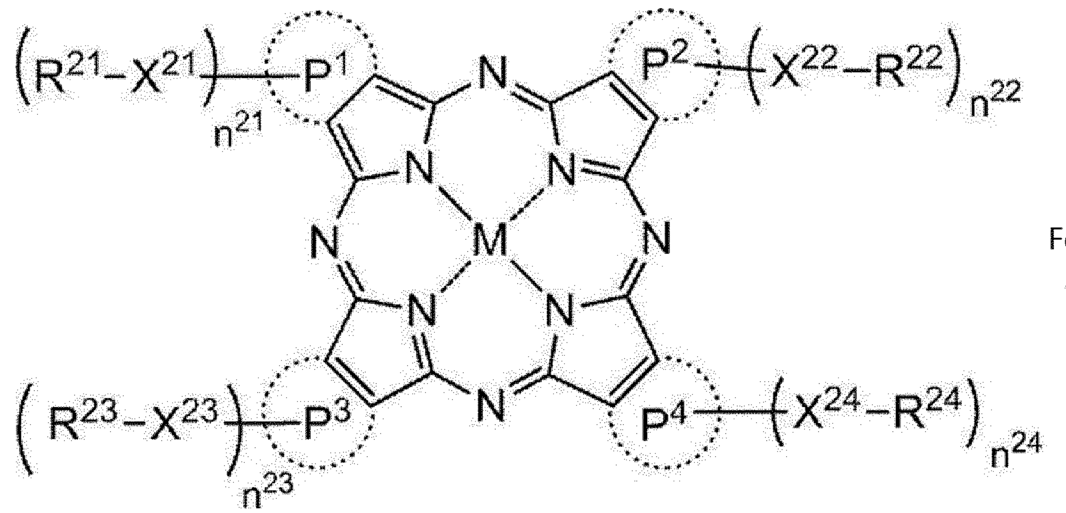

Formula (X)

In Formula (X), each of $X^{21}$, $X^{22}$, $X^{23}$ and $X^{24}$ independently represents an oxygen atom or a sulfur atom; each of $R^{21}$, $R^{22}$, $R^{23}$ and $R^{24}$ represents an alkyl group, an aryl group, or a heteroaryl group; M represents a hydrogen atom, a metal element, a metal oxide, a metal hydroxide, or a metal halide; each of $P^1$, $P^2$, $P^3$ and $P^4$ independently represents an aromatic ring, and the aromatic ring may have a substituent selected from a halogen atom, an alkyl group, an aralkyl group, an alkenyl group, an alkynyl group, a cycloalkyl group, a cycloalkenyl group, an aryl group, a heterocyclic group, an alkyloxy group, an aryloxy group, an acylamino group, an alkylamino group, an anilino group, a ureido group, a sulfamoylamino group, an alkylthio group, an arylthio group, an alkyloxycarbonylamino group, a sulfonamide group, a carbamoyl group, a sulfamoyl group, a sulfo group, a sulfonyl group, an alkyloxycarbonyl group, a heterocyclic oxy group, an azo group, an acyloxy group, a carbamoyloxy group, a silyloxy group, an aryloxycarbonylamino group, an imide group, a heterocyclic thio group, a sulfinyl group, a phosphonyl group, an aryloxycarbonyl group, an acyl group, an ionic hydrophilic group, a cyano group, a hydroxyl group, a nitro group, an amino group, a carbonylalkyl group, or a carbonylamino group; each of $n^{21}$, $n^{22}$, $n^{23}$ and $n^{24}$ independently represents from 0 to 4; and the sum of $n^{21}$, $n^{22}$, $n^{23}$ and $n^{24}$ is at least 1; provided that the structure of Formula (X) contains at least two ionic hydrophilic groups.
<2> The coloring composition for textile printing described in item <1>, wherein the sum of $n^{21}$, $n^{22}$, $n^{23}$ and $n^{24}$ in Formula (X) is from 2 to 3.
<3> The coloring composition for textile printing described in item <1> or <2>, wherein each of $P^1$, $P^2$, $P^3$ and $P^4$ in Formula (X) represents a benzene ring.
<4> The coloring composition for textile printing described in any one of items <1> to <3>, wherein the dye represented

by Formula (X) is a dye represented by the following Formula (I):

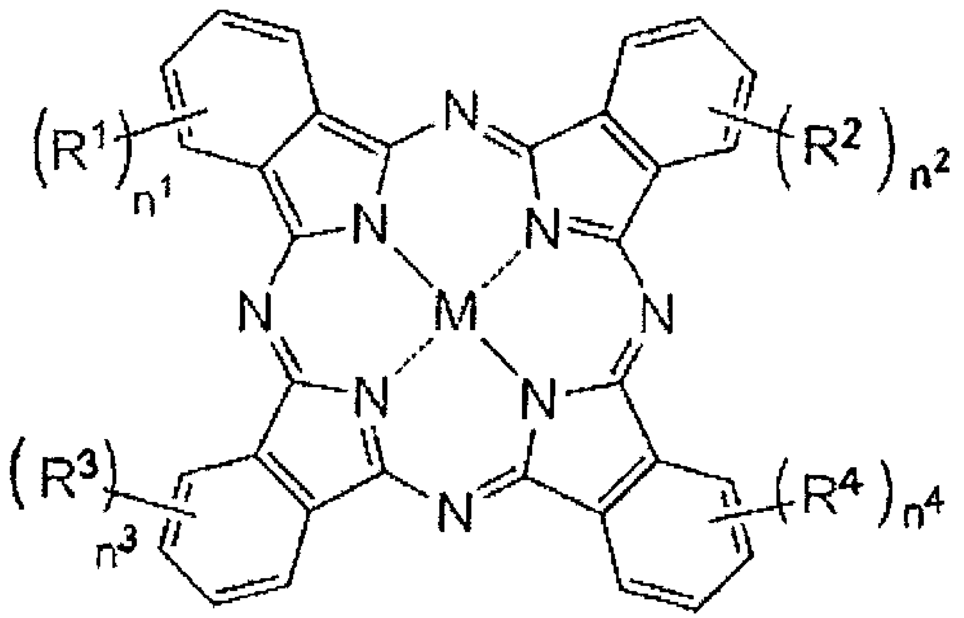

Formula (I)

In Formula (I), each of $R^1$, $R^2$, $R^3$ and $R^4$ independently represents a sulfo group, an alkyl group, an aryl group, or $-XR^{10}$; X represents an oxygen atom or a sulfur atom; $R^{10}$ represents an alkyl group or an aryl group; M represents a hydrogen atom, a metal element, a metal oxide, a metal hydroxide, or a metal halide; each of $n^1$, $n^2$, $n^3$ and $n^4$ independently represents from 0 to 4, and the sum of $n^1$, $n^2$, $n^3$ and $n^4$ is at least 1; provided that the structure of Formula (I) contains at least two ionic hydrophilic groups, at least one of $R^1$, $R^2$, $R^3$ and $R^4$ represents $-XR^{10}$, and $R^{10}$ has at least one ionic hydrophilic group.

<5> The coloring composition for textile printing described in item <4>, wherein each of $R^1$, $R^2$, $R^3$ and $R^4$ in Formula (I) represents an alkyl group, an aryl group, or $-XR^{10}$.

<6> The coloring composition for textile printing described in item <4> or <5>, wherein each of $R^1$, $R^2$, $R^3$ and $R^4$ in Formula (I) represents $-XR^{10}$.

<7> The coloring composition for textile printing described in any one of items <1> to <6>, wherein the ionic hydrophilic group is a carboxyl group, a sulfo group, or a phosphoric acid group.

<8> The coloring composition for textile printing described in any one of items <4> to <7>, wherein, in the dye represented by Formula (I), $R^{10}$ has two or three of $-XR^{10}$ in which $R^{10}$ has a sulfo group.

<9> The coloring composition for textile printing described in item <1> or <4>, wherein the dye represented by Formula (I) is a dye represented by the following Formula (Y):

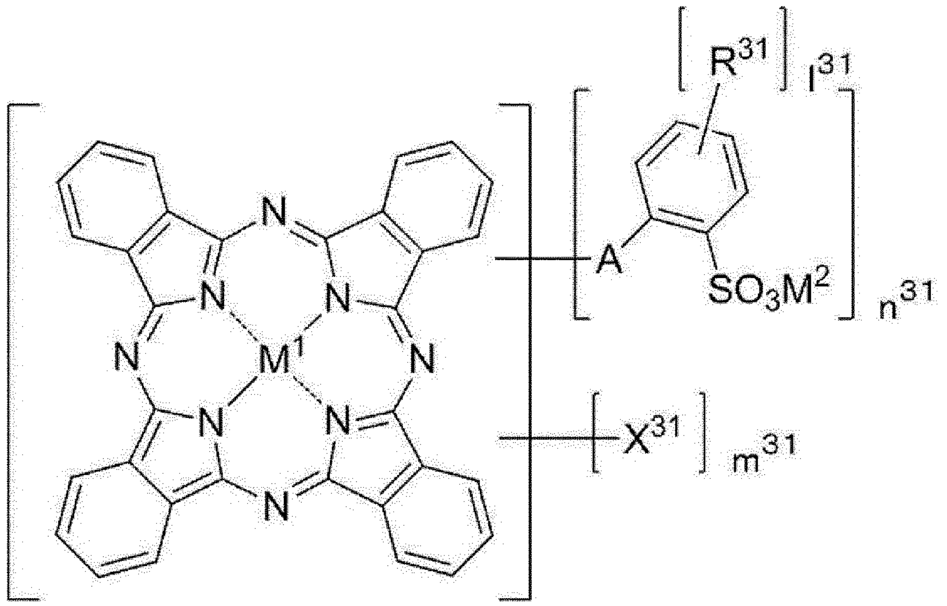

Formula (Y)

in Formula (Y), $X^{31}$ represents a halogen atom, an alkyl group, an aralkyl group, an alkenyl group, an alkynyl group, a cycloalkyl group, a cycloalkenyl group, an aryl group, a heterocyclic group, an alkyloxy group, an aryloxy group, an acylamino group, an alkylamino group, an anilino group, a ureido group, a sulfamoylamino group, an alkylthio group, an arylthio group, an alkyloxycarbonylamino group, a sulfonamide group, a carbamoyl group, a sulfamoyl group, a sulfo group, a sulfonyl group, an alkyloxycarbonyl group, a heterocyclic oxy group, an azo group, an acyloxy group, a carbamoyloxy group, a silyloxy group, an aryloxycarbonylamino group, an imide group, a heterocyclic thio group, a sulfinyl group, a phosphonyl group, an aryloxycarbonyl group, an acyl group, an ionic hydrophilic group, a cyano group, a hydroxyl group, a nitro group, an amino group, a carbonylalkyl group, or a carbonylamino group, and when there are plural $X^{31}$'s, each $X^{31}$ may be identical with or different from each other; A represents an oxygen atom or a sulfur atom, and when there are plural A's, each A may be identical with or different from each other; $M^1$ represents copper, zinc, nickel, or cobalt; $M^2$ represents a hydrogen atom, lithium, potassium, sodium, or ammonium, and when there are plural $M^2$'s, each $M^2$ may be identical with or different from each other; $R^{31}$ has the same meaning as $X^{31}$, and when there are plural $R^{31}$'s, each $R^{31}$ may be identical with or different from each other; $l^{31}$ represents an integer of 0 or more; $m^{31}$ represents an integer of 0 or more; and $n^{31}$ represents an integer from 1 to 4; provided that the structure of Formula (Y) contains at least two ionic hydrophilic groups.

<10> The coloring composition for textile printing described in item <9>, wherein A in Formula (Y) represents an oxygen atom.

<11> The coloring composition for textile printing described in item <9> or <10>, wherein $M^1$ in Formula (Y) represents copper.

<12> The coloring composition for textile printing described in any one of items <9> to <11>, wherein, in Formula (Y), $R^{31}$ represents an alkyl group and $l^{31}$ represents 1.

<13> The coloring composition for textile printing described in any one of items <1> to <12>, further including a dye represented by the following Formula (III):

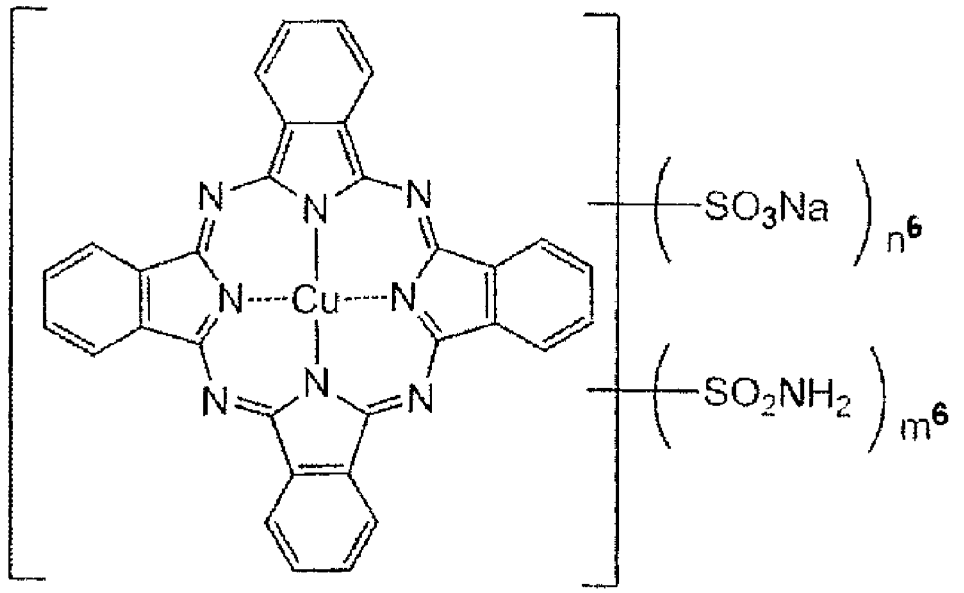

Formula (III)

In Formula (III), $n^6$ represents from 0.5 to 6, and $m^6$ represents from 0 to 3.

<14> The coloring composition for textile printing described in any one of items <1> to <13>, for use as an inkjet ink.

<15> A textile printing method, including applying, by an inkjet method, the coloring composition for textile printing described in item <14> onto a fabric containing nylon.

<16> A fabric that has been subjected to textile printing by the textile printing method described in item <15>.

<17> The fabric described in item <16>, wherein the hue angle of the area dyed by textile printing is from 200° to 300°.

<18> A compound represented by the following Formula (Y):

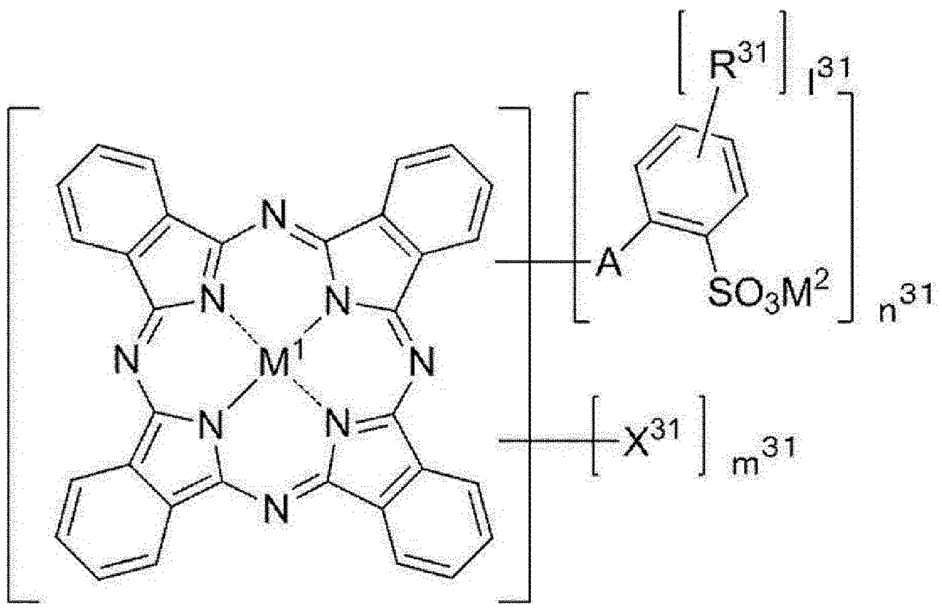

Formula (Y)

In Formula (Y), $X^{31}$ represents a halogen atom, an alkyl group, an aralkyl group, an alkenyl group, an alkynyl group, a cycloalkyl group, a cycloalkenyl group, an aryl group, a heterocyclic group, an alkyloxy group, an aryloxy group, an acylamino group, an alkylamino group, an anilino group, a ureido group, a sulfamoylamino group, an alkylthio group, an arylthio group, an alkyloxycarbonylamino group, a sulfonamide group, a carbamoyl group, a sulfamoyl group, a sulfo group, a sulfonyl group, an alkyloxycarbonyl group, a heterocyclic oxy group, an azo group, an acyloxy group, a carbamoyloxy group, a silyloxy group, an aryloxycarbonylamino group, an imide group, a heterocyclic thio group, a sulfinyl group, a phosphonyl group, an aryloxycarbonyl group, an acyl group, an ionic hydrophilic group, a cyano group, a hydroxyl group, a nitro group, an amino group, a carbonylalkyl group, or a carbonylamino group, and when there are plural $X^{31}$'s, each $X^{31}$ may be identical with or different from each other; A represents an oxygen

atom or a sulfur atom, and when there are plural A's, each A may be identical with or different from each other; $M^1$ represents copper, zinc, nickel, or cobalt; $M^2$ represents a hydrogen atom, lithium, potassium, sodium, or ammonium, and when there are plural $M^2$'s, each $M^2$ may be identical with or different from each other; $R^{31}$ represents a halogen atom, an alkyl group, an alkoxy group, an aryloxy group, an alkylthio group, or an arylthio group, and when there are plural $R^{31}$'s, each $R^{31}$ may be identical with or different from each other; $l^{31}$ represents an integer of 0 or more; $m^{31}$ represents an integer of 0 or more; and $n^{31}$ represents an integer from 1 to 4; provided that the structure of Formula (Y) contains at least two ionic hydrophilic groups.

<19> The compound described in item <18>, wherein A in Formula (Y) represents an oxygen atom.

<20> The compound described in item <18> or <19>, wherein $M^1$ in Formula (Y) represents copper.

<21> The compound described in any one of items <18> to <20>, wherein, in Formula (Y), $R^{31}$ represents an alkyl group and $l^{31}$ represents 1.

Advantageous Effects of Invention

According to the invention, there may be provided a coloring composition for textile printing which gives a dyed section having excellent light resistance when used for textile printing on a nylon fabric, a textile printing method using the coloring composition, and a fabric having a dyed section with excellent light resistance.

BRIEF DESCRIPTION OF DRAWINGS

Fig. 1 is a first Japanese Kanji character printed in Examples.
Fig. 2 is a second Japanese Kanji character printed in Examples.
Fig. 3 is a third Japanese Kanji character printed in Examples.
Fig. 4 is a fourth Japanese Kanji character printed in Examples.

DESCRIPTION OF EMBODIMENTS

<Coloring composition for textile printing>

The coloring composition for textile printing of the invention is configured to include a dye represented by Formula (X) (including a dye represented by Formula (I) and a dye represented by Formula (Y)) and water.

Hereinafter, the dye represented by Formula (X) (including the dye represented by Formula (I) and the dye represented by Formula (Y)) will also be referred to as "specific dye", and the coloring composition for textile printing of the invention will also be referred to simply as "coloring composition".

Textile printing of dyeing a polyamide such as silk or nylon with a phthalocyanine dye has been carried out traditionally, and phthalocyanine dyes obtained by sulfonating phthalocyanine pigments, which are represented by general-purpose phthalocyanine dyes such as C.I. Direct Blue 87 (DB87) and C.I. Direct Blue 199 (DB199), have been used. These dyes are used also for inkjet textile printing, development of which has been underway in recent years.

However, these general-purpose phthalocyanine dyes have a problem that when the dyes are used for textile printing of nylon fabrics, light resistance is deteriorated. The problem that even among fabrics of the same polyamide class, in the case of textile printing of silk or wool, deterioration of light resistance does not occur noticeably when a general-purpose phthalocyanine dye is used. Therefore, the challenge that light resistance is enhanced in nylon textile printing using a phthalocyanine dye, has been a problem that could not be satisfactorily solved ever since the development of nylon.

On the contrary, in this invention, when a coloring composition including a dye represented by Formula (X) (including a dye represented by Formula (I) and a dye represented by Formula (Y)) as a phthalocyanine dye and water is produced as a coloring composition for textile printing that is used for the textile printing of nylon, and is used for textile printing of nylon, a dyed section having an image with excellent light resistance is obtained.

The reason for this is not clearly understood, but it is speculated to be due to the following reason.

Since the general-purpose phthalocyanine dyes described above are synthesized by sulfonating phthalocyanine pigments and thereby modifying substituents, when the phthalocyanine skeleton (structure described below) is designated as Pc, the phthalocyanine dyes have a structure represented by the formula: $Pc-SO_3Z$ or $Pc-SO_2N(Z)_2$ (wherein Z represents a hydrogen atom or a monovalent counter cation).

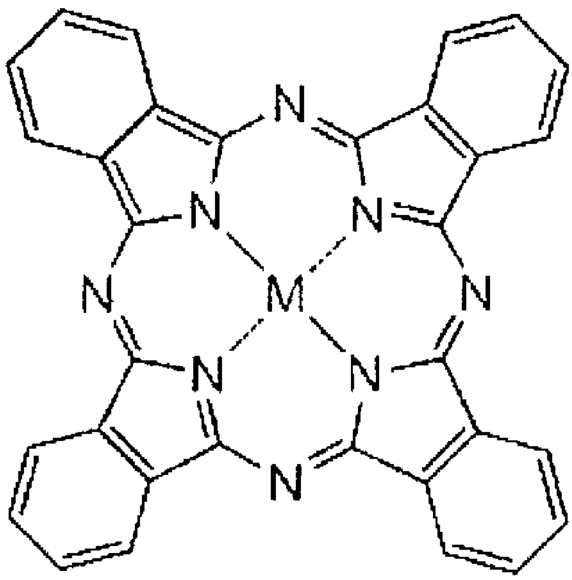

(Pc)

In regard to the structure Pc, M represents a hydrogen atom, a metal element, a metal oxide, a metal hydroxide, or a metal halide.

On the contrary, the particular dye according to the invention has a structure in which at least one ionic hydrophilic group in the molecule is bonded to a phthalocyanine skeleton through -O-$R^{11}$- or -S-$R^{11}$-[wherein $R^{11}$ represents an alkylene group or an arylene group]. Meanwhile, the ionic hydrophilic group may be in the form of a salt. The details of the particular dye will be described below, but the particular dye has a structure in which an oxygen atom (O) or a sulfur atom (S) is bonded to the phthalocyanine skeleton, and $R^{11}$ is bonded to the ionic hydrophilic group. Thus, the particular dye has a structure such as, specifically, Pc-O-$R^{11}$-$SO_3Z$ or Pc-S-$R^{11}$-$SO_3Z$.

When textile printing is carried out using the particular dye as a phthalocyanine dye, although the operating mechanism by which a dyed section having excellent light resistance can be formed even on a nylon fabric is not clearly understood, it is speculated that as the molecular structure of a general-purpose phthalocyanine dye is converted to the molecular structure of the particular dye, there may occur a change in the state of electrons on the phthalocyanine skeleton due to the electron-donating group.

In addition, the coloring composition of the invention is particularly useful when used for the textile printing of nylon fabrics, but the coloring composition is suitable also for the textile printing of fabrics other than nylon fabrics.

Hereinafter, first, the particular dye [a dye presented by Formula (X) (including a dye represented by Formula (I) and a dye represented by Formula (Y))], and various components that may be incorporated, as necessary will be described in detail.

[Dye (particular dye)]

The coloring composition for textile printing of the invention includes a dye which is a compound represented by the following Formula (X) and water:

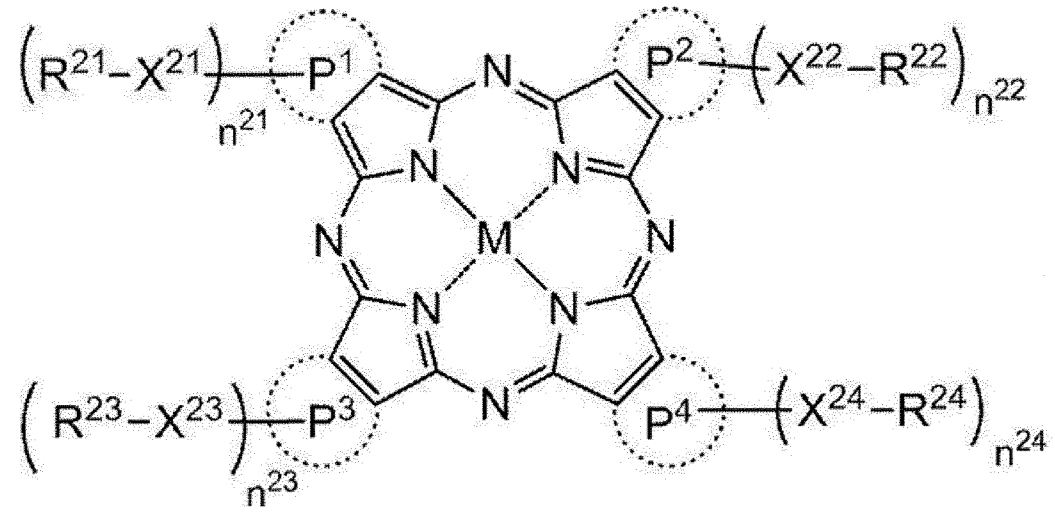

Formula (X)

In Formula (X), each of $X^{21}$ to $X^{24}$ independently represents an oxygen atom or a sulfur atom. Each of $R^{21}$ to $R^{24}$ represents an alkyl group, an aryl group or a heteroaryl group. M represents a hydrogen atom, a metal element, a metal oxide, a metal hydroxide, or a metal halide. Each of $P^1$ to $P^4$ independently represents an aromatic ring which may have a substituent. Each of $n^{21}$ to $n^{24}$ independently represents from 0 to 4, and the sum of $n^{21}$ to $n^{24}$ is at least 1. However, the structure of Formula (X) contains at least two ionic hydrophilic groups.

In Formula (X), each of $X^{21}$ to $X^{24}$ represents an oxygen atom or a sulfur atom, but from the viewpoint of avoiding a decrease in the color optical density (OD) of the cyan region, it is preferable that each of $X^{21}$ to $X^{24}$ is an oxygen atom.

In Formula (X), the alkyl group and aryl group represented by $R^{21}$ to $R^{24}$ have the same meanings as the alkyl group and aryl group represented by $R^1$ to $R^4$ in Formula (I) that will be described below, and preferred examples thereof are also the same.

In Formula (X), examples of the heteroaryl group represented by $R^{21}$ to $R^{24}$ include imdazolyl, pyrazolyl, triazolyl, 2-furyl, 2-thienyl, 2-pyrimidinyl, and 2-benzothiazolyl.

In Formula (X), the aromatic ring represented by $P^1$ to $P^4$ represents an aromatic ring which may have a heteroatom and is capable of undergoing condensation. Specific examples include a benzene ring, a naphthalene ring, a pyridine ring, a pyrazine ring, an imidazole ring, a pyrimidine ring, a pyrazole ring, a quinoline ring, an isoquinoline ring, a benzothiazole ring, and an indole ring. Among them, the aromatic ring is preferably a benzene ring, a naphthalene ring, a pyridine ring, or a pyrazine ring, and more preferably a benzene ring.

It is preferable that among the four aromatic rings represented by $P^1$ to $P^4$, at least three of them are benzene rings. When three of the four aromatic rings are benzene rings, the absorption of the dye occurs at near 600 nm, and the color optical density (OD) of the cyan region may not be easily decreased.

Each of $P^1$ to $P^4$ may have a substituent selected from a halogen atom, an alkyl group, an aralkyl group, an alkenyl group, an alkynyl group, a cycloalkyl group, a cycloalkenyl group, an aryl group, a heterocyclic group, an alkyloxy group, an aryloxy group, an acylamino group, an alkylamino group, an anilino group, a ureido group, a sulfamoylamino group, an alkylthio group, an arylthio group, an alkyloxycarbonylamino group, a sulfonamide group, a carbamoyl group, a sulfamoyl group, a sulfo group, a sulfonyl group, an alkyloxycarbonyl group, a heterocyclic oxy group, an azo group, an acyloxy group, a carbamoyloxy group, a silyloxy group, an aryloxycarbonylamino group, an imide group, a heterocyclic thio group, a sulfinyl group, a phosphonyl group, an aryloxycarbonyl group, an acyl group, an ionic hydrophilic group, a cyano group, a hydroxyl group, a nitro group, an amino group, a carbonylalkyl group, and a carbonylamino group, and the substituent has the same meaning as the substituent that may be further carried by the phthalocyanine skeleton that will be described below.

M in Formula (X) represents a hydrogen atom, a metal element, a metal oxide, a metal hydroxide, or a metal halide. In regard to Formula (X), the metal element, metal oxide, metal hydroxide, or metal halide represented by M respectively have the same meanings as the metal element, metal oxide, metal hydroxide or metal halide represented by M in Formula (I), and preferred examples thereof are also the same.

The ionic hydrophilic group in Formula (X) has the same meaning as the ionic hydrophilic group in Formula (I) that will be described below, and preferred examples thereof are also the same.

In Formula (X), each of $n^{21}$ to $n^{24}$ independently represents from 0 to 4, and the sum of $n^{21}$ to $n^{24}$ is at least 1. If one or more are not introduced, light resistance which is an effect of the invention may not be maintained. Preferably, each of $n^{21}$ to $n^{24}$ independently represents from 0 to 3, and the sum of $n^{21}$ to $n^{24}$ is less than 4. More preferably, each of $n^{21}$ to $n^{24}$ independently represents from 0 to 3, and the sum of $n^{21}$ to $n^{24}$ is from 2 to 3. When the sum of $n^{21}$ to $n^{24}$

is from 2 to 3, the hue of cyan color is favorable.

The hue of the fabric dyed using the coloring composition for textile printing of the invention is preferably cyan, and the hue of cyan is preferably such that the hue angle is from 200° to 260°. Furthermore, if the hues ranging from cyan to blue are also to be included, the hue angle is preferably from 200° to 300°, and more preferably from 210° to 300°. When a hue in this range is displayed, the color optical density (OD) of the cyan region may not be easily decreased.

The coloring composition for textile printing of the invention preferably includes a dye which is a compound represented by the following Formula (I) and water:

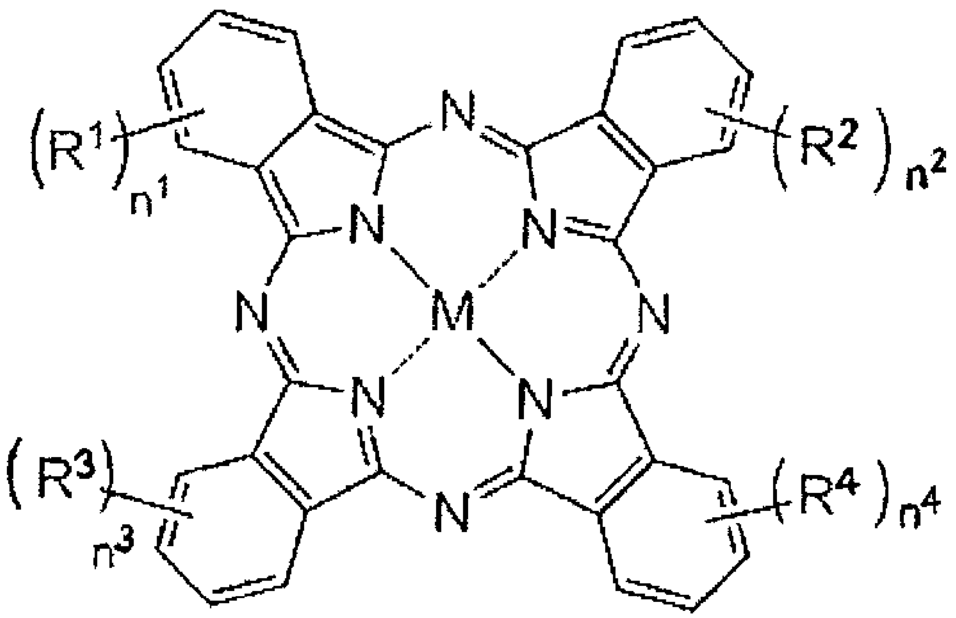

Formula (I)

In Formula (I), each of $R^1$ to $R^4$ independently represents a sulfo group, an alkyl group, an aryl group, or $-XR^{10}$. X represents an oxygen atom or a sulfur atom. $R^{10}$ represents an alkyl group or an aryl group. M represents a hydrogen atom, a metal element, a metal oxide, a metal hydroxide, or a metal halide. Each of $n^1$ to $n^4$ independently represents from 0 to 4, and the sum of $n^1$ to $n^4$ is at least 1. However, the structure of Formula (I) contains at least two ionic hydrophilic groups, and at least one of $R^1$ to $R^4$ is $-XR^{10}$, while $R^{10}$ has at least one ionic hydrophilic group.

Meanwhile, each of $R^1$ to $R^4$, $R^{10}$, and the phthalocyanine skeleton may further have a substituent.

The dye represented by Formula (I) contains at least two ionic hydrophilic groups.

If the number of the ionic hydrophilic groups carried by the particular dye is less than 2, the dye does not dissolve in water, and the coloring composition may not be used as a coloring composition for textile printing.

The number of the ionic hydrophilic groups carried by the dye represented by Formula (I) is preferably from 2 to 3. When the number of the ionic hydrophilic groups carried by the dye represented by Formula (I) is from 2 to 3, the color optical density (OD) of the cyan region is not easily decreased.

Specific examples of the ionic hydrophilic group include a carboxyl group, a sulfo group, and a phosphoric acid group.

When the dye represented by Formula (I) has a carboxyl group, a sulfo group, or a phosphoric acid group as the ionic hydrophilic group in the molecule, these groups may have counter cations, if necessary. Examples of the counter cations that may be used include metal ions such as Li, Na and K; a group having a quaternary salt structure of nitrogen, and a group having a quaternary salt structure of phosphorus.

The dye represented by Formula (I) may have two or more ionic hydrophilic groups in anywhere in the molecular structure, and the phthalocyanine skeleton may have the ionic hydrophilic groups as substituents that are bonded directly to the phthalocyanine skeleton, or $R^1$ to $R^4$ or $R^{10}$ that will be described below may have the ionic hydrophilic groups as substituents. The two or more ionic hydrophilic groups that are carried in the molecular structure may be identical with or different from each other.

The ionic hydrophilic group is most preferably a sulfo group.

Hereinafter, in regard to the dye represented by Formula (I), an embodiment in which the ionic hydrophilic group is a sulfo group will be explained as a representative embodiment, but this explanation also fits in a case in which the ionic hydrophilic group is a group other than a sulfo group, such as a carboxyl group or a phosphoric acid group.

A sulfo group, and a sulfo group that is in the form of a salt (sulfonate group) will also be collectively referred to as "$SO_3Z$". In $SO_3Z$, Z represents a hydrogen atom or a monovalent counter cation. Examples of the monovalent

counter cation represented by Z include $Li^+$, $Na^+$, $K^+$, and $NH_4^+$.

In Formula (I), the sulfo group represented by $R^1$ to $R^4$ may be in the form of a salt as described above. When each of $R^1$ to $R^4$ is represented by $-SO_3Z$, $-SO_3Z$ is directly bonded to the phthalocyanine skeleton (Pc), and the particular dye has a structure represented by the formula: $Pc-SO_3Z$.

As will be described below, it is preferable that $-SO_3Z$ of the particular dye is not bonded directly to the phthalocyanine skeleton.

In Formula (I), the alkyl group represented by $R^1$ to $R^4$ may be an alkyl group having from 1 to 12 carbon atoms, and the alkyl group may be linear, branched or cyclic.

Examples thereof include a methyl group, an ethyl group, a butyl group, an isopropyl group, a t-butyl group, a cyclohexyl group, and a dodecyl group. The alkyl group may further have a substituent.

Among others, a linear or branched alkyl group is preferred, and the number of carbon atoms is preferably from 1 to 8.

In Formula (I), the aryl group represented by $R^1$ to $R^4$ may be an aryl group having from 6 to 12 carbon atoms.

Examples thereof include a phenyl group and a naphthyl group. The aryl group may further have a substituent.

Among others, a phenyl group or a naphthyl group is preferred, and a phenyl group is more preferred.

X in $-XR^{10}$ in Formula (I) represents an oxygen atom (O) or a sulfur atom (S), but from the viewpoint of avoiding a decrease in the color optical density (OD) in the cyan region, X is preferably an oxygen atom.

In regard to $-XR^{10}$ in Formula (I), the alkyl group represented by $R^{10}$ may be an alkyl group having from 1 to 12 carbon atoms, and the alkyl group may be linear, branched or cyclic.

Examples thereof include a methyl group, an ethyl group, a butyl group, an isopropyl group, a t-butyl group, a cyclohexyl group, and a dodecyl group. The alkyl group may further have a substituent.

Among others, a linear or branched alkyl group is preferred, and a linear alkyl group is more preferred. Furthermore, the number of carbon atoms is preferably from 1 to 8, and more preferably from 1 to 4.

In regard to $-XR^{10}$ in Formula (I), the aryl group represented by $R^{10}$ may be an aryl group having from 6 to 12 carbon atoms.

Examples thereof include a phenyl group and a naphthyl group. The aryl group may further have a substituent.

Among others, a phenyl group or a naphthyl group is preferred, and a phenyl group is more preferred.

The particular dye has a structure in which at least one of $R^1$ to $R^4$ in Formula (I) is $-XR^{10}$, with $R^{10}$ having at least one sulfo group. The sulfo group may be in the form of a salt.

Hereinafter, the "group represented by $-XR^{10}$, with $R^{10}$ having at least one sulfo group" will also be referred to as a "particular sulfo group".

The particular sulfo group may be represented by the following structural formula (s-1):

$$-X-R^{11}(SO_3Z)_m \qquad (s-1)$$

wherein in Structural Formula (s-1), X represents an oxygen atom or a sulfur atom; Z represents a hydrogen atom or a monovalent counter cation; m represents the number of $SO_3Z$ moieties; and

$R^{11}$ represents an aliphatic hydrocarbon group having a valency of (m+1) and having from 1 to 12 carbon atoms, or an aromatic hydrocarbon group having a valency of (m+1) and having from 6 to 12 carbon atoms.

$R^{11}$ in Structural Formula (s-1) corresponds to a group having a valency of (m+1), which is obtained by eliminating m hydrogen atoms from $R^{10}$ in Formula (I), and a preferred embodiment of the number of carbon atoms of $R^{11}$ conforms to the case of $R^{10}$ in Formula (I). That is, when $R^{11}$ is an aliphatic hydrocarbon group, a preferred number of carbon atoms is from 1 to 8, and a more preferred number of carbon atoms is from 1 to 4.

m in Structural Formula (s-1) is the number of $SO_3Z$ moieties that can be bonded to $R^{11}$, and an integer of 1 or more may be selected.

Regarding $R^1$ to $R^4$ in Formula (I), only one may be the particular sulfo group, or all of them may be the particular sulfo groups. Furthermore, when the particular dye has $R^1$ to $R^4$ respectively in plural numbers in the molecule, plural $R^1$'s and the like are such that only one may be the particular sulfo group, or all of them may be the particular sulfo groups.

The number of $SO_3Z$ moieties (including the particular sulfo groups) carried by the particular dye is 2 or more in all cases from the viewpoint of the dissolubility of the dye in water, but the number of the particular sulfo groups [$X-R^{11}(SO_3Z)_m$] is desirably 1 or more.

If the dye does not have the particular sulfo group, when a nylon fabric is subjected to textile printing, light resistance may not be obtained.

The number of the particular sulfo groups is preferably smaller than 4. When the number of the particular sulfo groups is smaller than 4, the absorption wavelength of the dye is not easily shifted toward the longer wavelength side, and it becomes difficult to exhibit green color. Therefore, the color optical density (OD) of the cyan region is not easily decreased. The number of the particular sulfo group is more preferably from 2 to 3.

In Formula (I), each of $n^1$ to $n^4$ independently represents from 0 to 4, and the sum of $n^1$ to $n^4$ is at least 1.

Preferably, each of $n^1$ to $n^4$ independently represents from 0 to 4, and the sum of $n^1$ to $n^4$ is from 1 to 4. More preferably each of $n^1$ to $n^4$ independently represents from 0 to 4, and the sum of $n^1$ to $n^4$ is from 2 to 4. Even more preferably, each of $n^1$ to $n^4$ independently represents from 0 to 3, and the sum of $n^1$ to $n^4$ is from 2 to 3.

Examples of the substituent which may be carried by $R^1$ to $R^4$, $R^{10}$, and the phthalocyanine skeleton include the substituents described below.

A halogen atom (for example, a chlorine atom or a bromine atom);
a linear or branched alkyl group having from 1 to 12 carbon atoms (for example, methyl, ethyl, propyl, isopropyl, t-butyl, 2-methanesulfonylethyl, 3-phenoxypropyl, or trifluoromethyl), an aralkyl group having from 7 to 18 carbon atoms (for example, benzyl or phenethyl), an alkenyl group having from 2 to 12 carbon atoms (for example, phenylvinyl), a linear or branched alkynyl group having from 2 to 12 carbon atoms (for example, acetynyl), a cycloalkyl group having from 3 to 12 carbon atoms which may have a side chain (for example, cyclopentyl or cyclohexyl), a cycloalkenyl group having from 3 to 12 carbon atoms which may have a side chain (for example, cyclohexenyl);
a monocyclic or polycyclic aryl group having from 6 to 12 carbon atoms (for example, phenyl, 4-t-butylphenyl, 2,4-di-t-amylphenyl, or naphthyl);
a monocyclic or polycyclic heterocyclic group (for example, as a 5-membered monocyclic ring, imidazolyl, pyrazolyl, triazolyl, 2-furyl or 2-thienyl; as a 6-membered monocyclic ring, 2-pyridyl, 3-pyridyl or 2-pyrimidinyl; and as a polycyclic ring, 2-benzothiazolyl);
an alkyloxy group having from 6 to 12 carbon atoms (for example, methoxy, ethoxy, 2-methoxyethoxy, or 2-methanesulfonylethoxy);
an aryloxy group having from 6 to 12 carbon atoms (for example, phenoxy, 2-methylphenoxy, 4-t-butylphenoxy, 3-nitrophenoxy, 3-t-butyloxycarbamoylphenoxy, or 3-methoxycarbamoyl);
an acylamino group (for example, acetamide, benzamide, 4-(3-t-butyl-4-hydroxyphenoxy)butanamide);
an alkylamino group having from 6 to 12 carbon atoms (for example, methylamino, butylamino, diethylamino, or methylbutylamino);
an anilino group (for example, phenylamino or 2-chloroanilino);
a ureido group (for example, phenylureido, methylureido, or N,N-dibutylureido);
a sulfamoylamino group (for example, N,N-dipropylsulfamoylamino);
an alkylthio group having from 6 to 12 carbon atoms (for example, methylthio, octylthio, or 2-phenoxyethylthio);
an arylthio group having from 6 to 12 carbon atoms (for example, phenylthio, 2-butoxy-5-t-octylphenylthio, or 2-carboxyphenylthio);
an alkyloxycarbonylamino group having from 6 to 12 carbon atoms (for example, methoxycarbonylamino);
a sulfonamide group (for example, methanesulfonamide, benzenesulfonamide, p-toluenesulfonamide or octadecane);
a carbamoyl group (for example, N-ethylcarbamoyl or N,N-dibutylcarbamoyl);
a sulfamoyl group (for example, N-ethylsulfamoyl, N,N-dipropylsulfamoyl, or N,N-diethylsulfamoyl);
a sulfonyl group (for example, methanesulfonyl, octanesulfonyl, benzenesulfonyl, or toluenesulfonyl);
an alkyloxycarbonyl group having from 6 to 12 carbon atoms (for example, methoxycarbonyl or butyloxycarbonyl);
a heterocyclic oxy group (for example, 1-phenyltetrazole-5-oxy or 2-tetrahydropyranyloxy);
an azo group (for example, phenylazo, 4-methoxyphenylazo, 4-pivaloylaminophenylazo, or 2-hydroxy-4-propanoylphenylazo);
an acyloxy group (for example, acetoxy);
a carbamoyloxy group (for example, N-methylcarbamoyloxy or N-phenylcarbamoyloxy);
a silyloxy group (for example, trimethylsilyloxy or dibutylmethylsilyloxy);
an aryloxycarbonylamino group having from 6 to 12 carbon atoms (for example, phenoxycarbonylamino);
an imide group (for example, N-succinimide or N-phthalimide); a heterocyclic thio group (for example, 2-benzothiazolylthio, 2,4-diphenoxy-1,3,5-triazole-6-thio, or 2-pyridylthio);
a sulfinyl group (for example, 3-phenoxypropylsulfinyl); a phosphonyl group (for example, phenoxyphosphonyl, octyloxyphosphonyl, or phenylphosphonyl);
an aryloxycarbonyl group having from 6 to 12 carbon atoms (for example, phenoxycarbonyl);
an acyl group (for example, acetyl, 3-phenylpropanoyl, or benzoyl);
an ionic hydrophilic group (for example, a carboxyl group, a sulfo group, or a quaternary ammonium group);
as well as a cyano group, a hydroxyl group, a nitro group, an amino group, a carbonylalkyl group, and a carbonylamino group.

In Formula (I), M represents a hydrogen atom, a metal element, a metal oxide, a metal hydroxide, or a metal halide.

Examples of the metal element represented by M include Li, Na, K, Mg, Ti, Zr, V, Nb, Ta, Cr, Mo, W, Mn, Fe, Co, Ni, Ru, Rh, Pd, Os, Ir, Pt, Cu, Ag, Au, Zn, Cd, Hg, Al, Ga, In, Si, Ge, Sn, Pb, Sb, and Bi.

Preferred examples of the metal oxide represented by M include VO and GeO.

Furthermore, preferred examples of the metal hydroxide represented by M include $Si(OH)_2$, $Cr(OH)_2$, and

$Sn(OH)_2$.

Furthermore, examples of the metal halide represented by M include AlCl, $SiCl_2$, VCl, $VCl_2$, VOCl, FeCl, GeCl, and ZrCl.

Among those described above, M in Formula (I) is preferably a metal element, and M is more preferably Cu, Ni, Zn or Al, and even more preferably Cu.

Preferred combinations of $R^1$ to $R^4$, $R^{10}$, $n^1$ to $n^4$, and M in regard to Formula (I) are combinations of the respective preferred embodiments of $R^1$ to $R^4$, $R^{10}$, $n^1$ to $n^4$, and M.

Among the substituents described above, each of $R^1$ to $R^4$ in Formula (I) is preferably an alkyl group, an aryl group, or $-XR^{10}$. That is, it is preferable that a sulfo group or a sulfo group that has formed a salt (that is, $-SO_3Z$) is not bonded directly to the phthalocyanine skeleton. When $-SO_3Z$ is not bonded directly to the phthalocyanine skeleton, light resistance is further enhanced at the time of nylon textile printing.

For example, the following Structural Formulas (A-1) and (A-2) both have "two phenoxy groups" and four sulfo groups that have each formed a salt, "Na sulfonates", in a phthalocyanine skeleton (in a skeleton represented by Structural Formula Pc, M represents Cu).

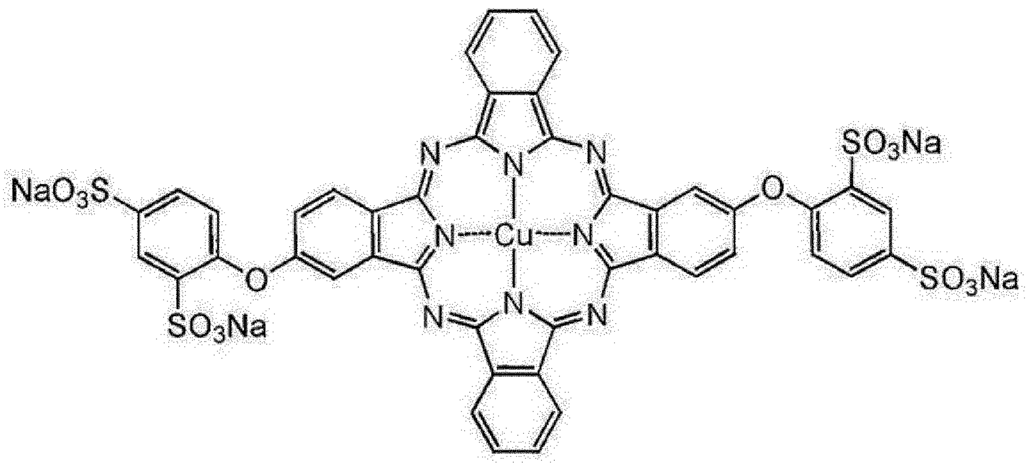

(A-1)

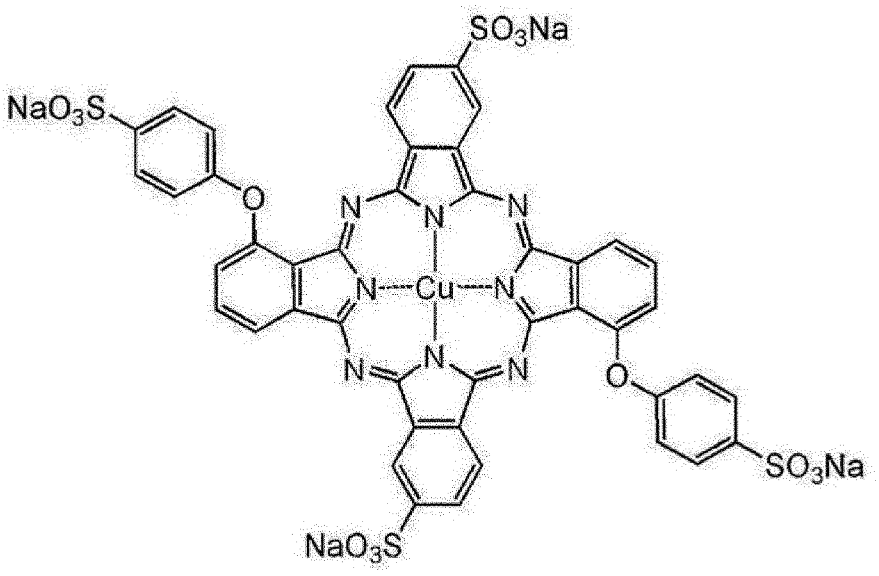

(A-2)

Compound (A-1) is a dye represented by Formula (I), in which $SO_3Na$ is bonded to the benzene ring of the phenoxy group that is bonded to the phthalocyanine skeleton, that is, the particular dye.

Compound (A-2) has two $SO_3Na$ moieties bonded to the benzene ring of the phenoxy group, and therefore, this compound is also the particular dye as in the case of Compound (A-1). However, Compound (A-2) also has two $SO_3Na$ moieties bonded directly to the phthalocyanine skeleton.

In regard to a comparison between Compound (A-1) and Compound (A-2), textile printing using a coloring composition containing Compound (A-1) resulted in favorable light resistance at a dyed section on a nylon fabric when

the nylon fabric was subjected to textile printing, as compared with textile printing using a coloring composition containing Compound (A-2). Therefore, in a comparison between Compound (A-1) and Compound (A-2), the structure of Compound (A-1) is preferred.

Therefore, it is more preferable that each of $R^1$ to $R^4$ in Formula (I) is $-XR^{10}$. At this time, $-XR^{10}$ is preferably $-XR^{10}$ in which $R^{10}$ has at least one sulfo group, that is, $-XR^{10}$ is a particular sulfo group represented by Structural Formula (s-1) $[-X-R^{11}(SO_3Z)_m]$.

Specifically, the particular dye is preferably a dye represented by Formula (II):

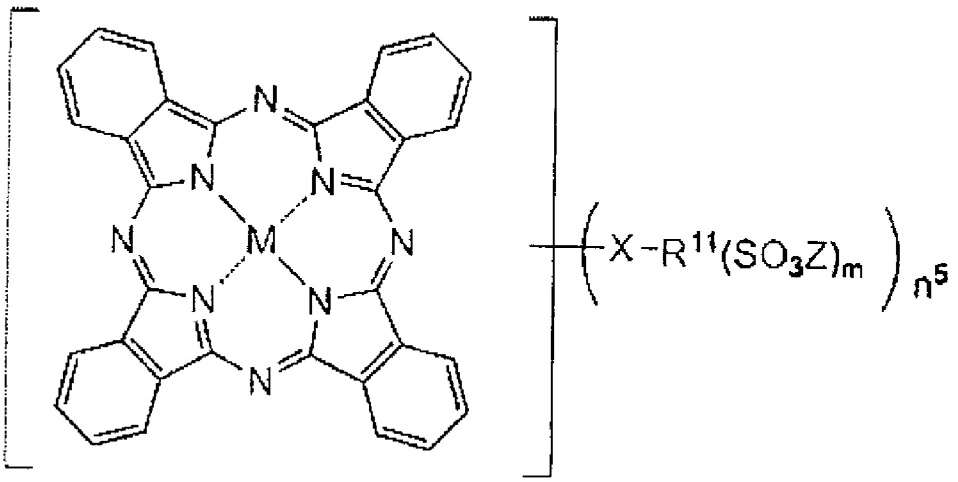

Formula (II)

In Formula (II), X represents an oxygen atom or a sulfur atom; Z represents a hydrogen atom or a monovalent counter cation; and m represents the number of $SO_3Z$ moieties.

$R^{11}$ represents an aliphatic hydrocarbon group having a valency of (m+1) and having from 1 to 12 carbon atoms, or an aromatic hydrocarbon group having a valency of (m+1) and having from 6 to 12 carbon atoms.

M represents a hydrogen atom, a metal element, a metal oxide, a metal hydroxide, or a metal halide. $n^5$ represents an integer from 1 to 16, and the product between m and $n^5$, $(m \times n^5)$, is 2 or more.

X, Z, m, and $R^{11}$ in Formula (II) have the same meanings as X, Z, m, and $R^{11}$ in the Structural Formula (s-1) described above, respectively, and preferred examples thereof are also the same.

M in Formula (II) has the same meaning as M in Formula (I), and preferred examples thereof are also the same. $n^5$ in Formula (II) is the number of the particular sulfo groups that may be substituted on the four benzene rings carried by the phthalocyanine skeleton, and $n^5$ is 16 at the most. However, since the particular dye has at least two sulfo groups in the molecular structure, the product between m and $n^5$, $(m \times n^5)$, is 2 or more.

It is more preferable that the coloring composition for textile printing of the invention includes a dye which is a compound represented by the following Formula (Y), and water.

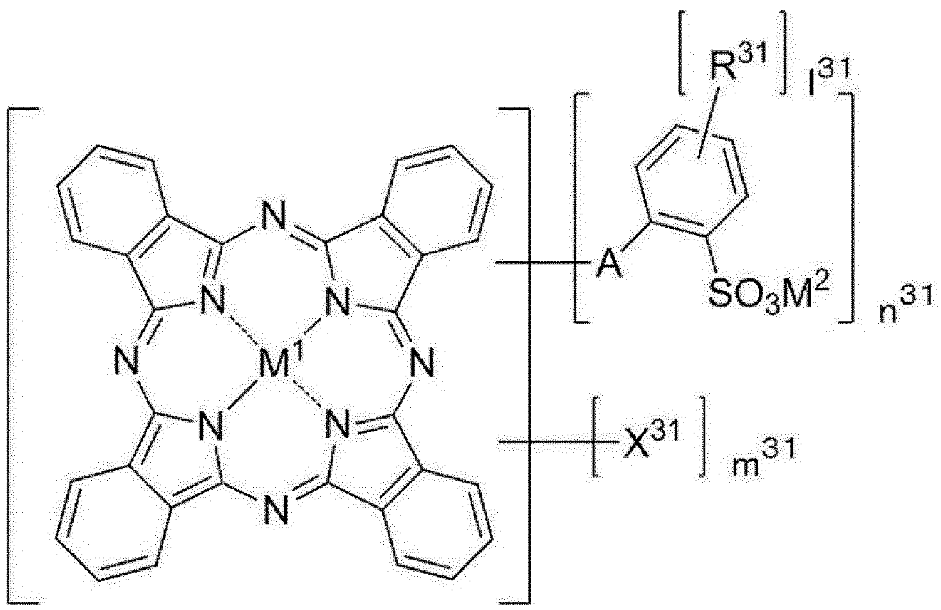

Formula (Y)

In Formula (Y), $X^{31}$ represents a halogen atom, an alkyl group, an aralkyl group, an alkenyl group, an alkynyl group, a cycloalkyl group, a cycloalkenyl group, an aryl group, a heterocyclic group, an alkyloxy group, an aryloxy group, an acylamino group, an alkylamino group, an anilino group, a ureido group, a sulfamoylamino group, an alkylthio group, an arylthio group, an alkyloxycarbonylamino group, a sulfonamide group, a carbamoyl group, a sulfamoyl group, a sulfo group, a sulfonyl group, an alkyloxycarbonyl group, a heterocyclic oxy group, an azo group, an acyloxy group, a carbamoyloxy group, a silyloxy group, an aryloxycarbonylamino group, an imide group, a heterocyclic thio group, a sulfinyl group, a phosphonyl group, an aryloxycarbonyl group, an acyl group, an ionic hydrophilic group, a cyano group, a hydroxyl group, a nitro group, an amino group, a carbonylalkyl group, or a carbonylamino group. $X^{31}$ preferably represents a halogen atom, an aryloxy group, an alkylthio group, an arylthio group, a sulfonamide group, a sulfo group, or a sulfonyl group, and more preferably represents an aryloxy group, a sulfonamide group, a sulfo group, or a sulfonyl group.

In Formula (Y), when there are plural $X^{31}$'s, each $X^{31}$ may be identical with or different from each other. In Formula (Y), the above-described groups represented by $X^{31}$ has the same meaning as the substituents that may be further carried by the phthalocyanine skeleton mentioned above.

The dye represented by Formula (Y) contains at least two ionic hydrophilic groups. The ionic hydrophilic group in Formula (Y) has the same meaning as the ionic hydrophilic group in Formula (I) described above, and preferred examples thereof are also the same.

In Formula (Y), A represents an oxygen atom or a sulfur atom, and when there are plural substituents for A, each A may be identical with or different from each other. From the viewpoint of avoiding a decrease in the color optical density (OD) of the cyan region, A is preferably an oxygen atom.

In Formula (Y), $M^1$ represents Cu, Zn, Ni or Co, which are all metal elements, and $M^1$ is more preferably Cu.

In Formula (Y), $M^2$ represents a hydrogen atom, lithium, potassium, sodium, or ammonium, and $M^2$ preferably represents lithium, potassium, or sodium.

When there are plural $M^2$'s in Formula (Y), each $M^2$ may be identical with or different from each other.

In Formula (Y), $R^{31}$ has the same meaning as $X^{31}$, and $R^{31}$ preferably represents a halogen atom, an alkyl group, an alkoxy group, an aryloxy group, an alkylthio group, or an arylthio group.

In Formula (Y), examples of the halogen atom represented by $R^{31}$ include a chlorine atom, a bromine atom, a fluorine atom, and an iodine atom.

In Formula (Y), the alkyl group represented by $R^{31}$ may be, for example, a linear or branched alkyl group having from 1 to 12 carbon atoms, and specific examples include a methyl group, an ethyl group, a propyl group, an isopropyl group, a t-butyl group, a 2-methanesulfonylethyl group, a 3-phenoxypropyl group, and a trifluoromethyl group.

In Formula (Y), the alkoxy group represented by $R^{31}$ may be, for example, an alkoxy group having from 1 to 10 carbon atoms, and specific examples include a methoxy group, an ethoxy group, an isopropyloxy group, a butoxy group, a 2-ethylhexyloxy group, and a hexyl group.

In Formula (Y), the aryloxy group represented by $R^{31}$ may be, for example, an aryloxy group having from 6 to 12 carbon atoms, and specific examples include phenoxy, 2-methylphenoxy, 4-t-butylphenoxy, 3-nitrophenoxy, 3-t-butyloxycarbamoylphenoxy, and 3-methoxycarbamoyl.

In Formula (Y), the alkylthio group represented by $R^{31}$ may be, for example, an alkylthio group having from 6

to 12 carbon atoms, and specific examples include methylthio, octylthio, and 2-phenoxyethylthio.

In Formula (Y), the arylthio group represented by $R^{31}$ may be, for example, an arylthio group having from 6 to 12 carbon atoms, and specific examples include phenylthio, 2-butoxy-5-t-octylphenylthio, and 2-carboxyphenylthio.

In Formula (Y), when there are plural $R^{31}$'s, each $R^{31}$ may be identical with or different from each other. $R^{31}$ is preferably an alkyl group, and more preferably an alkyl group having from1 to 4 carbon atoms. Furthermore, in Formula (Y), $R^{31}$ is preferably located at the para-position of $SO_3M^2$ from the viewpoint of the ease of synthesis of the compound.

In Formula (Y), $l^{31}$ represents an integer of 0 or more, and is preferably 1. $m^{31}$ represents an integer of 0 or more, and is preferably 0. $n^{31}$ represents an integer of from 1 to 4, preferably represents an integer of from 2 to 4, more preferably represents 3 or 4, and most preferably represents 4. As the number represented by $n^{31}$ is larger, the dyeing affinity is further enhanced.

It is more preferable that the coloring composition for textile printing of the invention includes a dye which is a compound represented by the following Formula (Z), and water.

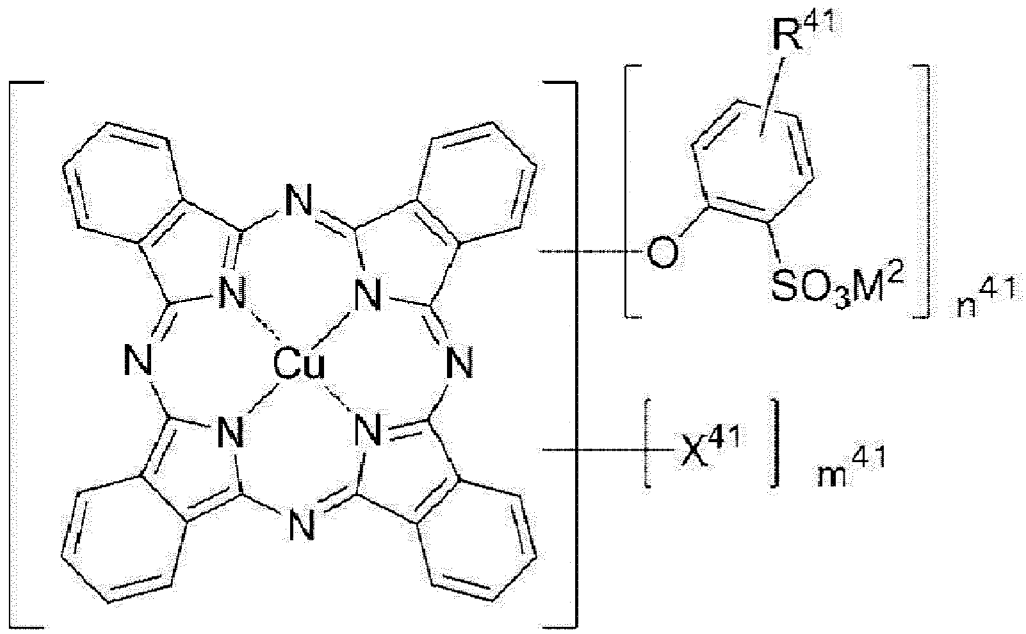

Formula (Z)

$X^{41}$ in Formula (Z) has the same meaning as $X^{31}$ in Formula (Y) described above, and preferred examples are also the same.

$M^2$ in Formula (Z) has the same meaning as $M^2$ in Formula (Y), and preferred examples are also the same.

$R^{41}$ in Formula (Z) represents an alkyl group. The alkyl group has the same meaning as the alkyl group represented by $R^{31}$ in Formula (Y) described above, and preferred examples are also the same.

$m^{41}$ and $n^{41}$ in Formula (Z) have the same meanings as $m^{31}$ and $n^{31}$ in Formula (Y) described above, respectively, and preferred examples are also the same.

Regarding the coloring composition for textile printing of the invention which includes the compound represented by Formula (Y) as a dye, when the coloring composition is used for textile printing of a nylon fabric, a dyed section having excellent light resistance may be obtained. Furthermore, the dyed section containing the compound represented by Formula (Y) also has excellent dyeing affinity. That is, when the coloring composition for textile printing of the invention including the compound represented by Formula (Y) as a dye is used, a balance between light resistance and dyeing affinity may be achieved in the textile printing of a nylon fabric. Although this operating mechanism is not clearly understood, it is speculated as follows.

When the oxygen atoms that constitute $-SO_3M^2$ on the aryl groups introduced into the phthalocyanine ring and the hydrogen atoms on the phthalocyanine ring interact through hydrogen bonding, the aryl groups stand vertically with respect to the phthalocyanine ring plane. As the association between phthalocyanine rings is inhibited by this vertically standing aryl groups, it is easier for the phthalocyanine dye to exist as monomers in the ink solution. It is speculated that when the phthalocyanine dye is monomerized, the rate of infiltration into the fibers is increased, and the dyeing affinity is enhanced.

In addition, the inventors confirmed by computational chemistry that the aryl groups vertically stand with respect to the phthalocyanine ring plane. Furthermore, the inventors also confirmed, by analyzing the visible light absorption spectrum of the ink solution, that when the aryl groups vertically stand with respect to the phthalocyanine ring plane, it

is easier for the phthalocyanine dye to be monomerized in the ink solution.

Specific Example (1) to Specific Example (35) of the dye as a compound represented by Formula (I), and Compound 001 to Compound 011 will be described below, but the particular dye is not intended to be limited to the following specific examples or compounds.

Meanwhile, it is disclosed in Specific Example (1) to Specific Example (9), Specific Example (15), and Specific Example (18) to Specific Example (34) that the particular sulfo group such as -O-Ph-$SO_3Na$ appearing in each of the Specific Examples [in Specific Example (19) and Specific Example (20), further -$SO_3Na$] is bonded to a carbon atom having a hydrogen atom bonded thereto, which is carried by the four benzene rings in the phthalocyanine skeleton, by substituting the hydrogen atom.

The particular sulfo group or -$SO_3Na$ may be bonded concentratedly to any one of the four benzene rings, or may be bonded to different benzene rings. However, for example, when "-H" exists on the benzene ring of the phthalocyanine skeleton as in the case of Specific Example (15), the particular sulfo group is not bonded to the carbon atom to which the hydrogen atom represented by "-H" is bonded.

Furthermore, Specific Example (10) to Specific Example (14), Specific Example (16) and Specific Example (17) show that the particular sulfo group may be bonded directly to the benzene ring of the phthalocyanine skeleton, or may substitute a hydrogen atom carried by a carbon atom of the phenoxy group or methoxy group bonded to the benzene ring of the phthalocyanine skeleton, and be bonded to the carbon atom of the phenoxy group or methoxy group.

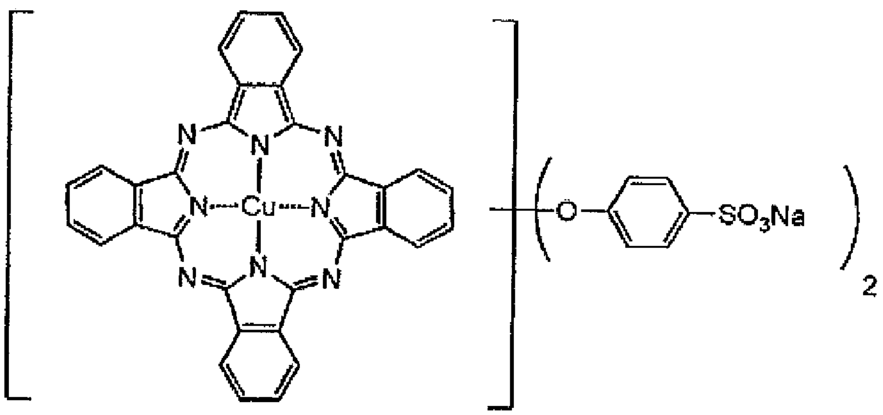

(1)

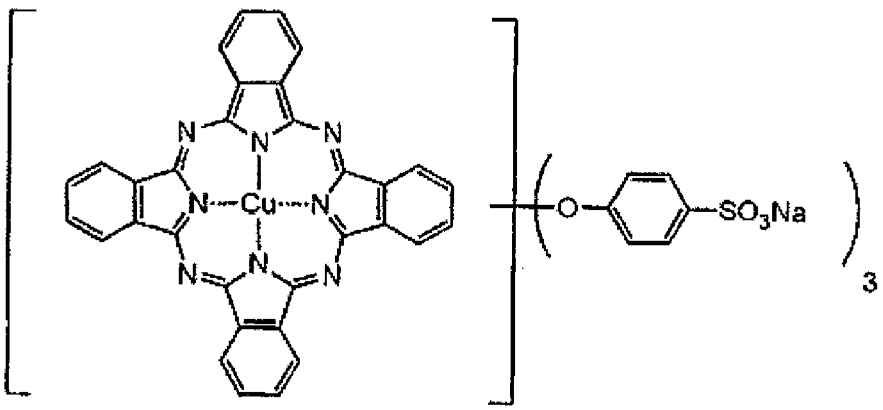

(2)

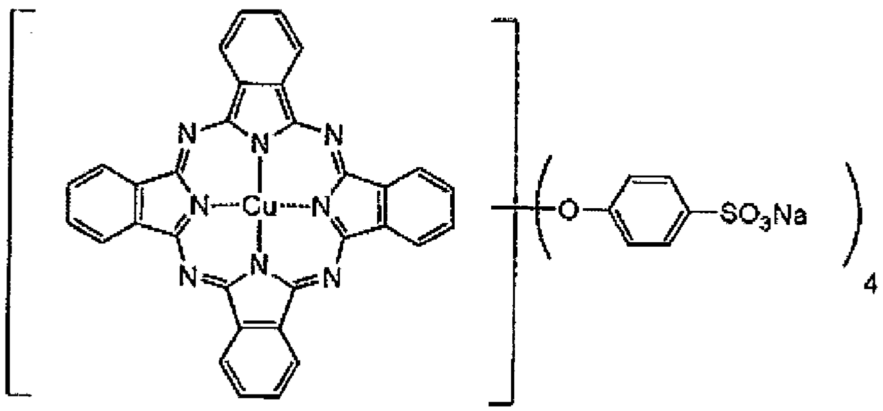

(3)

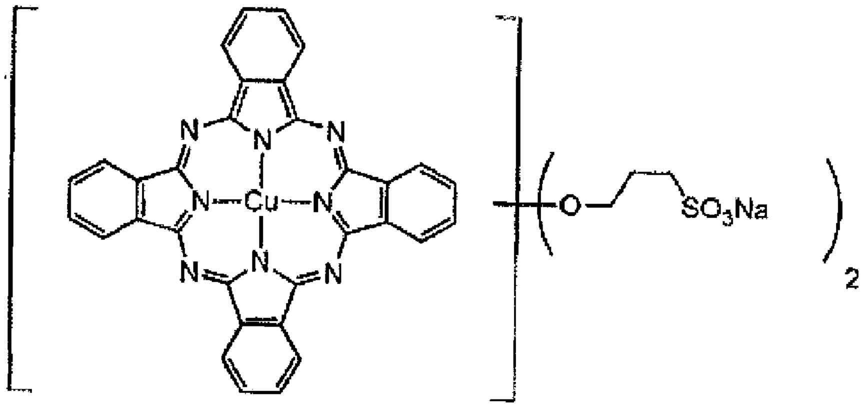

(4)

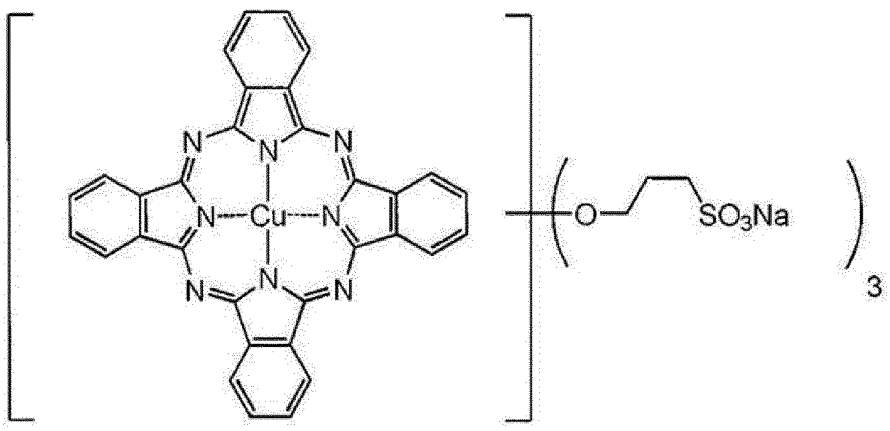

(5)

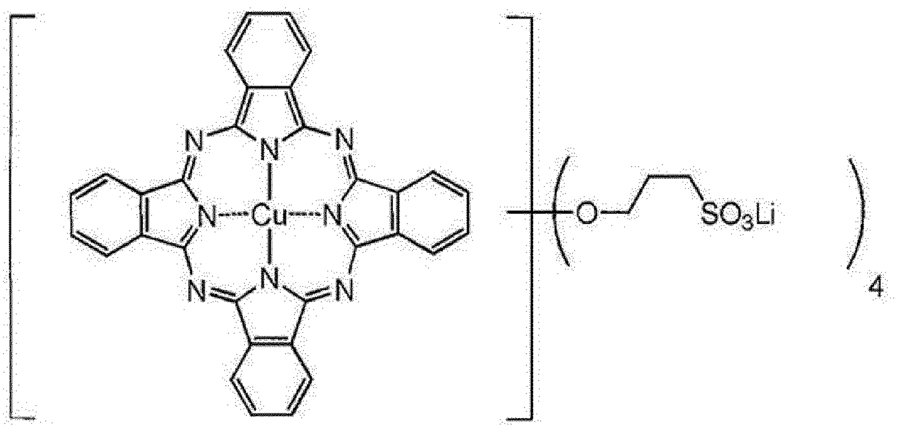

(6)

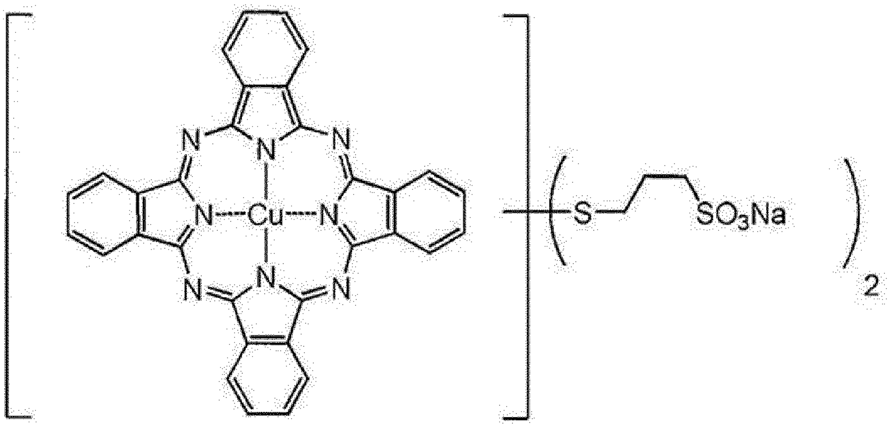

(7)

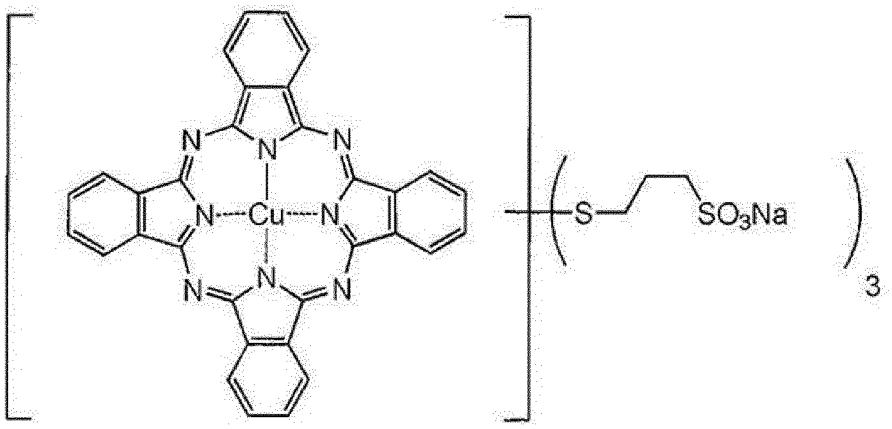

(8)

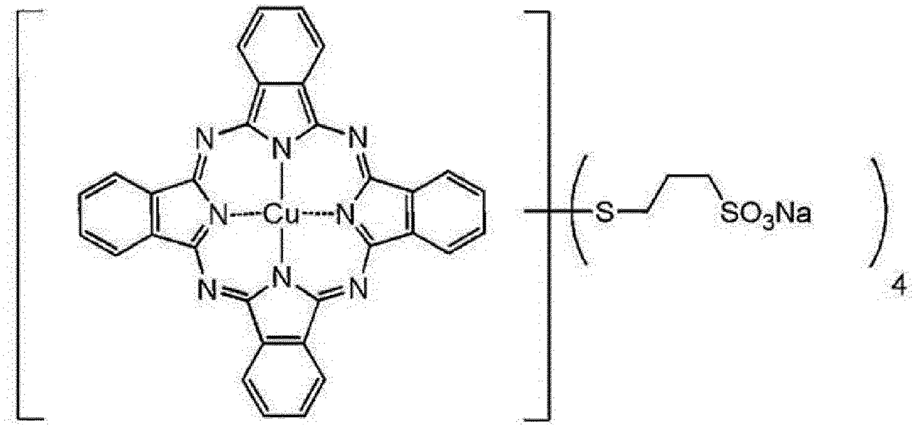

(9)

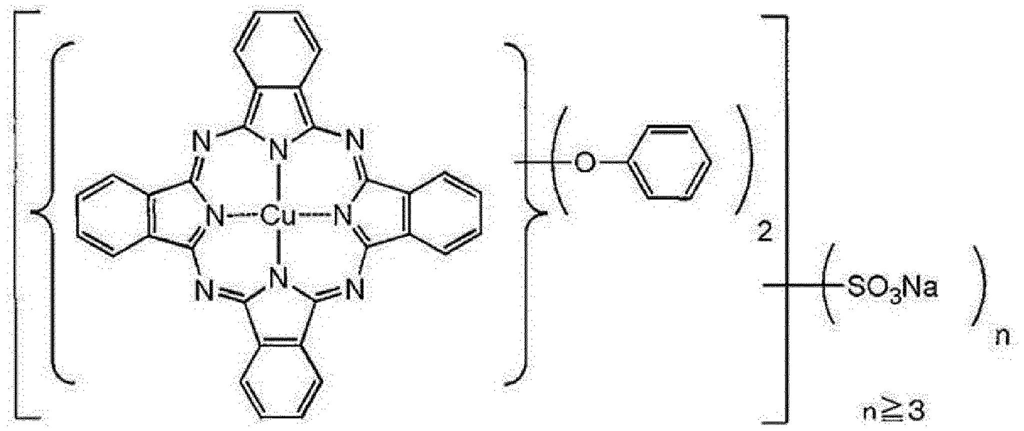

n≧3

(10)

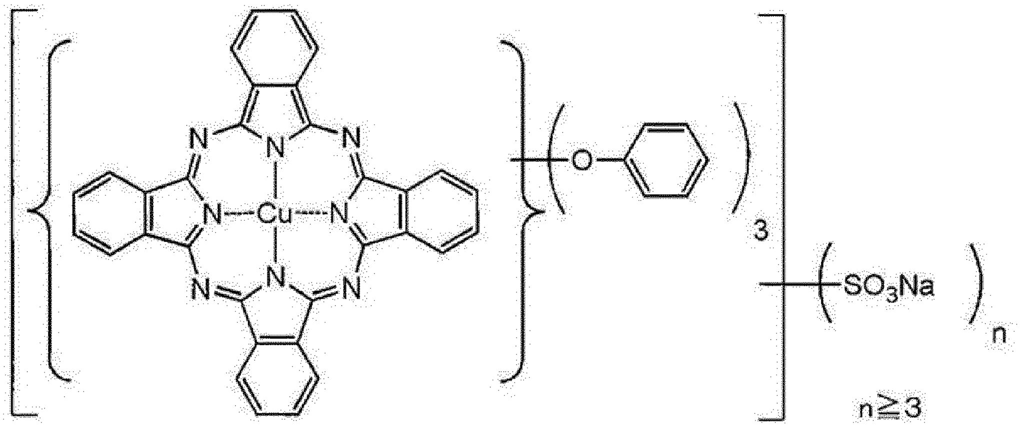

n≧3

(11)

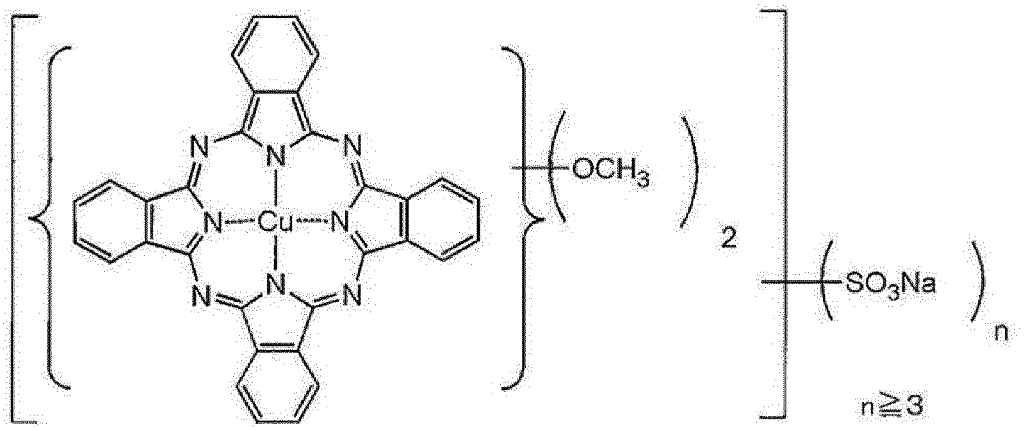

n≧3

(12)

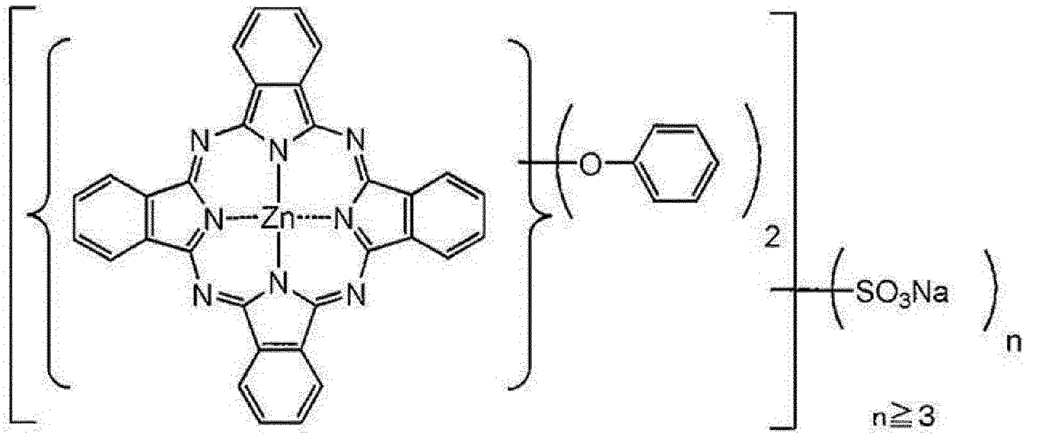

$n \geqq 3$

(13)

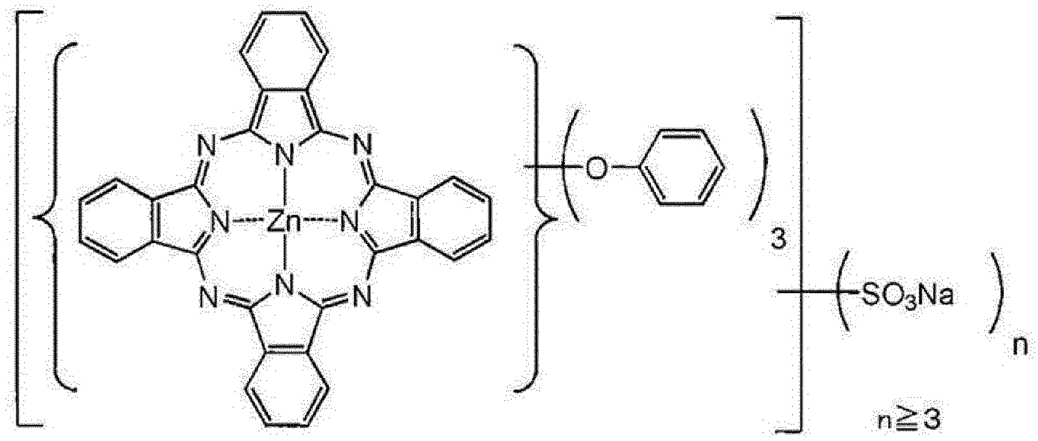

$n \geqq 3$

(14)

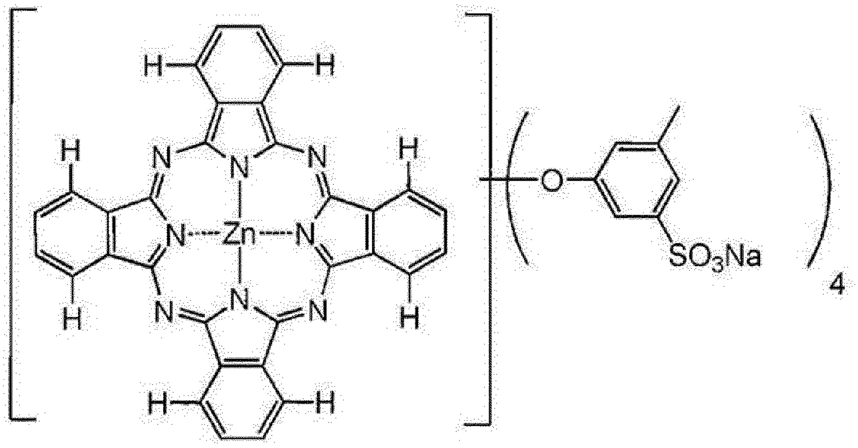

(15)

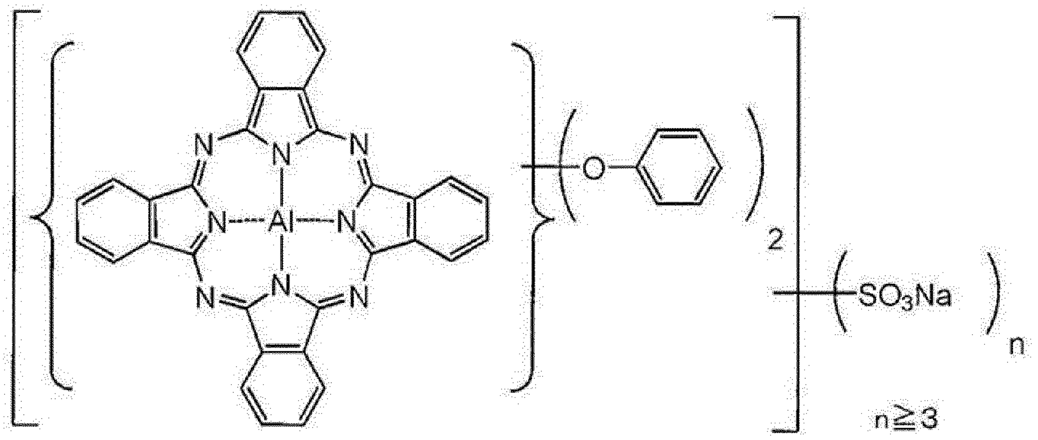

n≧3

(16)

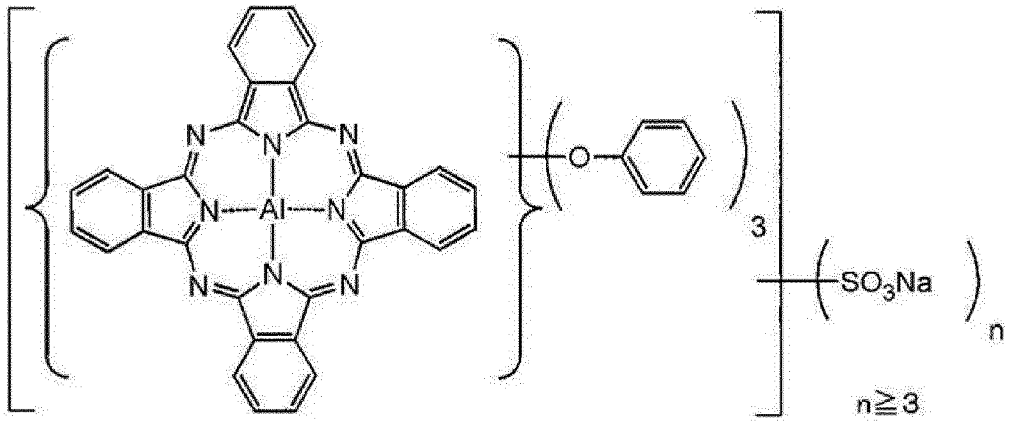

n≧3

(17)

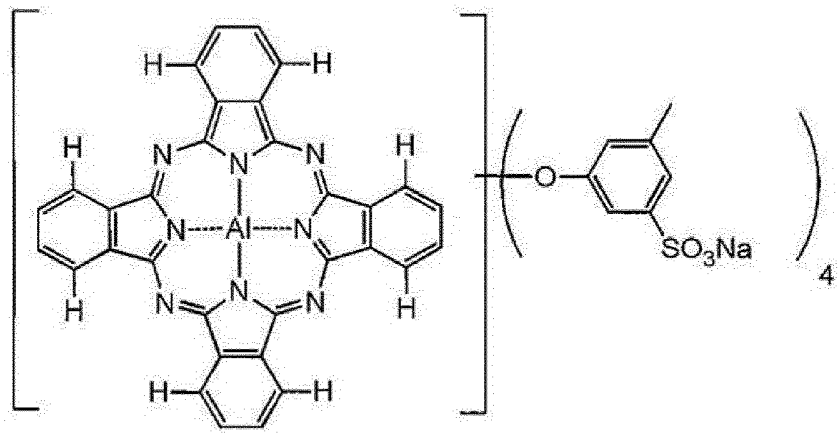

(18)

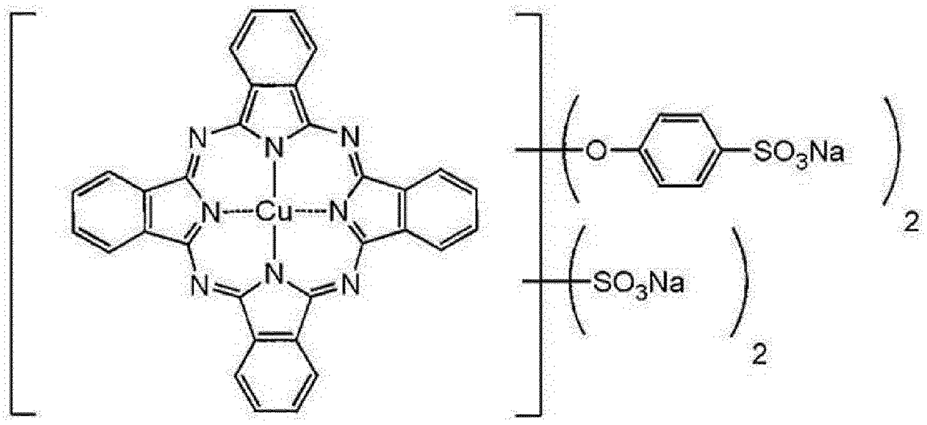

(19)

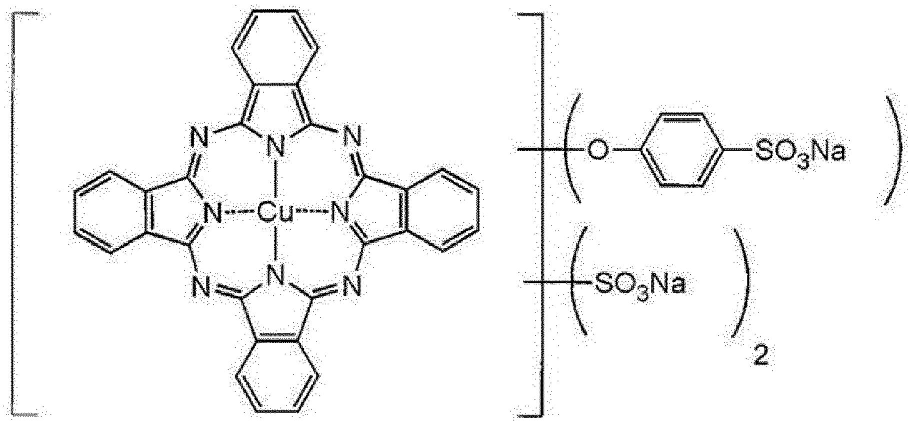

(20)

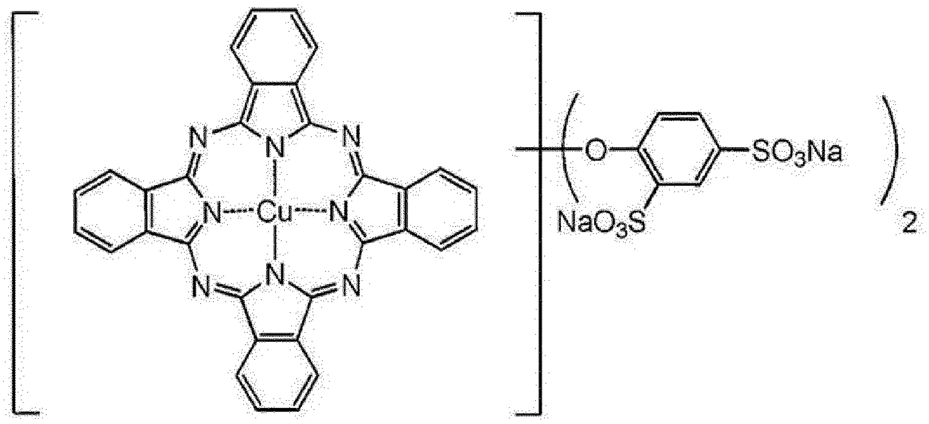

(21)

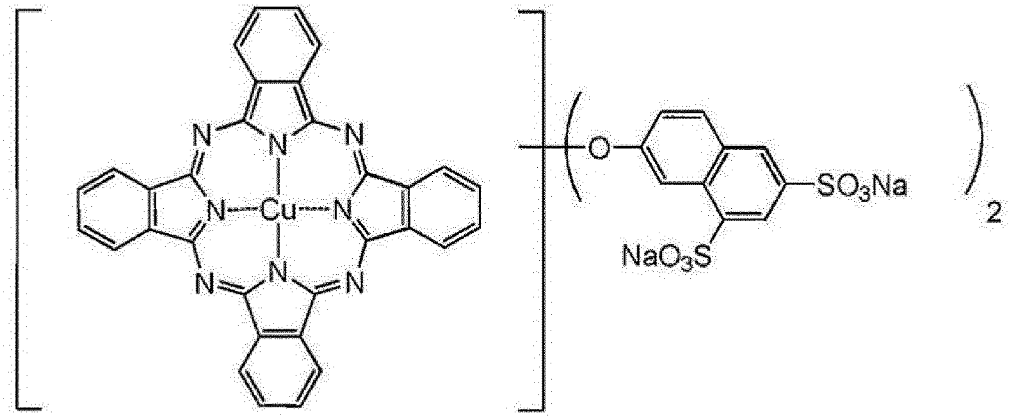

(22)

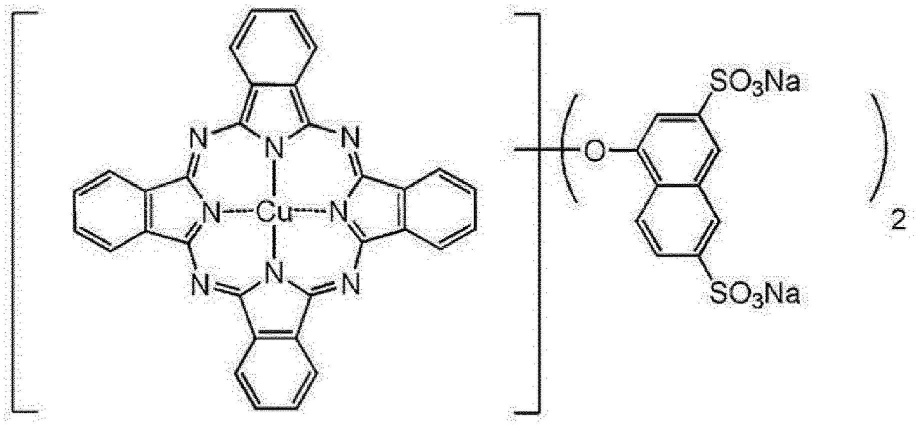

(23)

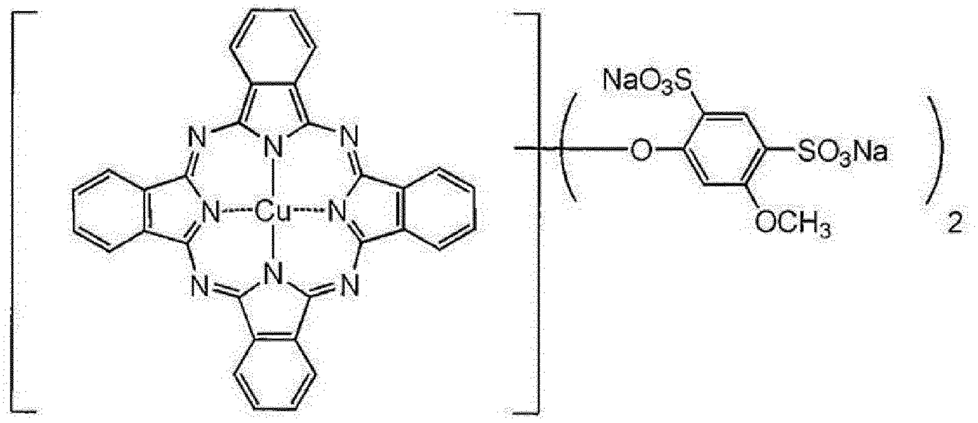

(24)

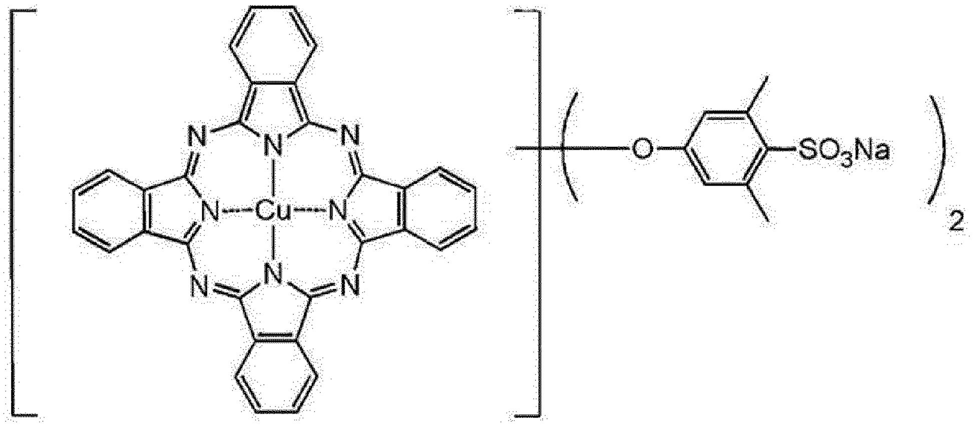

(25)

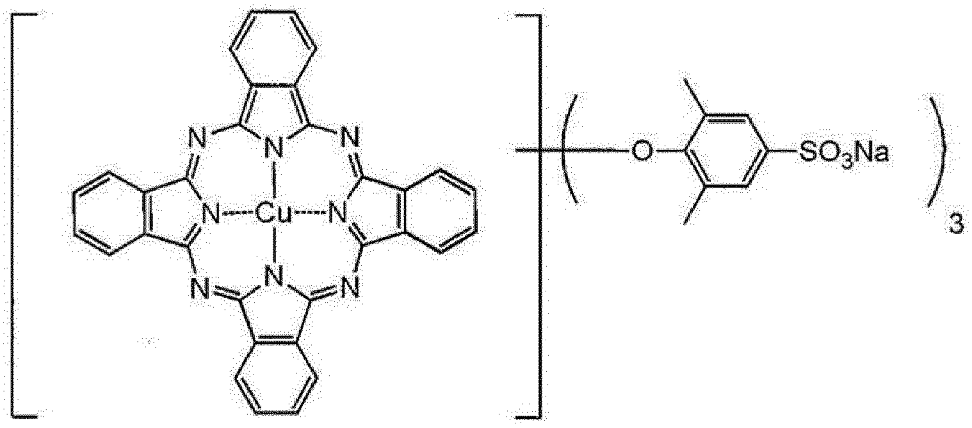

(26)

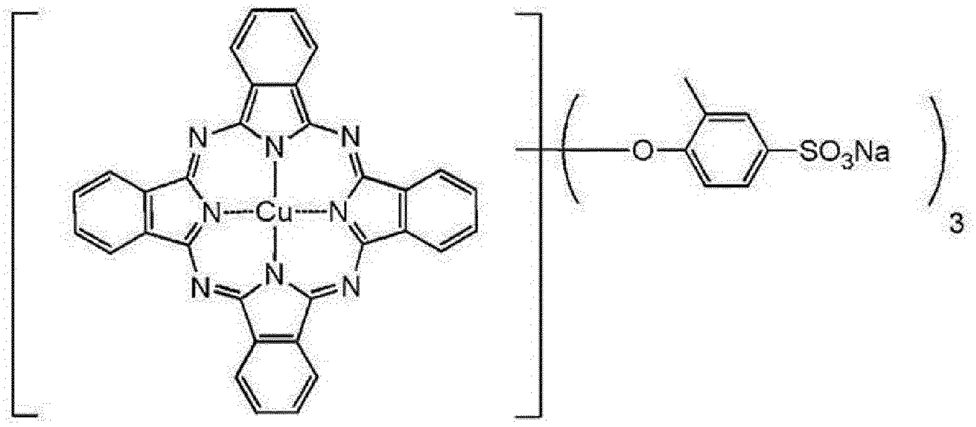

(27)

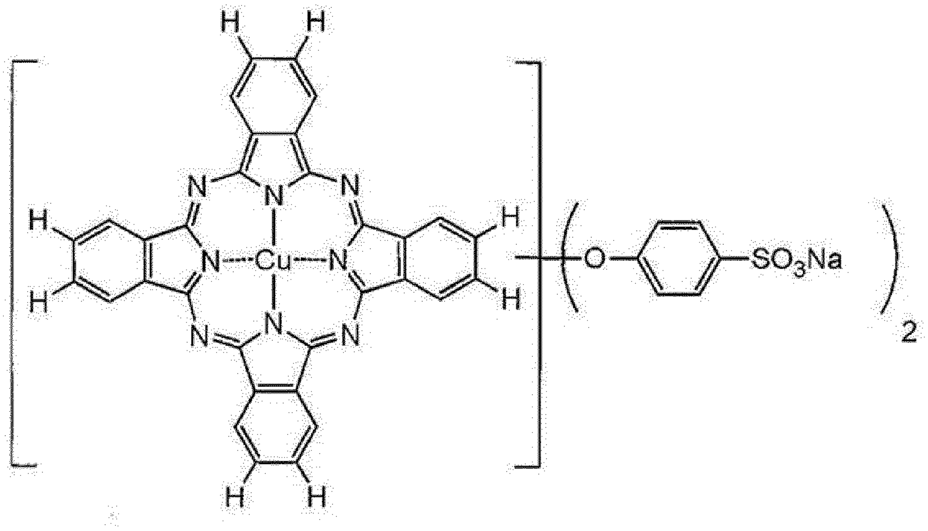

(28)

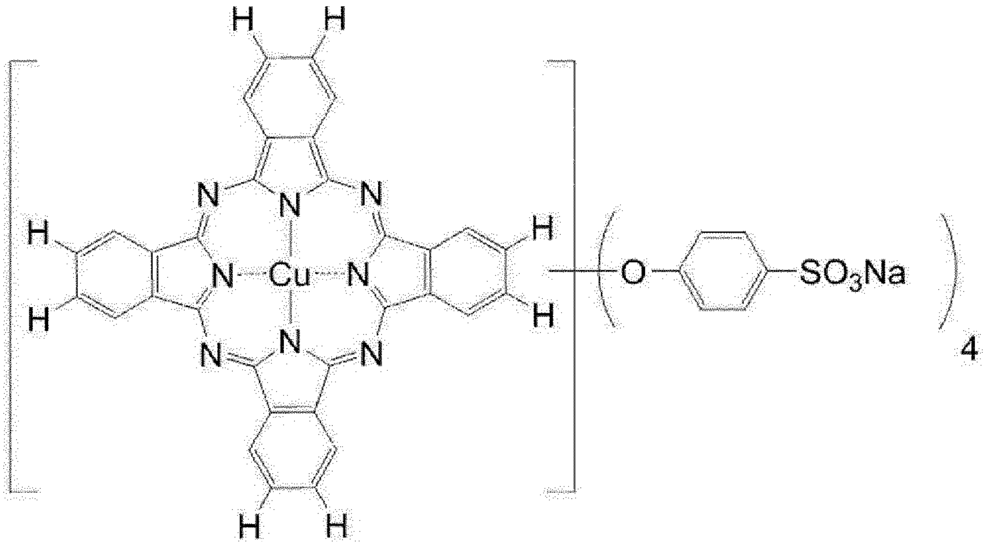

(29)

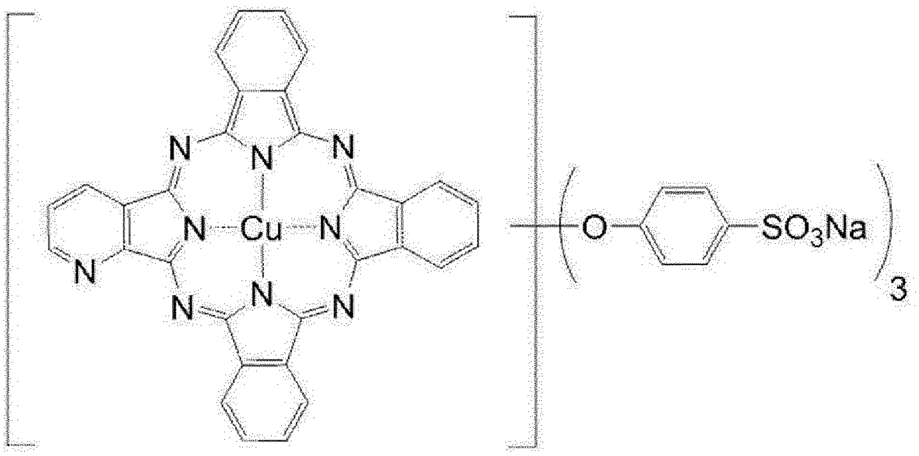

(30)

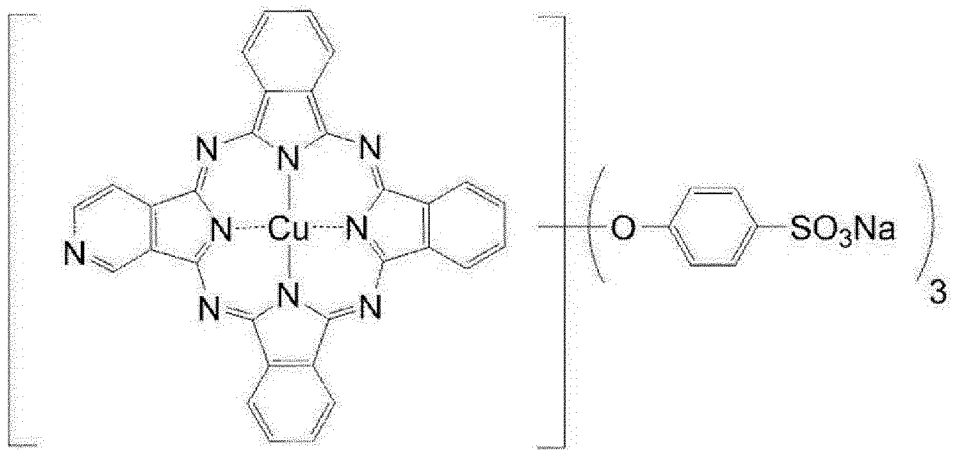

(31)

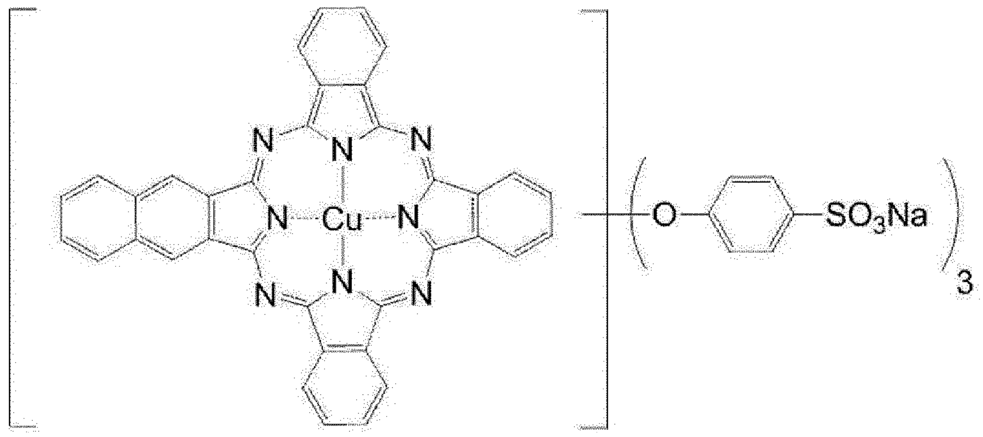

(32)

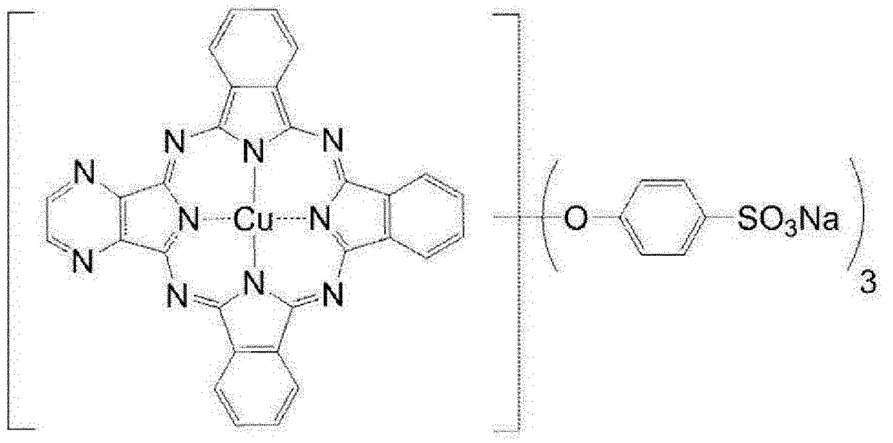

(33)

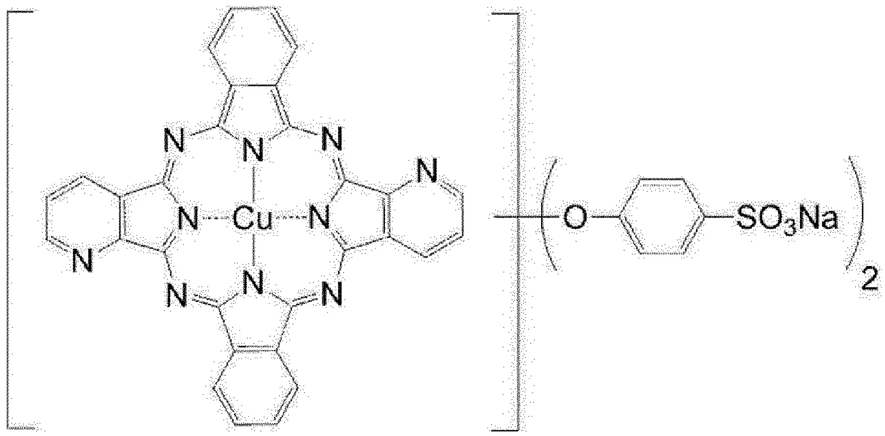

(34)

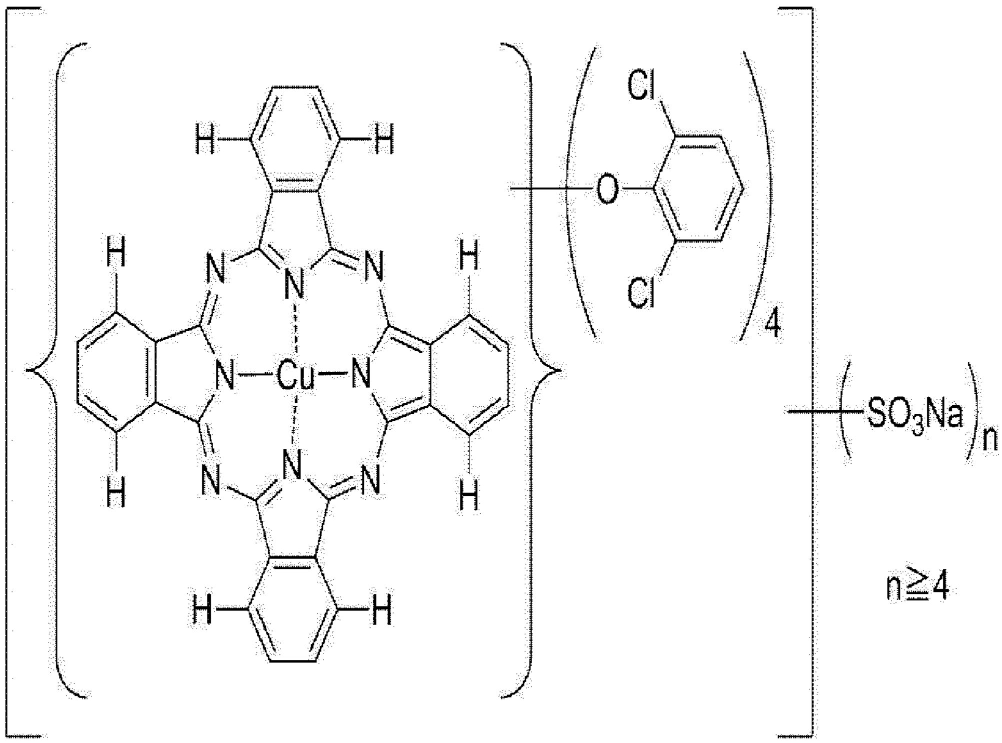

(35)

n≧4

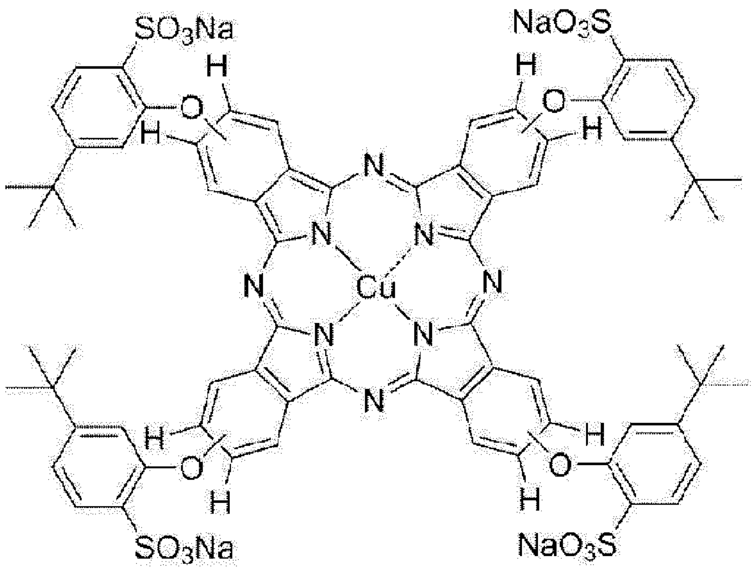

Compound 001

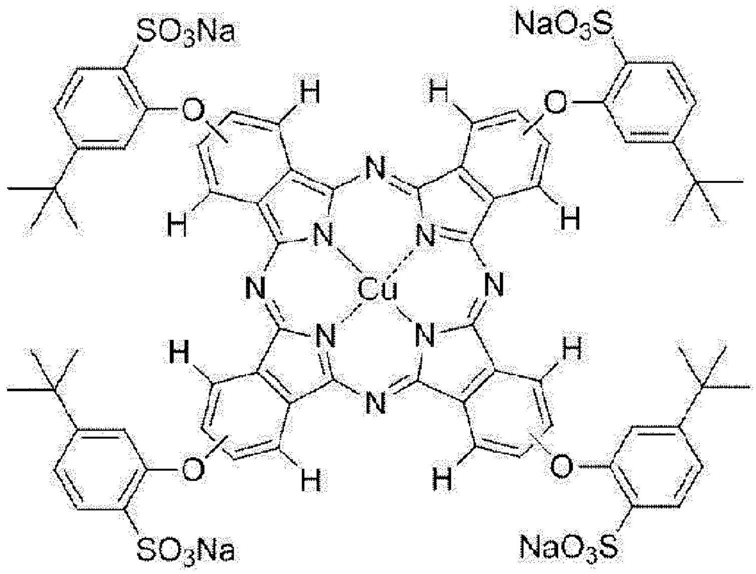

Compound 002

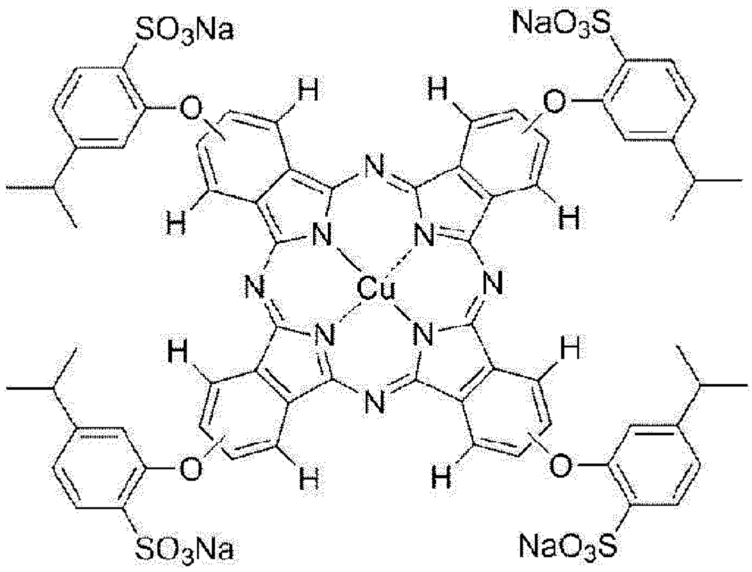

Compound 003

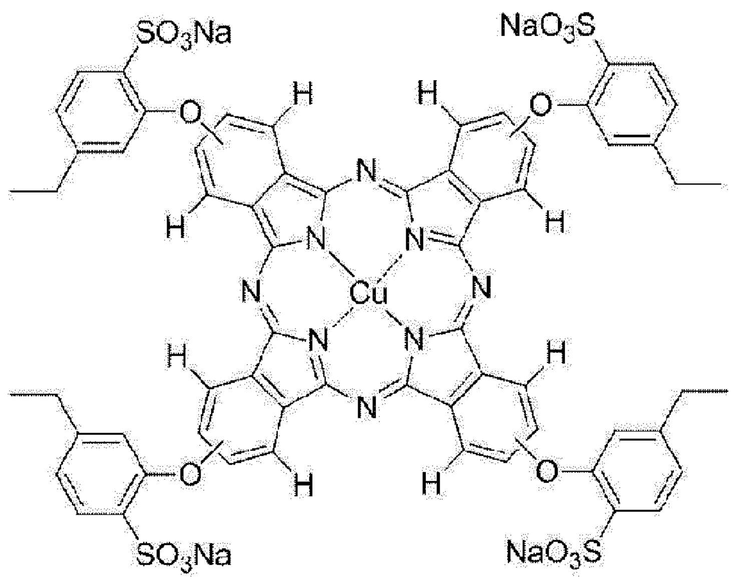

Compound 004

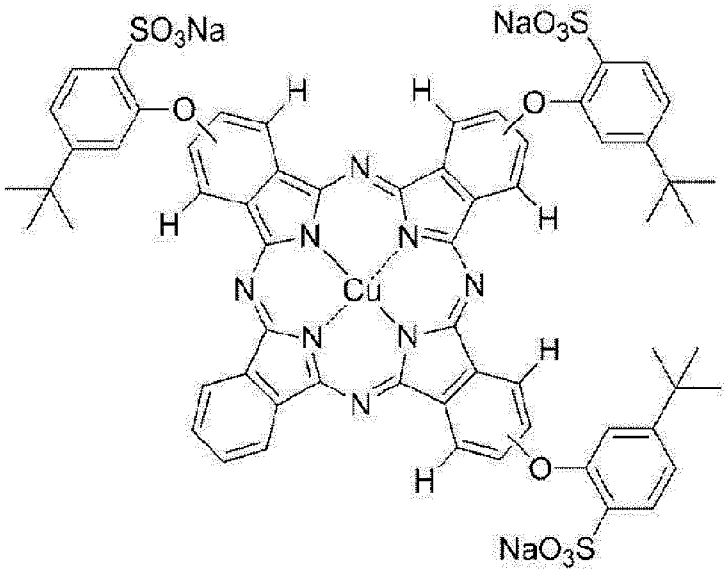

Compound 005

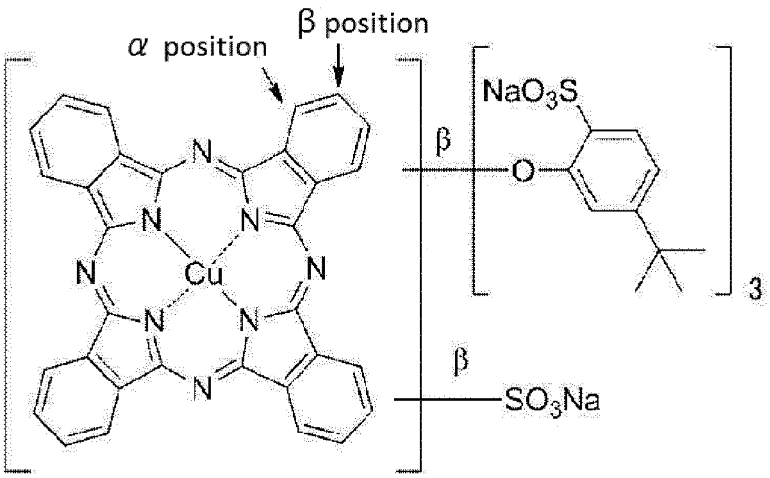

Compound 006

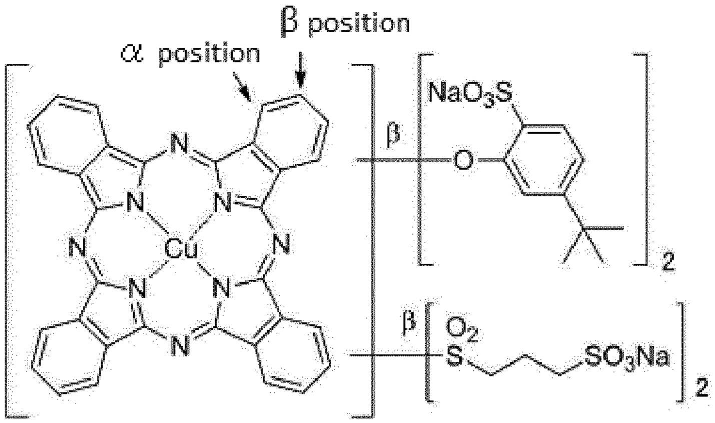

Compound 007

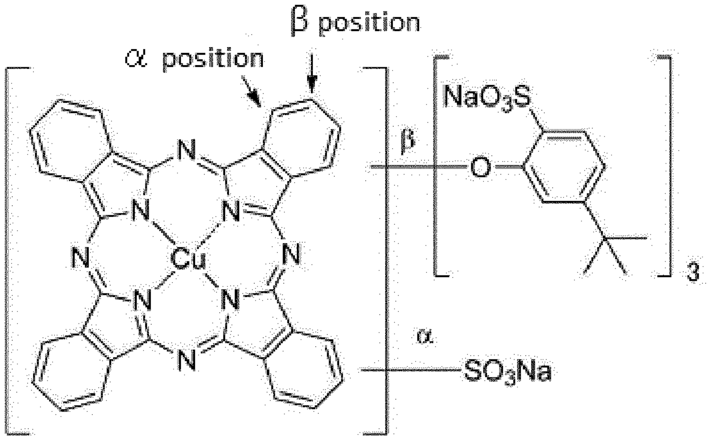

Compound 008

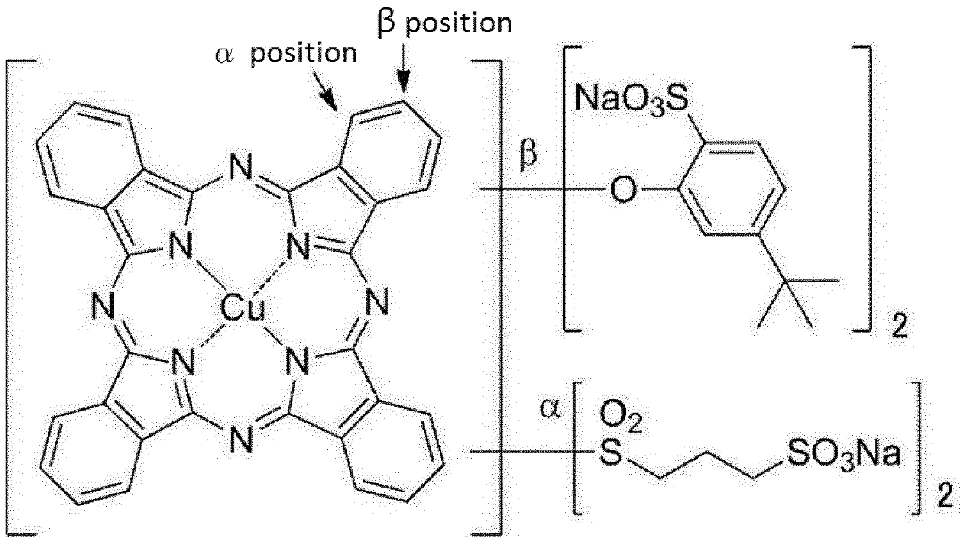

Compound 009

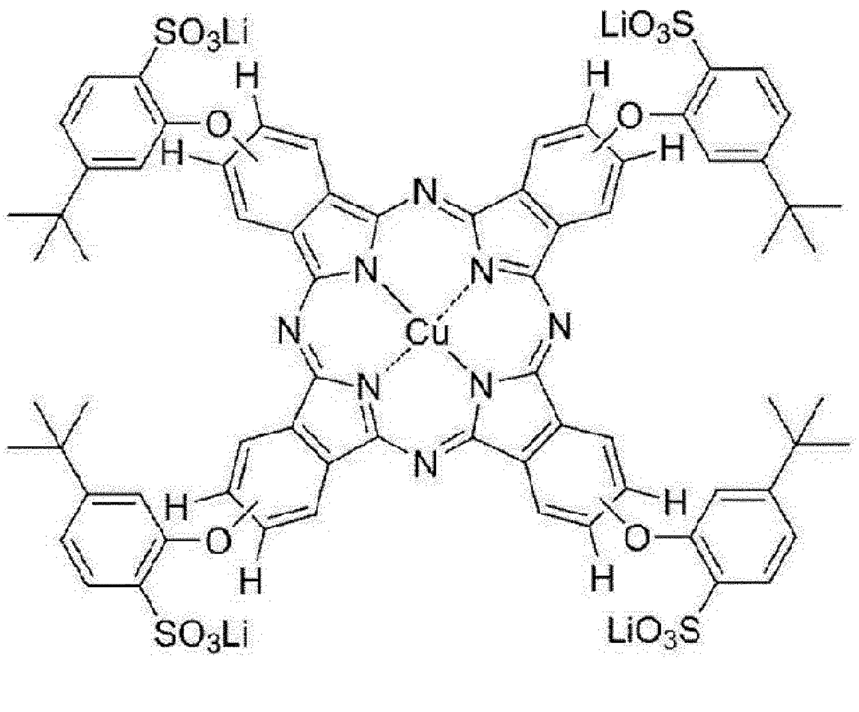

Compound 010

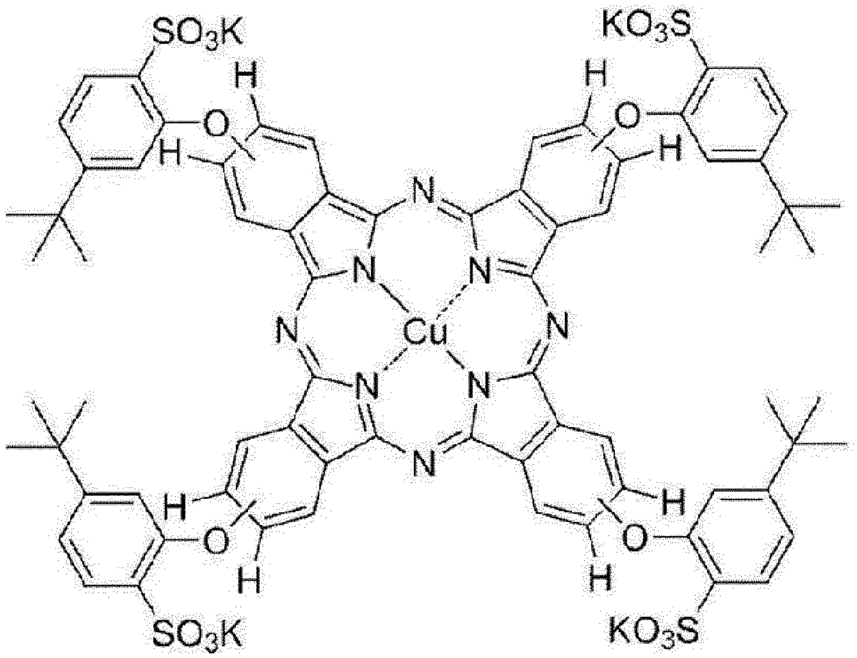

Compound 011

The particular dye described above may be used singly, or may be used in combination of two or more kinds.

The content of the particular dye in the coloring composition for textile printing of the invention is preferably from 0.1% by mass to 20% by mass, and more preferably from 0.2% by mass to 15% by mass, with respect to the total mass of the coloring composition for textile printing, in view of obtaining a sufficient color optical density, and obtaining storage stability of the coloring composition for textile printing.

The coloring composition for textile printing of the invention may include only the aforementioned particular dye as a colorant; however, the coloring composition for textile printing may further include a colorant other than the particular dye, to the extent that the effects of the invention are not impaired.

The dye other than the particular dye is not particularly limited, and any known dye may be used; however, among others, a dye represented by the following Formula (III) is preferred from the viewpoint of suppressing bleeding of a printed fabric, or obtaining water resistance.

- Dye represented by Formula (III) -

When the coloring composition of the invention includes a dye other than the particular dye, it is preferable that the coloring composition of the invention includes the particular dye and a dye represented by the following Formula (III).

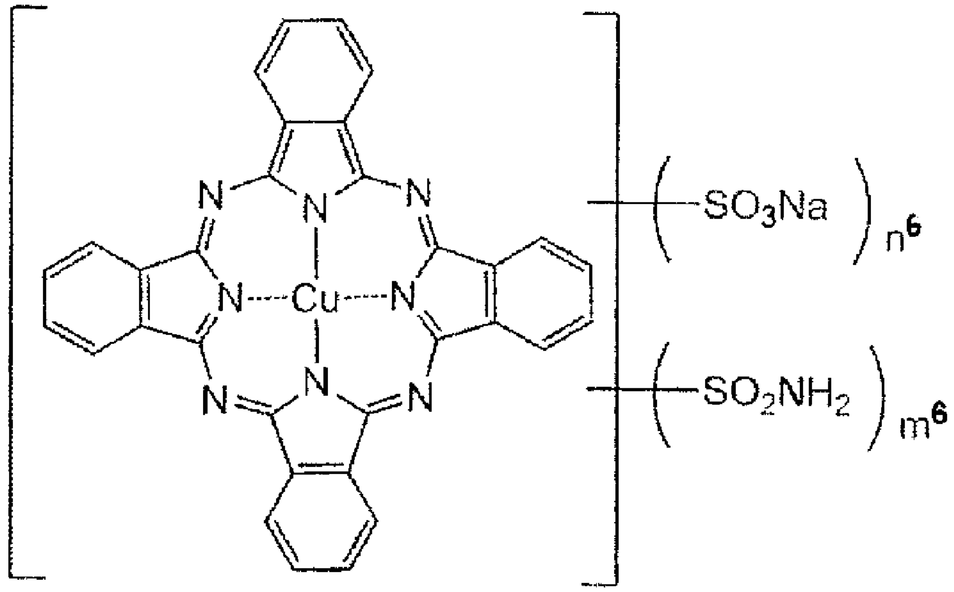

Formula (III)

In Formula (III), $n^6$ represents from 0.5 to 6, and $m^6$ represents from 0 to 3.

Examples of the dye represented by Formula (III) include general-purpose dyes, namely, C.I. Direct Blue 86 (DB86) [in Formula (III), $n^6$ = 2 and $m^6$ = 0], C.I. Direct Blue 87 (DB87) [in Formula (III), $n^6$ = 3 and $m^6$ = 0], and C.I. Direct Blue 199 (DB199) [in Formula (III), $n^6$ = 0.5 to 2.0 and $m^6$ = 0.5 to 2.5].

When the coloring composition of the invention includes the particular dye and a dye represented by Formula (III), the mixing ratio of these dyes [particular dye: dye represented by Formula (III)] (on a mass basis) is preferably from 2:8 to 8:2. When the mixing ratio is in this range, color adjustment can be carried out while maintaining light resistance.

Next, synthesis examples of the particular dye will be explained with reference to the synthesis methods for the Specific Example (10), Specific Example (28a) as an example of Specific Example (28), and Specific Example (29a) as an example of Specific Example (29).

In regard to Specific Example (10), phenoxyphthalonitrile is used to be converted to a phthalocyanine ring, and then this is sulfonated to thereby introduce sulfonic acid therein. However, Specific Example (28a) and Specific Example (29a) have been synthesized by cyclizing phenoxyphthalonitrile substituted with sulfonic acid. The particular dye may be synthesized by using any of the methods. However, when it is desired to limit the position of the sulfonic acid, the latter synthesis method is appropriate.

[Synthesis Example for Specific Example (10)]

0.6 mL of acetic acid and 19 g of triethyl ortho-acetate were added to 70 mL of diethylene glycol at room temperature, subsequently 3-phenoxyphthalonitrile (13 g) and phthalonitrile (2.6 g) were subsequently mixed therein, and the mixture was heated to an internal temperature of 100°C. $CuCl_2$ (2.7 g) and ammonium benzoate (22 g) were added to the reaction mixture thus obtained, and then the mixture was stirred for 6 hours at an internal temperature of 100°C.

Next, the mixture thus obtained was cooled to an internal temperature of 90°C, and 7 mL of concentrated hydrochloric acid was added dropwise to the mixture. Thereafter, 100 mL of methanol was further added dropwise thereto, and crystallization was carried out. The crystals thus obtained were dried, and thus 6 g of crude crystals (10A) were obtained.

3.5 g of the crude crystals and 22.5 mL of sulfuric acid were mixed and heated with stirring at 60°C. Meanwhile, 2.5 mL of fumed sulfuric acid was added dropwise thereto, and the mixture was stirred for 3 hours at 60°C. 100 mL of water was introduced to the reaction liquid thus obtained, and the mixture was cooled to room temperature. The crude crystals thus precipitated were subjected to filtration and washing with water, and then a 1 N aqueous NaOH solution was added thereto until the pH reached 9.5, to thereby dissolve the crude crystals. The mixture was stirred for 60 minutes at 50°C, subsequently impurities were filtered, 500 mL of isopropyl alcohol was added dropwise to the filtrate, and crystals were precipitated. Thus, 7 g of a compound [Specific Example (10)] was obtained.

The absorption wavelength (λmax) obtained when 1 mg of the compound [Specific Example (10)] thus obtained was dissolved in ultrapure water, was 681 nm.

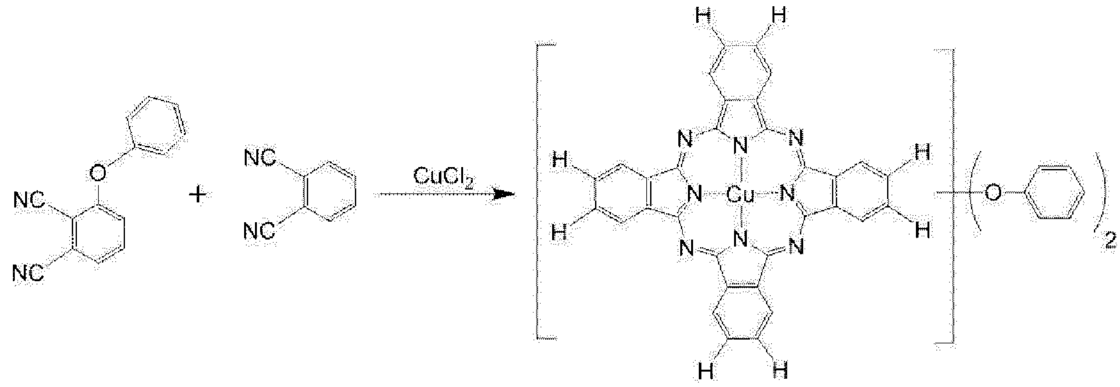


(10A)

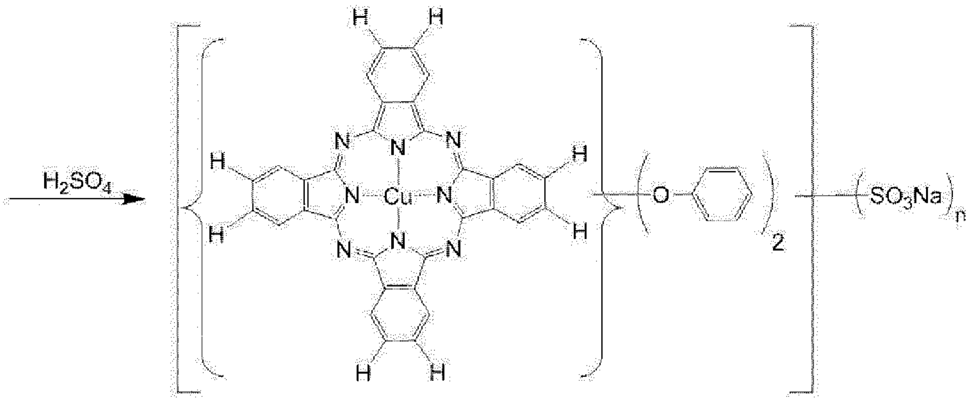


(10)

[Synthesis Example for Specific Example (28a)]

0.5 mL of acetic acid and 20 g of triethyl ortho-acetate were added to 100 mL of diethylene glycol, subsequently Compound A (16 g) described below and phthalonitrile (6.4 g) were mixed, and the mixture was heated to an internal temperature of 100°C. $CuCl_2$ (2.5 g) and ammonium benzoate (22 g) were added to the reaction mixture thus obtained, and then the mixture was stirred for 15 hours at an internal temperature of 100°C.

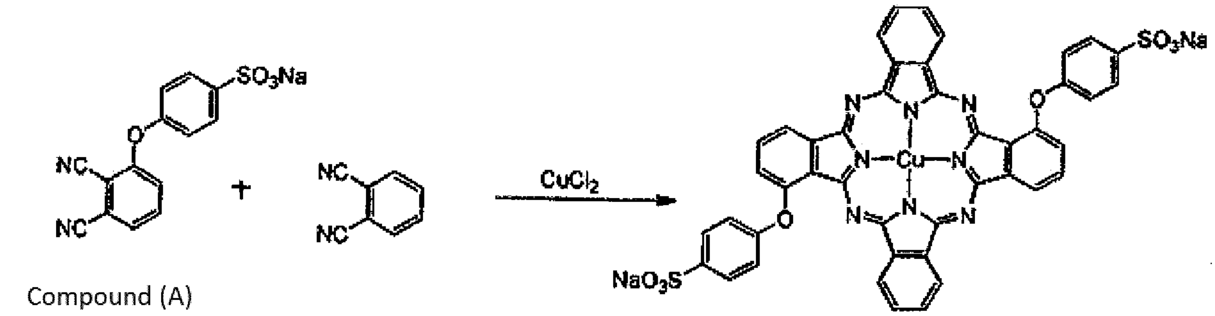


Compound (A)

(28a)

Next, the mixture thus obtained was cooled to an internal temperature of 90°C, and 7 mL of concentrated hydrochloric acid was added dropwise to the mixture. Thereafter, 350 mL of isopropyl alcohol was further added dropwise thereto, and crystals were precipitated. The crystals thus obtained were dried, and thus 10 g of crude crystals were obtained.

10 g of the crude crystals were dissolved in 100 mL of ion-exchanged water, and then a 2 N aqueous NaOH solution was added thereto until the pH reached 9.5. The mixture was stirred for 60 minutes at 50°C, and then impurities were filtered. Thereafter, 500 mL of isopropyl alcohol was added dropwise to the filtrate, and crystals were precipitated.

Thus, 3 g of a compound [Specific Example (28a)] was obtained.

The absorption wavelength (λmax) obtained when 1 mg of the compound [Specific Example (28a)] thus obtained was dissolved in ultrapure water, was 622 nm.

[Synthesis Example for Specific Example (29a)]

A compound [Specific Example (29a)] was obtained in the same manner as in the Synthesis Example for Specific Example (28a), except that the "Compound A (32 g)" was used instead of "Compound A (16 g) and phthalonitrile (6.4 g)".

The absorption wavelength (λmax) obtained when 1 mg of the compound [Specific Example (29a)] thus obtained was dissolved in ultrapure water, was 686 nm.

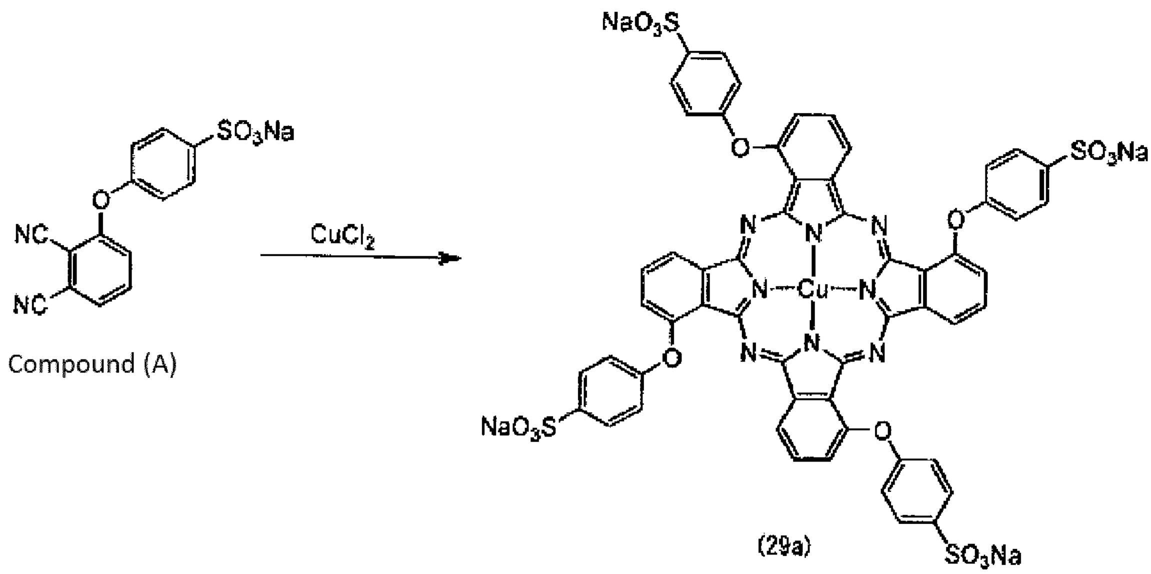


Compound (A)

(29a)

When the coloring composition for textile printing of the invention includes a colorant other than the particular dye, the content of the particular dye in all of the colorants is preferably 50% by mass or more, and more preferably 80% by mass or more, with respect to the total mass of the colorants. Furthermore, it is particularly preferable that the colorant included in the coloring composition for textile printing of the invention is 100% by mass composed of the particular dye.

The content of the dyes (particular dye and the colorant other than the particular dye) in the coloring composition for textile printing of the invention is preferably from 1% by mass to 20% by mass, more preferably from 4% by mass to 15% by mass, and even more preferably 5% by mass to 15% by mass, with respect to the total mass of the coloring composition for textile printing, in consideration of obtaining a sufficient color optical density and obtaining storage stability of the coloring composition for textile printing.

[Water]

The coloring composition for textile printing of the invention includes water in addition to the particular dye described above.

Water is not particularly limited, and may be ion-exchanged water, or may be tap water.

Regarding the content of water, in a case in which the coloring composition for textile printing includes only the particular dye described above, the content of water is the remainder obtained after subtracting the content of the particular dye from the total mass of the coloring composition for textile printing, and in a case in which the coloring composition for textile printing additionally includes a component that will be described below, the content of water is the remainder obtained after subtracting the total content of the particular dye and the other component.

The coloring composition for textile printing of the invention may include, in addition to the particular dye and water described above, components such as an organic solvent and a surfactant as necessary.

[Organic solvent]

The organic solvent that may be incorporated into the coloring composition for textile printing of the invention

is preferably an aqueous organic solvent. Examples include polyhydric alcohols (for example, ethylene glycol, glycerin, 2-ethyl-2-(hydroxymethyl)-1,3-propanediol, tetraethylene glycol, triethylene glycol, tripropylene glycol, 1,2,4-butanetriol, diethylene glycol, propylene glycol, dipropylene glycol, butylenes glycol, 1,6-hexanediol, 1,2-hexanediol, 1,5-pentanediol, 1,2-pentanediol, 2,2-dimethyl-1,3-propanediol, 1,2-butanediol, 2-methyl-2,4-pentanediol, 3-methyl-1,5-pentanediol, 3-methyl-1,3-butanediol, and 2-methyl-1,3-propanediol), amines (for example, ethanolamine, and 2-(dimethylamino)ethanol), monohydric alcohols (for example, methanol, ethanol, and butanol), alkyl ethers of polyhydric alcohols (for example, diethylene glycol monomethyl ether, diethylene glycol monobutyl ether, triethylene glycol monomethyl ether, triethylene glycol monobutyl ether, ethylene glycol monomethyl ether, ethylene glycol monobutyl ether, propylene glycol monomethyl ether, propylene glycol monobutyl ether, and dipropylene glycol monomethyl ether), 2,2'-thiodiethanol, amides (for example, N,N-dimethylformamide), sulfur-containing compounds such as sulfolane, dimethyl sulfoxide, and 3-sulfolene; heterocyclic rings (2-pyrrolidone, N-methyl-2-pyrrolidone, 1,3-dimethyl-2-imidazolidinone, N-ethylmorpholine, and the like), and acetonitrile.

The drying inhibitor described above may be used singly, or may be used in combination of two or more kinds.

The content of the organic solvent in the coloring composition for textile printing of the invention is preferably from 1% by mass to 60% by mass, and more preferably from 2% by mass to 50% by mass, with respect to the total mass of the coloring composition for textile printing.

[Surfactant]

The coloring composition for textile printing of the invention can use various surfactants from the viewpoint of enhancing storage stability, ejection stability, ejection accuracy and the like. Regarding the surfactant, any of cationic, anionic, amphoteric, and nonionic surfactants may be used.

Examples of cationic surfactants include aliphatic amine salts, aliphatic quaternary ammonium salts, benzalkonium salts, benzethonium chloride, pyridinium salts, and imidazolinium salts.

Examples of anionic surfactants include fatty acid soap, N-acylglutamic acid salts, alkylsulfonic acid salts, alkylbenzenesulfonic acid salts, alkylsulfoacetic acid salts, sulfated oil, higher alcohol sulfuric acid ester salts, and alkyl phosphoric acid ester salts.

Examples of amphoteric surfactants include carboxybetaine type surfactants, sulfobetaine type surfactants, aminocarboxylic acid salts, and imidazolinium betaine. Furthermore, other suitable examples also include amine oxide type surfactants such as N,N-dimethyl-N-alkylamine oxide.

Examples of nonionic surfactants include polyoxyethylene alkyl ether, polyoxyethylene lanolin derivatives, polyoxyethylene polyoxypropylene alkyl ether, polyoxyethylene glycerin fatty acid esters, polyethylene glycol fatty acid esters, polyglycerin fatty acid esters, sorbitan fatty acid esters, propylene glycol fatty acid esters, and acetylene glycol. Other suitable examples also include SURFYNOLS (Air Products & Chemicals, Inc.), which are acetylene-based polyoxyethylene oxide surfactants.

In addition, the compounds mentioned as surfactants mentioned in JP-A No. S59-157,636, pp. (37) to (38), and Research Disclosure No. 308119 (1989) may also be used.

When these various surfactants are used, the surfactants may be used singly, or two or more kinds may be used in mixture.

The content of the surfactant in the coloring composition for textile printing of the invention is preferably in the range of from 0.001% by mass to 5.0% by mass with respect to the total mass of the coloring composition for textile printing, and it is preferable to arbitrarily adjust the surface tension of the coloring composition for textile printing to such a range.

[Antiseptic agent and antifungal agent]

The coloring composition for textile printing of the invention may include at least one of an antiseptic agent and an antifungal agent in order to maintain long-term storage stability. Examples of the antiseptic agent and the antifungal agent include aromatic halogen compounds (for example, PREVENTOL CMK; manufactured by Lanxess AG), methylene dithiocyanate, halogen-containing nitrogen sulfur compounds, and 1,2-benzisothiazolin-3-one (for example, PROXEL GXL; manufactured by Arch Chemicals, Inc.).

[Various additives]

The coloring composition for textile printing of the invention may include other conventionally known additives. Examples thereof include pH adjusting agents such as acids, bases, and buffer solutions; a fluorescent brightening agent, a defoamant, a lubricating agent, a thickening agent, an ultraviolet absorber, a discoloration inhibitor, an antistatic agent, a mattifying agent, an oxidation inhibitor, a resistivity adjusting agent, a water repellant, an inorganic pigment,

and a reduction inhibitor.

(Ultraviolet absorber)

An ultraviolet absorber is used for the purpose of enhancing preservability of images. Examples of the ultraviolet absorber that may be used include the benzotriazole-based compounds described in JP-ANos. S58-185677, S61-190537, H02-782, H05-197075, and H09-34057; the benzophenone-based compounds described in JP-A Nos. S46-2784, H05-194483, and US Patent No. 3214463; the cinnamic acid-based compounds described in Japanese Patent Publication (JP-B) Nos. S48-30492, 56-21141, and JP-ANo. H10-88106; the triazine-based compounds described in JP-A Nos. H04-298503, 08-53427, H08-239368, H10-182621, and Japanese National-Phase Publication (JP-A) No. H08-501291; the compounds described in Research Disclosure No. 24239; and compounds that absorb ultraviolet radiation and emit fluorescence, which are represented by stilbene-based compounds and benzoxazole-based compounds, that is, so-called fluorescent brightening agents.

(Discoloration inhibitor)

A discoloration inhibitor is used for the purpose of enhancing preservability of images. Regarding the discoloration inhibitor, various organic and metal complex-based discoloration inhibitors may be used. Examples of the organic discoloration inhibitors include hydroquinones, alkoxyphenols, dialkoxyphenols, phenols, anilines, amines, indanes, chromanes, alkoxyanilines, and heterocyclic rings. Examples of the metal complexes include nickel complexes and zinc complexes. More specifically, the compounds described in the patents cited in Research Disclosure No. 17643, Sections VII-I to VII-J; Research Disclosure No. 15162; Research Disclosure No. 18716, p. 650, left column; Research Disclosure No. 36544, p. 527; Research Disclosure No. 307105, p. 872; and Research Disclosure No. 15162, and the compounds included in Formula and compound examples of representative compounds described in JP-ANo. S62-215272, pp. 127-137; and US Patent No. 5,356,443 may be used.

<Inkjet ink>

The coloring composition for textile printing of the invention has a high color optical density and has excellent water resistance. Therefore, the coloring composition for textile printing is suitable as an inkjet ink for which there are limitations on the amount of the colorant supplied onto a fabric.

It is preferable that the contents of the particular dye and water in the ink are in the ranges described above as the contents in the coloring composition for textile printing of the invention.

When the coloring composition for textile printing of the invention is used as an inkjet ink, the inkjet ink can be produced by dissolving and/or dispersing the above-described particular dye in an oleophilic medium or an aqueous medium. Preferably, the particular dye is dissolved and/or dispersed in an aqueous medium.

When the coloring composition for textile printing of the invention is used as an inkjet ink, the inkjet ink may optionally include other additives to the extent that the effects of the invention are not impaired.

Examples of the other additives include known additives such as a drying inhibitor (wetting agent), a discoloration inhibitor, an emulsification stabilizer, a penetration enhancer, an ultraviolet absorber, an antiseptic agent, an antifungal agent, a pH adjusting agent, a surface tension adjusting agent, a defoamant, a viscosity adjusting agent, a dispersant, a dispersion stabilizer, a water repellant, and a chelating agent. These various additives are added directly to the ink liquid, in the case of a water-soluble ink.

(Drying inhibitor)

The drying inhibitor is suitably used for the purpose of preventing the clogging caused by drying of the inkjet ink at the ink spray orifice of the nozzle used in an inkjet recording system.

Regarding the drying inhibitor, a water-soluble organic solvent having a vapor pressure lower than that of water is preferred. Specific examples include polyhydric alcohols represented by ethylene glycol, propylene glycol, diethylene glycol, polyethylene glycol, thiodiglycol, dithiodiglycol, 2-methyl-1,3-propanediol, 1,2,6-hexanetriol, acetylene glycol derivatives, glycerin, and trimethylolpropane; lower alkyl ethers of polyhydric alcohols, such as ethylene glycol monomethyl (or ethyl) ether, diethylene glycol monomethyl (or ethyl) ether, and triethylene glycol monoethyl (or butyl) ether; heterocyclic rings such as 2-pyrrolidone, N-methyl-2-pyrrolidone, 1,3-dimethyl-2-imidazolidinone, and N-ethylmorpholine; sulfur-containing compounds such as sulfolane, dimethyl sulfoxide, and 3-sulfolene; polyfunctional compounds such as diacetone alcohol and diethanolamine; and urea derivatives. Among these, polyhydric alcohols such as glycerin and diethylene glycol are more preferred. Furthermore, the drying inhibitors may be used singly, or in combination of two or more kinds. When the inkjet ink includes a drying inhibitor, the content of the drying inhibitor is preferably from 10% by

mass to 50% by mass with respect to the total mass of the inkjet ink, that is, the total mass of the coloring composition for textile printing.

(Antifungal agent)

Examples of the antifungal agent include sodium dehydroacetate, sodium benzoate, sodium pyridinethione-1-oxide, p-hydroxybenzoic acid ethyl ester, 1,2-benzisothiazolin-3-one, and salts thereof. When the inkjet ink includes an antifungal agent, the content of the antifungal agent is preferably from 0.02% by mass to 1.00% by mass with respect to the total mass of the inkjet ink, that is, the total mass of the coloring composition for textile printing.

(pH adjusting agent)

For the pH adjusting agent, a neutralizing agent such as an organic base or an inorganic alkali may be used. The pH adjusting agent is preferably added such that the pH of the inkjet ink would be from 6 to 10, and more preferably added such that the pH would be from 7 to 10, for the purpose of enhancing the storage stability of the inkjet ink.

(Surface tension adjusting agent and defoamant)

Examples of the surface tension adjusting agent include various surfactants such as nonionic surfactants, cationic surfactants, and anionic surfactants.
Preferred examples of the surfactants include those exemplified in the above-described section for the surfactant.
Preferred examples of the defoamant include fluorine-based compounds and silicone-based compounds.
When the coloring composition for textile printing of the invention is used as an inkjet ink, it is preferable to adjust the surface tension of the coloring composition for textile printing to 20 mN/m to 70 mN/m, and more preferably to 25 mN/m to 60 mN/m.
Furthermore, it is preferable to adjust the viscosity of the coloring composition for textile printing to 40 mPa·s or less, more preferably to 30 mPa·s or less, and particularly preferably to 20 mPa·s or less.
The surface tension and viscosity can be adjusted by adding various additives, for example, a viscosity adjusting agent, a surface tension adjusting agent, a resistivity adjusting agent, a film-forming adjusting agent, an ultraviolet absorber, an oxidation inhibitor, a discoloration inhibitor, an antifungal agent, a water repellant, a dispersant, and a surfactant.

(Chelating agent)

A chelating agent is suitably used for the purpose of preventing the occurrence of precipitates such as sediments in the ink, and for the purpose of improving storage stability or clogging restorability.
When a dye is used as a colorant of the ink, since the metals (Ca, Mg, Si, Fe and the like) contained in the ink may cause generation of precipitates or a decrease in clogging restorability, it is necessary to manage the amount of metal ions to a certain level or less. It is also known that when a copper complex dye is used, even though the amount of metal ions is managed, if the amount of free copper ions is not managed as well, generation of precipitates or a decrease in clogging restorability is recognized (see JP-A Nos. 2000-355665, 2005-126725, and the like).
The particular dye according to the invention is particularly preferably a copper complex dye, and when the coloring composition for textile printing of the invention includes a copper complex dye as the particular dye, the amount of the free copper ions in the ink is preferably 10 ppm or less, and more preferably from 0 ppm to 5 ppm.
Examples of the chelating agent include ethylenediaminetetraacetic acid (EDTA), nitrilotriacetic acid, (hydroxyethyl)ethylenediaminetriacetic acid, uramyldiacetic acid, and metal salts thereof (for example, sodium salt).
Meanwhile, examples of the method for controlling the concentration of metal ions or free copper ions include a method of using a chelating agent, and a method of increasing the degree of purification of the dye.
The coloring composition for textile printing of the invention can be used as an inkjet ink for the formation of monochromatic images, and also, the formation of full-color images may be carried out by using the coloring composition for textile printing of the invention in combination with inks having different color tones, such as a yellow color tone ink, a magenta color tone ink, and optionally a cyan color tone ink having a color tone that is different from that of the coloring composition for textile printing of the invention. Furthermore, the formation of full-color images may also be carried out by further combining a black color tone ink, in order to condition the color tones.

<Fabric>

The coloring composition for textile printing of the invention is suitable for the textile printing on a fabric.

There are no particular limitations on the kind of the fabric, and rayon, cotton, and fabrics containing various fibers such as polyester fibers and polyamide fibers may be used. Among them, from the viewpoint of exhibiting the effects of the invention more sufficiently, the fabric is preferably a fabric containing polyamide fibers, and nylon, silk, and wool are more preferred. Particularly, the coloring composition for textile printing of the invention is particularly suitable for the textile printing of nylon fabrics. When the coloring composition for textile printing of the invention is used, a printed nylon fabric having a dyed section with superior light resistance is obtained, as compared with nylon textile printing employing a coloring composition for textile printing which uses a conventional general-purpose phthalocyanine dye.

Examples of the nylon include various nylons such as nylon 6, nylon 6,6, nylon 6,10, nylon 11, and nylon 12, and any nylon may be used.

The polyamide fibers may be in any form selected from a woven fabric, a knitted fabric, a non-woven fabric, and the like.

A fabric containing polyamide fibers is suitably a fabric formed from 100% polyamide fibers, but the fabric may contain a material other than polyamide fibers. When the fabric contains fibers other than polyamide fibers, the blending ratio of polyamide fibers is preferably 30% or more, and more preferably 50% or more. Examples of the material other than polyamide fibers include mixed woven fabrics or mixed non-woven fabrics containing rayon, cotton, acetate, polyurethane, and acrylic fibers, and these may be used as printed fabrics according to the invention.

There exist suitable ranges for the physical characteristics of the polyamide fibers that constitute a fabric and the yarns composed of polyamide fibers. For example, in the case of a nylon fabric, a fabric produced by a known method, in which the average fiber thickness of nylon fibers is controlled preferably to 1 d to 10 d (denier), and more preferably to 2 d to 6 d, and the average fiber thickness of nylon yarns composed of the nylon fibers is controlled preferably to 20 d to 100 d, more preferably to 25 d to 80 d, and even more preferably to 30 d to 70 d, is used. Furthermore, in the case of silk, a fabric produced by a known method, in which, regarding the characteristics of the fiber itself, the average fiber thickness of silk fibers is controlled preferably to 2.5 d to 3.5 d, and more preferably to 2.7 d to 3.3 d, and the average fiber thickness of silk yarns composed of the silk fibers is controlled preferably to 14 d to 147 d, and more preferably to 14 d to 105 d, is preferably used.

The hue of the dyed area of a fabric dyed with the coloring composition for textile printing of the invention is such that the hue angle (hab) is preferably from 200° to 300°, and more preferably from 210° to 300°. When a hue in this range is displayed, the color optical density in the cyan-blue region (OD-Cyan) is not easily decreased.

The hue angle is a parameter indicating the hue, which is calculated by the following formula using the color coordinates a* and b* in the L*a*b* color space, which is a color space having a pace that is perceptually almost equal, recommended by the International Commission on Illumination (CIE) in 1976.

$$\text{Hue angle (hab)} = \tan^{-1}(b^*/a^*)$$

The hue obtainable after textile printing may vary depending on the kind of the fabric or the processing method, and examples of the method for adjusting the hue angle to 200° to 300° include several methods such as changing of the dye itself, and mixing with other colors. Examples include a method of adjusting the hue by changing the kind of the aromatic rings represented by $P^1$ to $P^4$ in a dye represented by Formula (X); a method of adjusting the hue by adjusting the number of substituent -XR on the phthalocyanine ring to less than 4; a method of adjusting the hue by changing the kind or number of other substituents on the phthalocyanine ring; a method of using copper as the center metal of phthalocyanine; a method of adjusting the hue by mixing in other dyes; and a method of adjusting the hue by further dyeing repeatedly with other coloring compositions for textile printing.

<Textile printing method>

Textile printing on a fabric using the coloring composition for textile printing of the invention that includes the particular dye described above and water, may be carried out by, for example, applying the coloring composition for textile printing of the invention onto a fabric. Regarding the fabric, various fabrics described above may be used, and among them, a fabric containing polyamide fibers is preferred, and a preferred polyamide fiber is nylon.

The application of the coloring composition for textile printing of the invention onto a fabric may be carried out by a coating method, or by an inkjet method; however, a textile printing method of applying an ink by an inkjet method (inkjet textile printing method) will be described herein as an example.

Meanwhile, an inkjet method is a method of ejecting an ink from an inkjet recording head, thereby applying the

ink onto a fabric, and printing an image.

On the occasion of applying an ink onto a fabric, a pretreatment may be applied so that the fixation of the colorant onto the fabric would be further enhanced.

[Pretreatment step]

The textile printing method of the invention may be configured to include a pretreatment step of applying a pretreatment agent onto a fabric.

The pretreatment step is a step of applying in advance a pretreatment agent including a hydrotropic agent, an aqueous (water-soluble) metal salt, a pH adjusting agent, a pH buffering agent, a polymer component, and the like, onto a fabric before textile printing so as to enhance fixation of the particular dye onto the fabric in the textile printing process described above.

In regard to the pretreatment step, it is preferable to perform patting the pretreatment agent at a drawing rate in the range of from 5% to 150%, and preferably from 10% to 130%. The pretreatment agent may be further added with a water repellant, a surfactant, and the like.

(Pretreatment agent)

- Hydrotropic agent -

According to the invention, a hydrotropic agent generally takes a role of increasing the color optical density of an image when a fabric onto which a coloring composition has been applied is heated under steam. Examples of the hydrotropic agent usually include urea, alkylurea, ethyleneurea, propyelneurea, thiourea, guanidic acid salts, and tetraalkylammonium halide.

- Aqueous metal salt -

Examples of the aqueous (water-soluble) metal salt include compounds that form typical ionic crystals, such as halides of alkali metals and alkaline earth metals, and have a pH of from 4 to 10.

Representative examples of such compounds include, regarding alkali metals, NaCl, $Na_2SO_4$, KCl, and $CH_3COONa$; and regarding alkaline earth metals, $CaCl_2$ and $MgCl_2$. Among them, salts of Na, K, and Ca are preferred.

- pH adjusting agent -

A pH adjusting agent generally takes a role of improving the fixation reaction of a colorant to the fabric.

Here, the pH adjusting agent refers to a compound or composition which adjusts the acidity or alkalinity (pH) of the coloring composition for textile printing that is applied onto a fabric, and refers to a component that changes the acidity or alkalinity of the coloring composition for textile printing.

Examples of the pH adjusting agent include alkalis (bases), acids, and combination of alkalis and acids.

The content of the pH adjusting agent with respect to the total mass of the pretreatment agent is less than 1% by mass, but it is preferable that the content is 0% by mass.

- pH buffering agent -

A pH buffering agent generally takes the role of, similarly to the case of the pH adjusting agent, improving the fixation reaction of a colorant onto the fabric.

Here, the pH buffering agent refers to a component that suppresses any change in the acidity or alkalinity of the coloring composition for textile printing.

Examples of the pH buffering agent include acid ammonium salts represented by ammonium sulfate and ammonium tartrate.

- Polymer component -

The polymer component generally takes the role as a sizing agent that binds a colorant to the fabric.

The polymer component may be a naturally occurring polymer, or may be a synthetic polymer. Furthermore, the polymer component may be an aqueous (water-soluble) polymer, or may be a non-aqueous polymer; however, since the coloring composition used in the textile printing method of the invention is a coloring composition for textile printing, the polymer component is preferably an aqueous polymer.

Examples of the aqueous polymer include starch materials such as corn and wheat; cellulose-based materials such as carboxymethyl cellulose, methyl cellulose, and hydroxyethyl cellulose; polysaccharides such as sodium alginate, gum arabic, locust bean gum, tragacanth gum, guar gum, and tamarind seed polysaccharides; protein materials such as gelatin and casein; and known natural aqueous polymers such as tannin-based materials and lignin-based materials.
Furthermore, examples of the synthetic aqueous polymer include known polyvinyl alcohol-based compounds, polyethylene oxide-based compounds, acrylic acid-based aqueous polymers, and maleic anhydride-based aqueous polymers. Among these, polysaccharide-based polymers or cellulose-based polymers are preferred.

- Water repellant -

Examples of the water repellant include, but are not particularly limited to, paraffin-based compounds, fluorine-based compounds, pyridinium salts, N-methylolalkylamide, alkylethyleneurea, oxaline derivatives, silicone-based compounds, triazine-based compounds, zirconium-based compound, and mixtures thereof. Among these water repellants, paraffin-based and fluorine-based water repellants are particularly preferred from the viewpoints of prevention of bleeding and density.
The amount of the water repellant applied to the fabric is not particularly limited, but it is preferable to apply the water repellant in an amount in the range of from 0.05% by mass to 40% by mass with respect to the total mass of the fabric. This is because if the amount applied is less than 0.05% by mass, the effect of preventing excessive penetration of the ink is small, and even if the water repellant is incorporated in an amount of more than 40% by mass, there is no significant change in view of performance.
The amount of use of the water repellant with respect to the total mass of the fabric is more preferably in the range of from 0.5% by mass to 10% by mass.

- Surfactant -

Examples of the surfactant that may be used as a pretreatment agent include anionic, nonionic, and amphoteric surfactants.
Particularly, it is preferable to use a nonionic surfactant having an HLB value of 12.5 or more, and it is more preferable to use a nonionic surfactant having an HLB value of 14 or more.

Regarding the amphoteric surfactant, betaine type and the like may be used.

The amount of the surfactant applied to the fabric is not particularly limited, but it is preferable to apply the surfactant in an amount of from 0.01% by mass to 30% by mass with respect to the total mass of the fabric.

- Other components -

The pretreatment agent may further include additives such as a reduction inhibitor, an oxidation inhibitor, a level dyeing agent, a deep dyeing agent, a carrier, a reducing agent, and an oxidizing agent, according to the characteristics of the dye used.
The pretreatment agent may be applied to the fabric as a mixture prepared by mixing various components such as the hydrotropic agent, water repellant and surfactant described above. Alternatively, without mixing various components, for example, a first pretreatment agent containing a hydrotropic agent only, a second pretreatment agent containing a water repellant only, and the like may be separately prepared, and the respective pretreatment agents may be sequentially applied to the fabric.
In a case in which the pretreatment agent is a mixture of the various components described above, the contents of the various components with respect to the total mass of the pretreatment agent as a mixture may be appropriately adjusted according to the purpose such that when the pretreatment agent is applied to the fabric, the amounts of the various components applied with respect to the total mass of the fabric would be in the ranges described above.
In regard to the pretreatment, the method of incorporating each of the pretreatment agents into a fabric is not particularly limited, but examples include an immersion method, a padding method, a coating method, a spraying method, and an inkjet method, which are conventionally carried out.
In regard to the textile printing method of the invention, it is preferable to perform the method by performing printing by applying an ink onto a fabric, subsequently winding the printed fabric, heating the fabric to develop color, washing the fabric, and drying the fabric.
In regard to textile printing according to an inkjet method, when the procedure described above is followed, dye fixation of the particular dye is carried out sufficiently, a high color optical density is obtained, and excellent water resistance is obtained, as compared with the case of printing an ink on a fabric and leaving the fabric without any change.

Particularly, in a case in which printing is continuously carried out for a long time while a lengthy fabric is conveyed with a roller or the like, since a printed fabric is conveyed endlessly, the printed fabric may be overlapped on a tray or the like. Therefore, not only a large amount of space is required, but also it is not safe, and the fabric may become unexpectedly contaminated. Therefore, it is preferable to carry out an operation of winding the printed fabric after printing. At the time of this winding operation, a medium that is not involved in printing, such as paper, cloth, plastic film or the like, may be disposed between layers of the fabric. However, in a case in which the printed fabric is cut in the middle, or in a case in which the printed fabric is short, it is not essentially necessary to wind up the printed fabric.

A fabric on which the ink according to the invention has been applied from an inkjet recording head, is preferably subjected to a post-treatment step, and fixation of the particular dye to the fibers is promoted. Thereafter, it is preferable to sufficiently remove any colorant that has not been fixed, other components, and the pretreatment agent.

[Post-treatment step]

The fabric that has been subjected to the textile printing step is preferably subjected to a post-treatment to promote fixation of the particular dye to the fibers. Thereafter, it is preferable to subject the fabric to a post-treatment step of sufficiently eliminate any colorant that has not been fixed, other components, and the pretreatment agent.

The post-treatment step is divided into several steps.

The post-treatment may be configured to include, for example, a preliminary drying step, a steaming step, a washing step, and a drying step in this order.

- Preliminary drying step -

First, it is preferable that after the textile printing step, the fabric on which a coloring composition including the particular dye (inkjet ink) has been applied, is left to stand for 0.5 minutes to 30 minutes at normal temperature to 150°C to thereby preliminarily dry the ink. Through this preliminary drying, the print density is increased, and bleeding can be prevented effectively. This preliminary drying also includes penetration of the ink into the fabric.

According to the textile printing method of the invention, it is also possible to perform the preliminary drying by heating and drying in a continuous process. The fabric is wound into a roll and supplied to an inkjet printing machine to perform printing (printing and textile printing). Thereafter, the printed fabric is dried using a dryer before being wound up. The dryer may be a dryer connected directly to the printing machine, or may be separated therefrom. Drying of the printed fabric in the dryer is preferably carried out at normal temperature to 150°C for 0.5 minutes to 30 minutes. Furthermore, preferred examples of the drying method include an air convection system, a heated roll mounting system, and an irradiation system.

- Steaming step -

The steaming step is a step of promoting fixation of the particular dye to the fabric by exposing the fabric having an ink applied thereon, to saturated steam.

According to the textile method of the invention, the steaming step in the post-treatment is preferably carried out by changing the conditions, particularly the time, depending on the kind of the fabric.

For example, when the fabric is wool, the time for the steaming step is preferably from 1 minute to 120 minutes, and more preferably from about 3 minutes to 90 minutes. Furthermore, when the fabric is silk, the time is preferably from 1 minute to 40 minutes, and more preferably from about 3 minutes to 30 minutes. When the fabric is nylon, the time is preferably from about 1 minute to 90 minutes, and more preferably from about 3 minutes to 60 minutes.

- Washing step -

In this manner, most of the ink that has been inkjet recorded on the fabric is fixed to the fabric, but the colorant in a portion thereof may not adhere to the fibers. It is preferable to wash away this unfixed colorant. The removal of the unfixed colorant may be carried out by employing a conventionally known washing method. For example, it is preferable to use water at a temperature in the range of from normal temperature to 100°C, or warm water, or to use an anionic or nonionic soaping agent. If an unfixed coloring material is not completely removed, favorable results for various water resistant properties, for example, washing fastness and perspiration fastness, and the like may not be obtained in some cases.

- Drying step (drying after washing) -

After washing, the printed fabric needs to be dried. The washed fabric is squeezed or dehydrated, and then is

dried by hanging in air, or by using a dryer, a heated roll, an iron or the like.

Among the textile printing methods described above, the textile printing method of the invention is a method of imparting a coloring composition for textile printing including the particular dye and water, onto a fabric containing nylon by an inkjet method.

When the coloring composition for textile printing of the invention including the particular dye is applied onto a fabric containing nylon, a nylon fabric having a dyed section with excellent light resistance may be obtained.

Furthermore, since the fabric printed by the textile printing method of the invention (fabric of the invention) is printed using a coloring composition for textile printing including a particular dye, the dyed section obtained by textile printing has excellent light resistance. Particularly, when a fabric containing nylon is printed, the fabric may have a dyed section having higher light resistance as compared with the case of using a conventional general-purpose phthalocyanine dye.

## EXAMPLES

Hereinafter, the present invention will be described more specifically by way of Examples, but the invention is not intended to be limited to the following Examples as long as the gist is maintained. In addition, unless particularly stated otherwise, the units "parts" and "percent (%)" are on a mass basis.

{Example 1 to Example 10, and Comparative Example 1 to Comparative Example 2}

<Preparation of ink composition>

Ink 1 to Ink 10 of Example 1 to Example 10, and Ink 101 to Ink 102 of Comparative Example 1 to Comparative Example 2 were prepared by mixing various components according to the composition described below, and filtering the mixed liquid thus obtained through a membrane filter having a pore size of 10 $\mu$m.

- Dye indicated in Table 1 (particular dye or general-purpose dye) 5%
- Glycerin 10%
  [manufactured by Wako Pure Chemical Industries, Ltd.] (aqueous organic solvent)
- Diethylene glycol 10%
  [manufactured by Wako Pure Chemical Industries, Ltd.] (aqueous organic solvent)
- ORFIN E1010 1%
  [manufactured by Nissin Chemical Industry Co., Ltd.] (acetylene glycol-based surfactant)
- Water 74%

The dyes of the various Specific Examples used for the preparation of Ink 1 to Ink 10 indicated in Table 1 were synthesized in the same manner as in the synthesis example for Specific Example (28a) and the synthesis example for Specific Example (29a) described above.

<Production of textile printed sample>

- Preparation of pretreatment agent -

- Guar gum 2%
  [manufactured by Nissho Corp., MEYPRO GUM NP]
- Urea [manufactured by Wako Pure Chemical Industries, Ltd.] 5%
- Ammonium sulfate 4%
  [manufactured by Wako Pure Chemical Industries, Ltd.]
- Water 89%

A pretreatment agent was prepared by mixing the components of the composition described above.

A silk fabric was patted using the pretreatment agent thus obtained at a drawing ratio of 90%, and thus a treated fabric was obtained. The various inks thus obtained (Ink 1 to Ink 10, and Ink 101 to Ink 102) were mounted on an inkjet printer (manufactured by Fujifilm Dimatix, Inc., DMP-2381), and then solid images were printed on the treated fabric thus obtained.

The printed fabric was dried, and then the dye was fixed to the fibers of the fabric by steaming the fabric at 100°C for 30 minutes under saturated steam during a steaming step. Thereafter, the fabric was washed for 10 minutes with cold water and for 5 minutes with warm water at 60°C, and then the fabric was dried.

Separately, the same experiment was carried out, except that the fabric was changed from silk fabric to a fabric made of nylon taffeta. The kind of the nylon used was nylon 6.

<Evaluation>

1. Evaluation of color optical density (OD value)

For the solid images formed on the various fabrics, the OD-Cyan was colorimetrically measured using an X-Rite spectrocolorimeter (manufactured by X-Rite, Inc., "X-RITE 938").

2. Evaluation of light resistance

For the various fabrics having solid images formed thereon, light resistance was evaluated according to ISO 105-B02 using a xenon fade meter. The acceptable level for light resistance is Grade 3 or higher.

The results obtained as described above are respectively indicated in Table 1.

In Table 1, the term "Pc dye" represents a "phthalocyanine dye", and the column for "Pc dye" shows the constitutions of the dyes used in Examples and Comparative Examples. The "Kind" in the column for "Pc dye" indicates the kind of the various dyes, and the term "(particular)" means that the dye is the particular dye, while "(general-purpose)" means that the dye is a general-purpose dye. Furthermore, "29a" means that the dye is one kind of the dye represented by Specific Example (29) described above. The same applies to 2a, 4a, 5a, 6a, 7a, 15a, 16a, and 20a. For Specific Example (2), two kinds of structural isomers, namely, Specific Example (2a) and Specific Example (2b), were used. Specific structural formulas of the various particular dyes used in Examples are as follows.

In addition, Specific Example (16a) may be obtained as a mixture of isomers, and it is known that the total number of sulfo groups in the molecule is 3 or more, and the number of sulfo groups substituted on the benzene ring of the phenoxy is 1 or more.

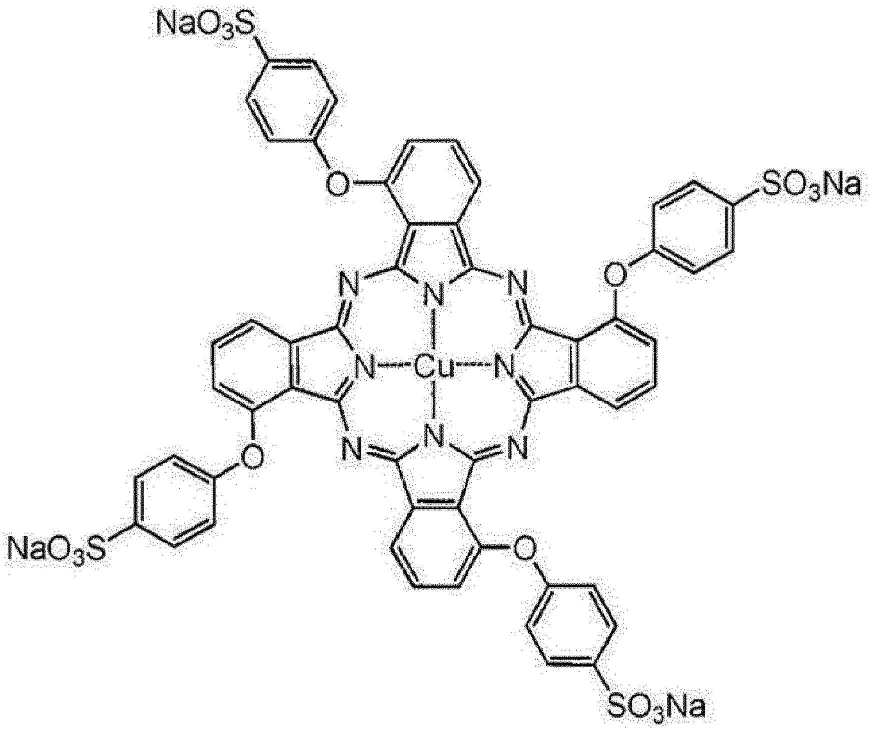

(29a)

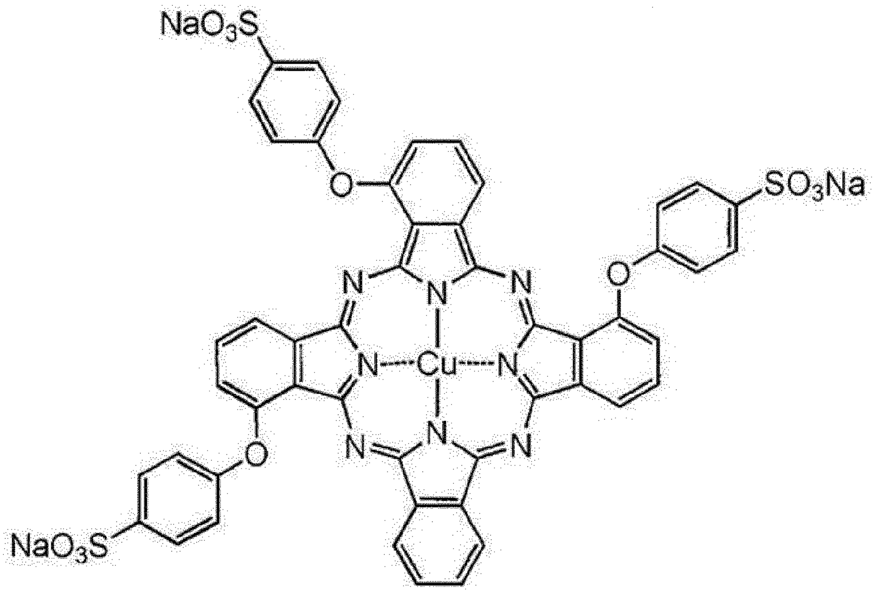

(2a)

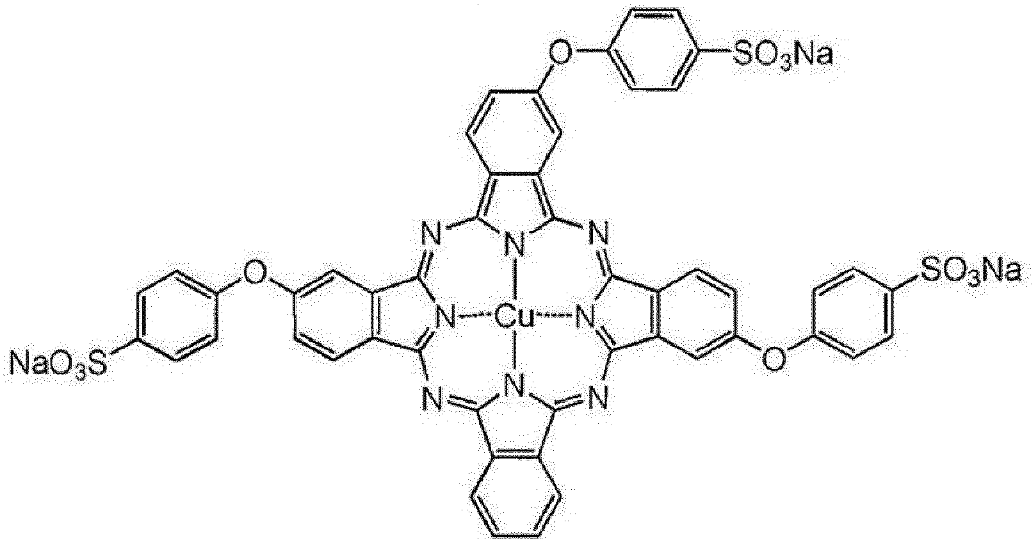

(2b)

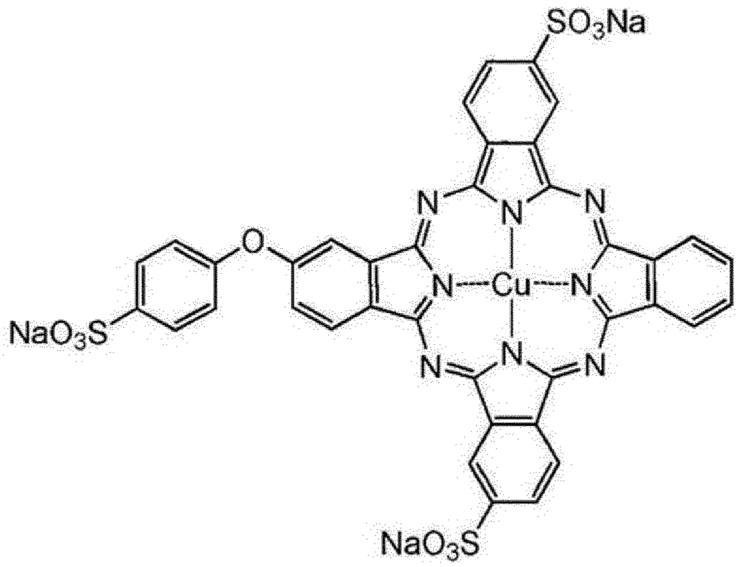

(20a)

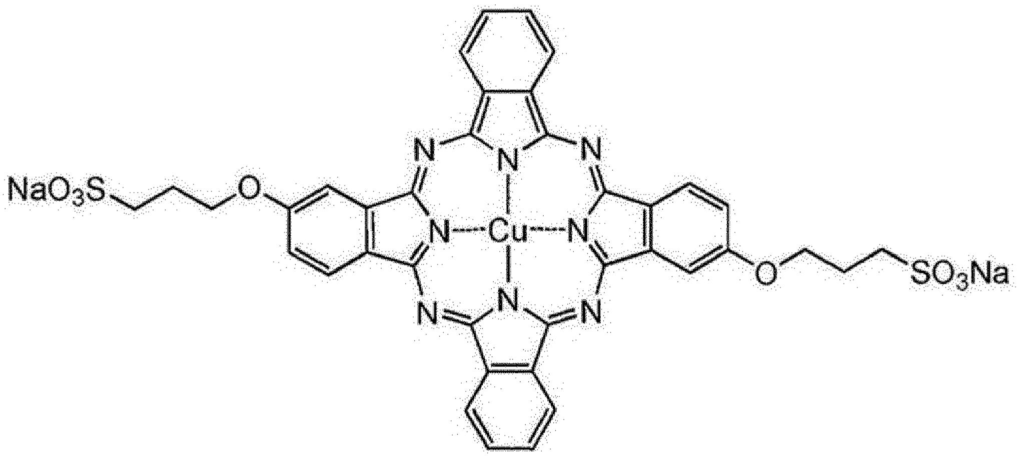

(4a)

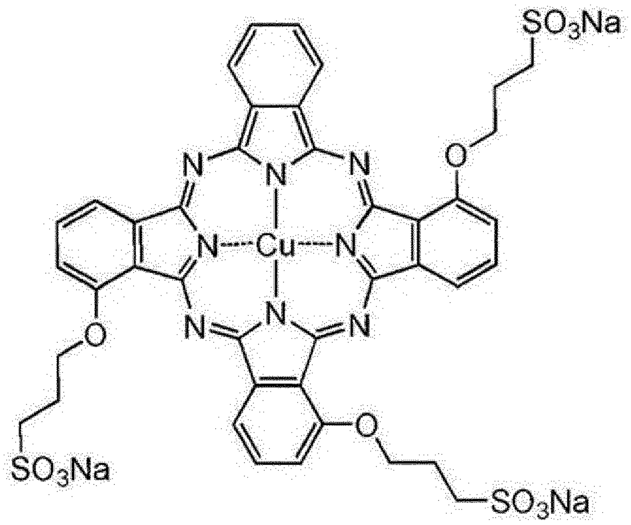

(5a)

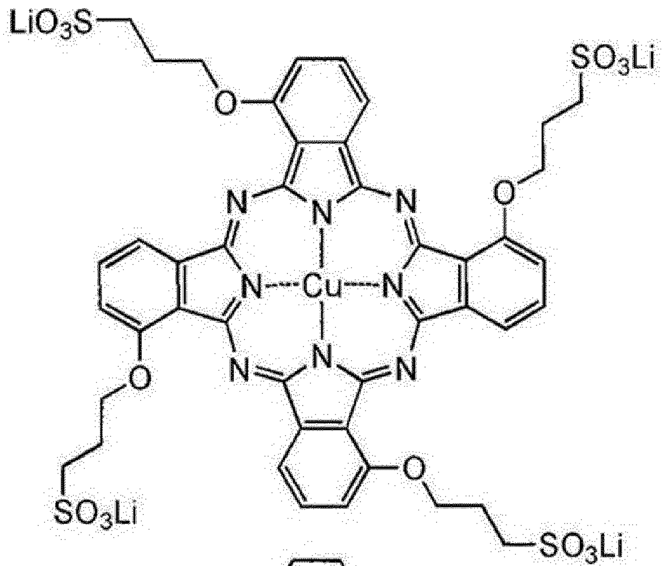

(6a)

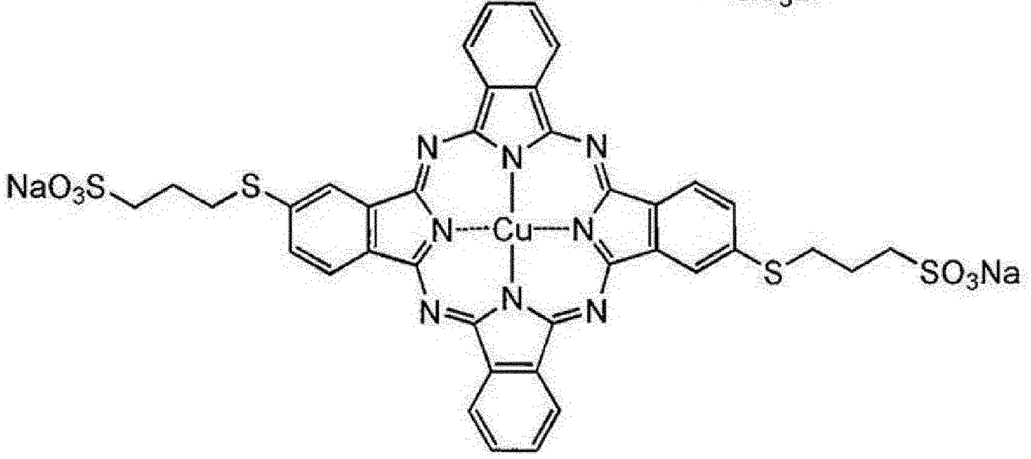

(7a)

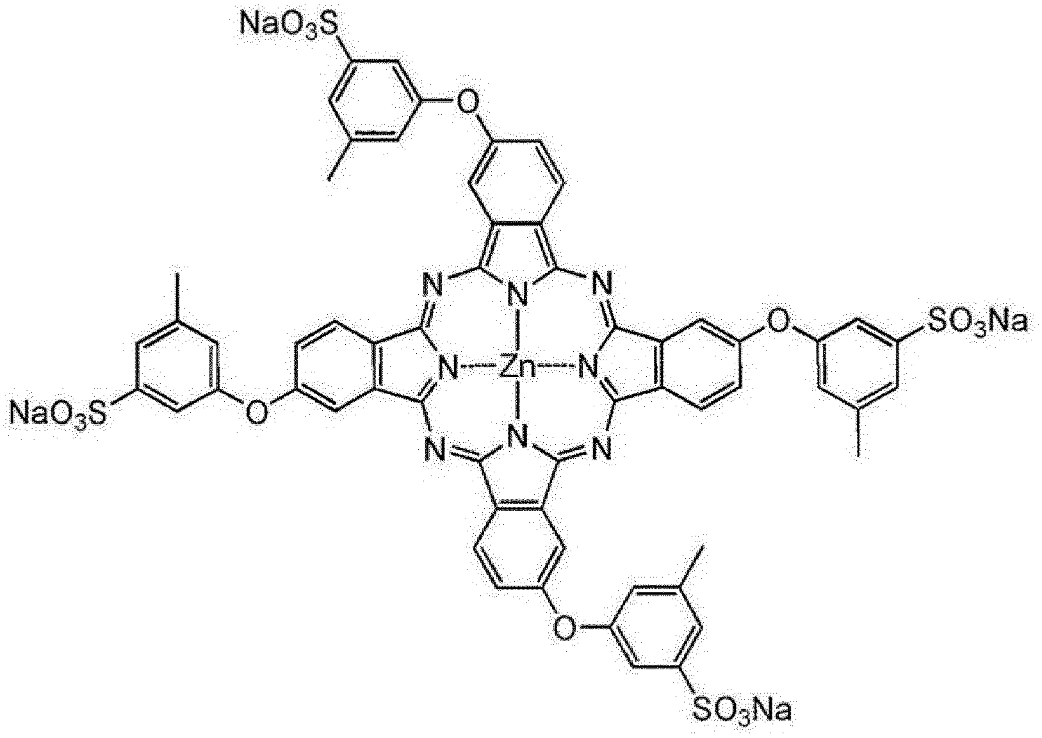

(15a)

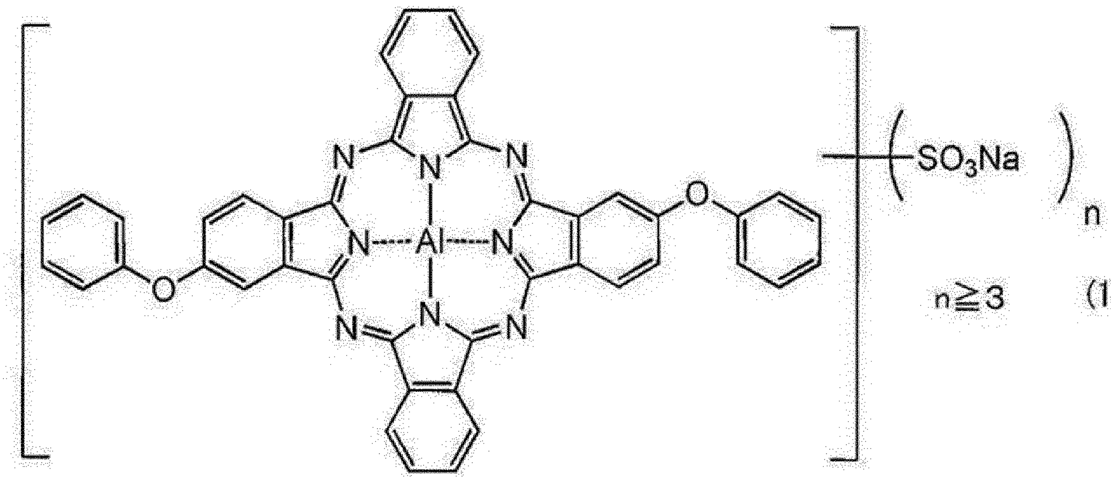

$n \geqq 3$ (16a)

Furthermore, the structural formula of C.I. Direct Blue 87 (DB87), which is a general-purpose dye, is as follows. C.I. Direct Blue 199 (DB199) is a compound represented by Formula (III) in which $n^6$ = 0.5 to 2.0, and $m^6$ = 0.5 to 2.5, as described above.

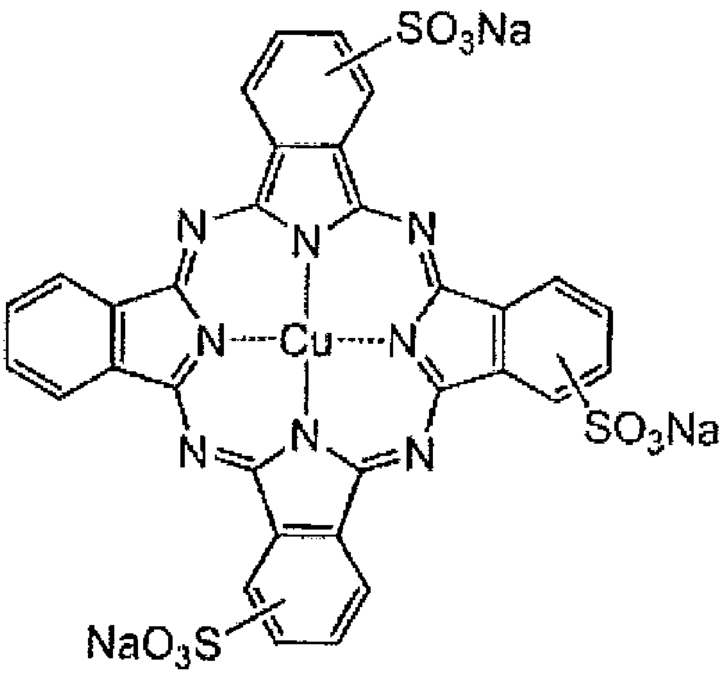

DB87
[in Formula (III), $n^6 = 3$, $m^6 = 0$]

In Table 1, the "$SO_3Z$ number" in the column for "Pc dye" represents the number of sulfo groups carried by each dye, and the term "Total" represents the total number of sulfo groups in the molecule, while the term "Directly bonded to Pc" represents the number of sulfo groups that are directly bonded to the phthalocyanine skeleton (Pc) described above.

The terms "Number", "X" and "$R^{11}$" in the column "$XR^{11}(SO_3Z)m$ [m=1]" in the column for "Pc dye" represent the number of the particular sulfo group, and the kinds of "X" and "$R^{11}$" in Formula (II), respectively, in the case in which each dye is represented by Formula (II).

Furthermore, in Table 1, the term "M" in the column for "Pc dye" represents the metal species of each phthalocyanine dye, and in regard to the particular dye, "M" represents the kind of M in Formula (I).

[Table 1]

| | Ink | Pc dye | | | | | | | Nylon | | Silk | |
|---|---|---|---|---|---|---|---|---|---|---|---|---|
| | Kind | Kind | $SO_3Z$ number | | $XR^{11}(SO_3Z)m$ [m=1] | | | M | OD | Light resistance | OD | Light resistance |
| | | | Total | Directly bonded to Pc | Number | X | $R^{11}$ | Kind | | | | |
| Example 1 | 1 | 29a (particular) | 4 | 0 | 4 | O | Arylene | Cu | 0.7 | Grade 4 | 1.3 | Grade 4 or higher |
| Example 2 | 2 | 2a (particular) | 3 | 0 | 3 | O | Arylene | Cu | 1.1 | Grade 4 | 1.3 | Grade 4 or higher |
| Example 3 | 3 | 2b (particular) | 3 | 0 | 3 | O | Arylene | Cu | 1.1 | Grade 4 | 1.3 | Grade 4 or higher |
| Example 4 | 4 | 20a (particular) | 3 | 2 | 1 | O | Arylene | Cu | 1.1 | Grade 3 | 1.3 | Grade 4 or higher |
| Example 5 | 5 | 4a (particular) | 2 | 0 | 2 | O | Alkylene | Cu | 1.1 | Grade 4 | 1.3 | Grade 4 or higher |
| Example 6 | 6 | 5a (particular) | 3 | 0 | 3 | O | Alkylene | Cu | 1.1 | Grade 4 | 1.3 | Grade 4 or higher |
| Example 7 | 7 | 6a (particular) | 4 | 0 | 4 | O | Alkylene | Cu | 0.6 | Grade 4 | 1 | Grade 4 or higher |
| Example 8 | 8 | 7a (particular) | 2 | 0 | 2 | S | Alkylene | Cu | 1 | Grade 4 | 1.2 | Grade 4 or higher |
| Example 9 | 9 | 15a (particular) | 4 | 0 | 4 | O | Arylene | Zn | 0.7 | Grade 4 | 1.2 | Grade 4 or higher |
| Example 10 | 10 | 16a (particular) | 3 or more | - | 1 or more | O | Arylene | Al | 0.7 | Grade 4 | 1.2 | Grade 4 or higher |
| Comparative Example 1 | 101 | DB87 (general-purpose) | 3 | 3 | 0 | - | - | Cu | 1.1 | Grade 1-2 | 1.3 | Grade 4 or higher |
| Comparative Example 2 | 102 | DB199 (general-purpose) | 2 | 2 | 0 | - | - | Cu | 1.1 | Grade 1-2 | 1.3 | Grade 4 or higher |

The term "Grade 1-2" indicated in the column for the evaluation of light resistance in Table 1 means that the results for the evaluation of light resistance are between Grade 1 and Grade 2.

As can be seen from Table 1, when a conventional general-purpose phthalocyanine dye was used, light resistance can be obtained in the textile printing of a silk fabric; however, light resistance could not be obtained in the textile printing of a nylon fabric.

Furthermore, as explained by way of the comparison between Compound (A-1) and Compound (A-2) described above, even if the total number of sulfonate groups in the molecule is the same (three groups), between Ink 2 in which all of them are the particular sulfo groups, and Ink 3 which uses a dye in which sulfonate groups are directly bonded to the phthalocyanine skeleton, Ink 2 exhibits superior light resistance in nylon textile printing.

[Example 11 to Example 17, and Comparative Example 3 to Comparative Example 8]

<Preparation of ink composition>

Ink 11 to Ink 17 of Example 11 to Example 17, and Ink 103 to Ink 108 of Comparative Example 3 to Comparative Example 8 were prepared respectively in the same manner as in the preparation of Ink 1, except that the dye was changed to the dyes indicated in Table 2 (particular dye only, mixture of particular dye and general-purpose dye, general-purpose dye only, or mixture of general-purpose dye and general-purpose dye).

The mixing ratio of the dyes indicated in Table 2 is on a mass basis.

<Production of textile printed samples>

In Example 11 to Example 17, and Comparative Example 3 to Comparative Example 8, a silk fabric, a nylon 6 taffeta fabric, and a nylon 6,6 taffeta fabric were used as the fabric.

The pretreatment of these fabrics was carried out in the same manner as in Example 1.

Subsequently, solid images were printed on the treated fabrics thus obtained, in the same manner as in the production of the textile printed sample of Example 1, except that the various inks thus obtained (Ink 11 to Ink 17, and Ink 103 to Ink 108) were mounted in the inkjet printer (manufactured by Fujifilm Dimatix, Inc., DMP-2381) instead of Ink 1.

The printed fabrics were dried, and then the dyes were fixed to the fibers of the fabrics by steaming the fabrics at 100°C for 30 minutes under saturated steam during a steaming step. Thereafter, the fabrics were washed for 10 minutes with cold water and for 5 minutes with warm water at 60°C, and then the fabrics were dried.

<Evaluation>

1. Evaluation of color optical density (OD value)

The OD-Cyan was colorimetrically measured for each solid image formed on each fabric, using an X-Rite spectrocolorimeter (manufactured by X-Rite, Inc., "X-RITE 938").

2. Evaluation of light resistance and water resistance

For each fabric having a solid image formed thereon, light resistance was evaluated according to JIS L 0842 using a xenon fade meter, and water resistance was evaluated according to JIS L 0846. The acceptable levels are Grade 3 or higher for both light resistance and water resistance.

3. Evaluation of bleeding

For a treated fabric, a first Japanese Kanji character shown in Fig. 1, a second Japanese Kanji character shown in Fig. 2, a third Japanese Kanji character shown in Fig. 3, and a Japanese Kanji character shown in Fig. 4 were respectively printed in Gothic font, at a font size of 10 points, instead of printing a solid image. Bleeding of the printed characters on the textile printed fabric thus obtained was evaluated by visual inspection according to the criteria described below. Meanwhile, the acceptable level is Grade B or higher.

- Evaluation criteria -

A: All of the first to fourth Kanji characters are neatly legible, without bleeding.

B: There is almost no bleeding. Only the fourth Kanji character is partially blurred.

C: There is slight bleeding. The third Kanji character and the fourth Kanji character are blurred so that the characters are not easily legible.

D: There is bleeding. The second Kanji character, the third Kanji character, and the fourth Kanji character are blurred so that the characters are not easily legible.

The results obtained as described above are respectively presented in Table 2.

In Table 2, the term "Pc dye" represents a "phthalocyanine dye", and the column for "Pc dye" shows the constitutions of the dyes used in Examples and Comparative Examples. The "Kind" in the column for "Pc dye" indicates the kind of the various dyes, and the term "(particular)" means that the dye is the particular dye, while "(general-purpose)" means that the dye is a general-purpose dye.

The structures of dyes 2a, DB87, and DB199 are as described above.

Compound A as a dye is a compound represented by Formula (III), in which n represents from 4 to 6, and m represents 0.

DB86 as a dye is C.I. Direct Blue 86, and is a compound represented by Formula (III), in which n represents 2, and m represents 0.

[Table 2]

| | Ink | Pc dye | | Silk | | | Nylon 6 | | | Nylon 6,6 | | |
|---|---|---|---|---|---|---|---|---|---|---|---|---|
| | Kind | Kind | Mixing ratio | Bleeding | OD value | Water resistance | Bleeding | OD value | Light resistance | Bleeding | OD value | Light resistance |
| Example 11 | 11 | 2a (particular)/Compound A (general-purpose) | 50/50 | A | 1.3 | Grade 3-4 | A | 1.3 | Grade 3 | A | 1.2 | Grade 3 |
| Example 12 | 12 | 2a (particular)/Compound A (general-purpose) | 20/80 | A | 1.4 | Grade 3 | B | 1.4 | Grade 3 | B | 1.3 | Grade 3 |
| Example 13 | 13 | 2a (particular)/Compound A (general-purpose) | 80/20 | A | 1.3 | Grade 3-4 | A | 1.3 | Grade 3 | A | 1.2 | Grade 3 |
| Example 14 | 14 | 2a (particular)/DB 199 (general-purpose) | 50/50 | A | 1.3 | Grade 3-4 | A | 1.3 | Grade 3 | A | 1.2 | Grade 3 |
| Example 15 | 15 | 2a (particular)/DB87 (general-purpose) | 50/50 | A | 1.2 | Grade 3 | A | 1.3 | Grade 3 | A | 1.2 | Grade 3 |
| Example 16 | 16 | 2a (particular)/DB86 (general-purpose) | 50/50 | A | 1.2 | Grade 3 | A | 1.2 | Grade 3-4 | A | 1.2 | Grade 3 |
| Example 17 | 17 | 2a (particular) | - | A | 1.0 | Grade 3-4 | A | 1.0 | Grade 4 | A | 0.9 | Grade 4 |
| Comparative Example 3 | 103 | Compound A (general-purpose) | - | D | 1.4 | Grade 1 | D | 1.5 | Grade <2 | D | 1.4 | Grade <2 |
| Comparative Example 4 | 104 | DB87 (general-purpose) | - | D | 1.4 | Grade 1-2 | D | 1.4 | Grade <2 | D | 1.3 | Grade <2 |
| Comparative Example 5 | 105 | DB86 (general-purpose) | - | C | 1.3 | Grade 2 | B | 1.3 | Grade <2 | B | 1.3 | Grade <2 |
| Comparative Example 6 | 106 | DB199 (general-purpose) | - | C | 1.3 | Grade 1 | B | 1.4 | Grade <2 | B | 1.3 | Grade <2 |
| Comparative Example 7 | 107 | Compound A (general-purpose)/DB87 (general-purpose) | 50/50 | D | 1.4 | Grade 1 | D | 1.4 | Grade <2 | D | 1.3 | Grade <2 |
| Comparative Example 8 | 108 | DB87 (general-purpose)/DB86 (general-purpose) | 50/50 | C | 1.4 | Grade 1-2 | C | 1.3 | Grade ≤2 | C | 1.3 | Grade ≤2 |

The terms "Grade 1-2" and "Grade 3-4" indicated in the column for the evaluation of water resistance and light resistance in Table 2 mean that the evaluation results are "between Grade 1 and Grade 2", and "between Grade 3 and Grade 4", respectively.

In Table 2, Example 11 to Example 16 are construed as follows.

- Example 11 to Example 13 are combinations of Example 17 and Comparative Example 3.
- Example 14 is a combination of Example 17 and Comparative Example 6.
- Example 15 is a combination of Example 17 and Comparative Example 4.
- Example 16 is a combination of Example 17 and Comparative Example 5.

When the evaluation results for Example 11 to Example 16 are examined from the viewpoint described above, the OD value or light resistance was evaluated to be intermediate between Example 17 and the respective Comparative Examples, while in contrast to that, it can be seen that the effects of Example 17 in connection with bleeding and water resistance were maintained.

That is, it was understood that when textile printing is carried out using the particular dye of the invention, even if textile printing is carried out using a mixture with a general-purpose dye, a printed fabric having excellent water resistance with suppressed bleeding may be obtained.

This is speculated to be because the dyed state is different in the case in which the fabric was silk, and the case in which the fabric was nylon.

[Example 18]

<Preparation of Ink Composition>

Ink 18 of Example 18 was prepared by mixing the various components according to the composition described below, and filtering the mixed liquid thus obtained through a membrane filter having a pore size of 0.5 μm.

- Dye 2a 5%
- Glycerin 10%
  [manufactured by Wako Pure Chemical Industries, Ltd.] (aqueous organic solvent)
- Triethylene glycol monobutyl ether 10%
  [manufactured by Wako Pure Chemical Industries, Ltd.] (aqueous organic solvent)
- ORFIN E1010 1%
  [manufactured by Nissin Chemical Industry Co., Ltd.] (acetylene glycol-based surfactant)
- PROXEL XL2 0.2%
- Water Balance

[Examples 19 and 20]

<Preparation of ink composition>

Ink 19 of Example 19 and Ink 20 of Example 20 were prepared in the same manner as in the preparation of Ink 18, except that the Dye 2a was changed to the dyes indicated in Table 3.

The mixing ratio of the dyes indicated in Table 3 is on a mass basis.

[Comparative Example 9]

<Preparation of ink composition>

Ink 109 of Comparative Example 9 was prepared in the same manner as in the preparation of Ink 18, except that the Dye 2a was changed to the dye indicated in Table 3.

[Example 21]

<Preparation of ink composition>

Ink 21 of Example 21 was prepared by mixing various components according to the composition described

below, and filtering the mixed liquid thus obtained through a membrane filter having a pore size of 0.5 μm.

- Dye 2a 7%
- Glycerin 8%
  [manufactured by Wako Pure Chemical Industries, Ltd.] (aqueous organic solvent)
- Diethylene glycol monobutyl ether 8%
  [manufactured Tokyo Chemical Industry Co., Ltd.] (aqueous organic solvent)
- 2-Pyrrolidone 3%
  [manufactured by Wako Pure Chemical Industries, Ltd.] (aqueous organic solvent)
- SURFYNOL TG 1%
- EDTA-2Na 0.005%
- Benzotriazole 0.01%
- Water Balance

[Comparative Example 10]

<Preparation of ink composition>

Ink 110 of Comparative Example 10 was prepared in the same manner as in the preparation of Ink 21, except that the Dye 2a was changed to the dye indicated in Table 3.

[Example 22]

<Preparation of ink composition>

Ink 22 of Example 22 was prepared by mixing various components according to the composition described below, and filtering the mixed liquid thus obtained through a membrane filter having a pore size of 0.5 μm.

- Dye 2b 5%
- Glycerin 10%
  [manufactured by Wako Pure Chemical Industries, Ltd.] (aqueous organic solvent)
- Triethylene glycol monobutyl ether 10%
  [manufactured by Wako Pure Chemical Industries, Ltd.] (aqueous organic solvent)
- Triethanolamine 0.5%
  [manufactured by Wako Pure Chemical Industries, Ltd.]
- ORFIN E1010 1%
  [manufactured by Nissin Chemical Industry Co., Ltd.] (acetylene glycol-based surfactant)
- PROXEL XL2 0.1%
- EDTA-2Na 0.005%
- Water Balance

[Examples 23 to 25]

<Preparation of ink composition>

Ink 23 of Example 23, Ink 24 of Example 24, and Ink 25 of Example 25 were prepared in the same manner as in the preparation of Ink 22, except that the Dye 2b was changed respectively to the dyes indicated in Table 3.

[Comparative Example 11]

<Preparation of ink composition>

Ink 111 of Comparative Example 11 was prepared in the same manner as in the preparation of Ink 22, except that the Dye 2b was changed to the dye indicated in Table 3.

<Preparation of textile printed sample>

For Example 18 to Example 25, and Comparative Example 9 to Comparative Example 11, a silk fabric, a wool fabric, a nylon 6 taffeta fabric, and a nylon 6,6 taffeta fabric were used as the fabric.
The pretreatment of these fabrics was carried out in the same manner as in Example 1.
Next, solid images were printed on the treated fabrics thus obtained, in the same manner as in the production of the textile printed sample of Example 1, except that the various inks thus obtained (Ink 18 to Ink 25, and Ink 198 to Ink 111) were mounted on an inkjet printer (manufactured by Fujifilm Dimatix, Inc., DMP-2381), instead of Ink 1.
The printed fabrics were dried, and then the dyes were fixed to the fibers of the fabrics by steaming the fabrics at 100°C for 60 minutes under saturated steam in a steaming step. Thereafter, the fabrics were washed with cold water for 10 minutes and then with warm water at 60°C for 5 minutes, and the fabrics were dried.

<Evaluation>

1. Evaluation of color optical density (OD value)

For the solid images formed on the various fabrics, the OD-Cyan was colorimetrically measured using an X-Rite spectrocolorimeter (manufactured by X-Rite, Inc., "X-RITE 938").

2. Evaluation of hue angle

For the solid images formed on the various fabrics, a* and b* of the CIE standard colorimetric system were measured using an X-Rite spectrocolorimeter (manufactured by X-Rite, "X-RITE 938"), and the hue angle was calculated by the following formula:

$$\text{Hue angle (hab)} = \tan^{-1}(b^*/a^*)$$

3. Evaluation of light resistance

For the various fabrics having solid images formed thereon, light resistance was evaluated according to JIS L 0842 using a xenon fade meter. The acceptable level of light resistance is Grade 3 or higher.

The results obtained as described above are respectively presented in Table 3.

In Table 3, the term "Pc dye" represents a "phthalocyanine dye", and the column for "Pc dye" shows the constitutions of the dyes used in Examples and Comparative Examples. The "Kind" in the column for "Pc dye" indicates the kind of the various dyes, and the term "(particular)" means that the dye is the particular dye, while "(general-purpose)" means that the dye is a general-purpose dye.
The structures of dyes 2a, 2b, 6a, 15a, DB87, and DB199 are as described above.
The specific structural formula of Dye 31a is as follows:

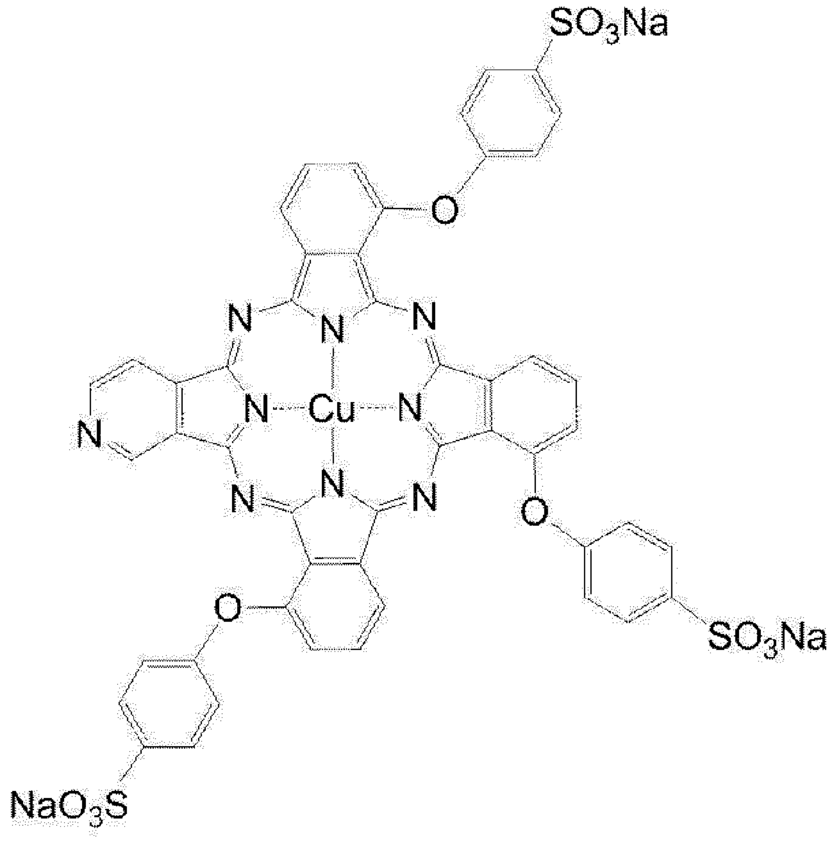

31a

AB80 as a dye represents Acid Blue 80, which is an anthraquinone dye.

[Table 3]

| | Ink | Pc dye | Silk | | | Wool | | | Nylon 6 | | | Nylon 6.6 | | |
|---|---|---|---|---|---|---|---|---|---|---|---|---|---|---|
| | Kind | Kind | OD value | Hue angle | Light resistance | OD value | Hue angle | Light resistance | OD value | Hue angle | Light resistance | OD value | Hue angle | Light resistance |
| Example 18 | 18 | 2a (particular) | 1.1 | 218° | Grade 4 or higher | 1.1 | 217° | Grade 4 or higher | 1.1 | 219° | Grade 4 | 1.0 | 217° | Grade 4 |
| Example 19 | 19 | 2a (particular)/DB 199 (general-purpose) = 50/50 | 1.3 | 222° | Grade 3-4 | 1.3 | 219° | Grade 3-4 | 1.3 | 230° | Grade 3 | 1.2 | 229° | Grade 3 |
| Example 20 | 20 | 2a (particular)/AB80 (general-purpose) = 75/25 | 1.3 | 279° | Grade 4 or higher | 1.3 | 278° | Grade 4 or higher | 1.3 | 286° | Grade 4 | 1.2 | 283° | Grade 4 |
| Example 21 | 21 | 2a (particular) | 1.1 | 218° | Grade 4 or higher | 1.1 | 217° | Grade 4 or higher | 1.1 | 219° | Grade 4 | 1.0 | 217° | Grade 4 |
| Example 22 | 22 | 2b (particular) | 1.1 | 215° | Grade 4 or higher | 1.1 | 215° | Grade 4 or higher | 1.1 | 217° | Grade 4 | 1.0 | 215° | Grade 4 |
| Example 23 | 23 | 6a (particular) | 1.0 | 187° | Grade 4 or higher | 1.0 | 186° | Grade 4 or higher | 0.6 | 187° | Grade 4 | 0.6 | 185° | Grade 4 |
| Example 24 | 24 | 15a (particular) | 1.0 | 151° | Grade 4 or higher | 1.0 | 150° | Grade 4 or higher | 0.7 | 152° | Grade 4 | 0.6 | 152° | Grade 4 |
| Example 25 | 25 | 31a (particular) | 1.0 | 220° | Grade 4 or higher | 1.0 | 220° | Grade 4 or higher | 1.0 | 221° | Grade 4 | 1.0 | 221° | Grade 4 |
| Comparative Example 9 | 109 | DB87 (general-purpose) | 1.3 | 231° | Grade 4 or higher | 1.3 | 220° | Grade 4 or higher | 1.4 | 243° | Grade 1-2 | 1.3 | 241° | Grade 1-2 |
| Comparative Example 10 | 110 | DB199 (general-purpose) | 1.3 | 235° | Grade 4 or higher | 1.3 | 224° | Grade 4 or higher | 1.4 | 247° | Grade 1-2 | 1.3 | 245° | Grade 1-2 |
| Comparative Example 11 | 111 | DB87 (general-purpose) | 1.3 | 231° | Grade 4 or higher | 1.3 | 220° | Grade 4 or higher | 1.4 | 243° | Grade 1-2 | 1.3 | 241° | Grade 1-2 |

The terms "Grade 1-2" and "Grade 3-4" indicated in the column for the evaluation of water resistance and light resistance in Table 3 mean that the evaluation results are "between Grade 1 and Grade 2", and "between Grade 3 and Grade 4", respectively.

From the results of Table 3, it can be seen that when the particular dye of the invention is used, even if a general-purpose dye is mixed therewith, a textile printed fabric having an image with excellent water resistance with suppressed bleeding may be obtained.

[Example 26]

<Synthesis of Compound 001>

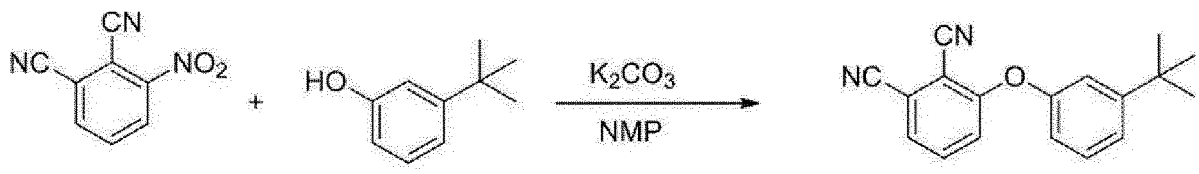


Intermediate 001-1

3-Nitrophthalonitrile (8.7 g), 3-tert-butylphenol (7.5 g), potassium carbonate (13.8 g), and DMF (50 mL) were introduced into a flask, and the mixture was stirred for 2 hours at 60°C. The reaction liquid thus obtained was added to water (250 mL), and precipitated crystals were collected by filtration. These crystals were dried by blowing air at 50°C, 13.4 g of an Intermediate 001-1 was obtained.
1H NMR: δ=1.35(s,9H), 7.00-7.08(m,2H), 7.10(dd,1H), 7.42-7.48(m,2H), 7.53(d,1H), 7.56(d,1H) 300 MHz in CDCl3

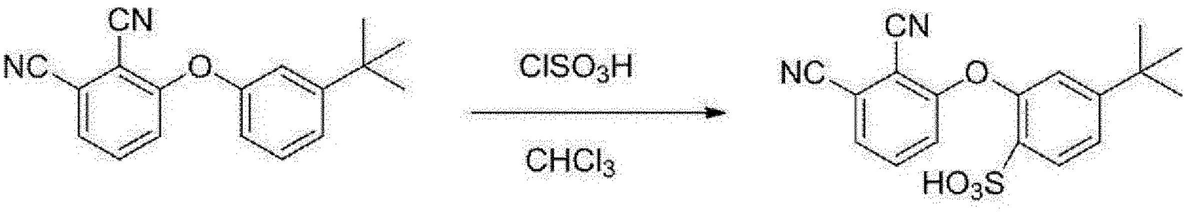


Intermediate 001-1

Intermediate 001-2

The Intermediate 001-1 (11 g) and chloroform (100 mL) were introduced into a flask, and the content was stirred under ice cooling. Chlorosulfuric acid (10 g) was added thereto, and the mixture was stirred for 5 minutes, and then was stirred for 120 minutes at room temperature. The reaction solution thus obtained was added to ice (200 g). The mixture thus obtained was extracted with chloroform, and the entire organic layer was dried over sodium sulfate. The solvent was removed, and the residue thus obtained was purified by silica gel column chromatography (developing liquid: chloroform/methanol = 3/1). Thus, 7.0 g of an Intermediate 001-2 was obtained.
$^1$H NMR: δ=1.30(s,9H), 6.96(dd,1H), 7.17(d,1H), 7.45(dd,1H), 7.53(dd,1H), 7.60(d,1H), 7.94(d,1H) 300 MHz in $CDCl_3$

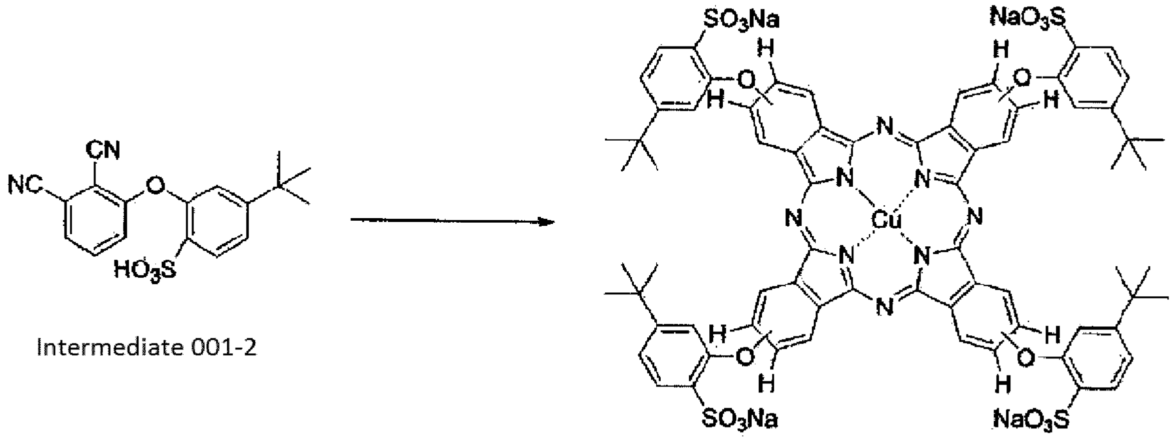

Intermediate 001-2

Compound 001

Phthalonitrile (5.0 g), sodium acetate (1.35 g), triethyl ortho-acetate (3.3 g), and diethylene glycol (17.5 g) were introduced into a flask, and the mixture was stirred for 30 minutes at 110°C. The temperature was lowered to 100°C, ammonium benzoate (3.9 g) and copper(II) chloride (0.47 g) were added thereto, and the mixture was stirred for 11 hours. The temperature was lowered to 80°C, concentrated hydrochloric acid (1.55 mL) was added thereto, and the mixture was stirred for 0.5 hours. Water (150 mL) was added thereto, and the mixture was stirred. This reaction liquid was ice-cooled, and precipitated crystals were collected by filtration. The crystals collected by filtration were dissolved in water (150 mL), and a 1 M aqueous solution of sodium hydroxide was added to this solution to adjust the pH to 10. This solution was subjected to dust removal using Celite, subsequently 4 L of acetonitrile was added thereto, and precipitated crystals were collected by filtration. The crystals were dried in air, and thereby 2.6 g of a Compound 001 was obtained.

$\lambda$max of solution spectrum = 693 nm (MeOH)

[Example 27]

<Synthesis of Compound 002>

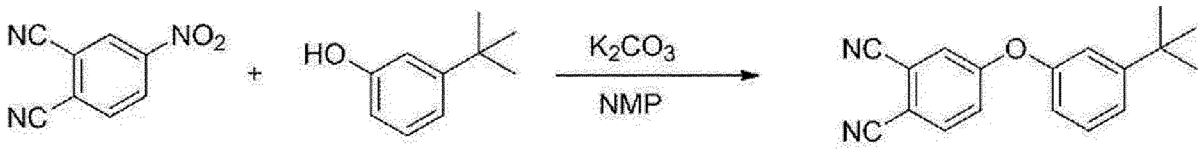


Intermediate 002-1

4-Nitrophthalonitrile (4.2 g), 3-tert-butylphenol (3.7 g), potassium carbonate (6.7 g), and NMP (40 mL) were introduced into a flask, and the mixture was stirred for 2 hours at 100°C. The reaction liquid thus obtained was added to 200 mL of water, and an aqueous layer of the supernatant was removed. Methanol (60 mL) and water (20 mL) were added thereto, the mixture was heated and washed, and precipitated crystals were collected by filtration. These crystals were dried by blowing air at 50°C, and thereby 5.3 g of an Intermediate 002-1 was obtained.

$^1$H NMR: $\delta$=1.06(s,9H), 6.94-7.00(m,1H), 7.18(dd,1H), 7.29-7.36(m,2H), 7.41(dd,1H), 7.75(d,1H), 8.07(d,1H) 300 MHz in DMSO-d6

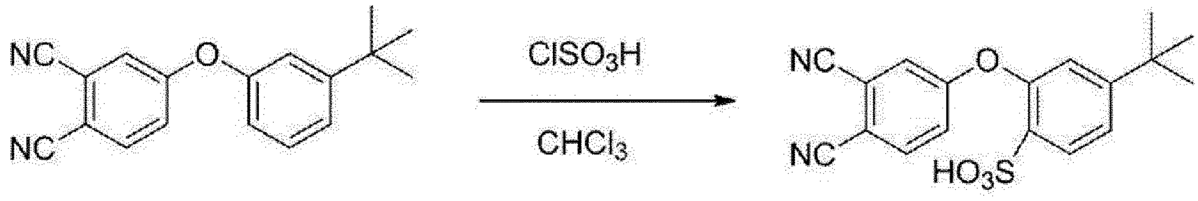


Intermediate 002-1

Intermediate 002-2

The Intermediate 002-1 (4.5 g) and chloroform (45 mL) were introduced into a flask, and the mixture was stirred under ice cooling. Chlorosulfuric acid (4.5 mL) was added thereto, and the mixture was stirred for 5 minutes, and then was stirred for 30 minutes at room temperature. The reaction solution thus obtained was added to ice (200 g), and concentrated hydrochloric acid (30 mL) was further added thereto. Precipitated crystals were collected by filtration and were washed by dispersing in 4 M aqueous hydrochloric acid (50 mL). The crystals were collected by filtration and dried in air. Thus, 5.4 g of an Intermediate 002-2 was obtained.
$^1$H NMR: δ=1.11(s,9H), 7.04(d,1H), 7.07(dd,1H), 7.31(dd,1H), 7.47(d,1H), 7.73(d,1H), 7.98(d,1H) 300 MHz in DMSO-d6

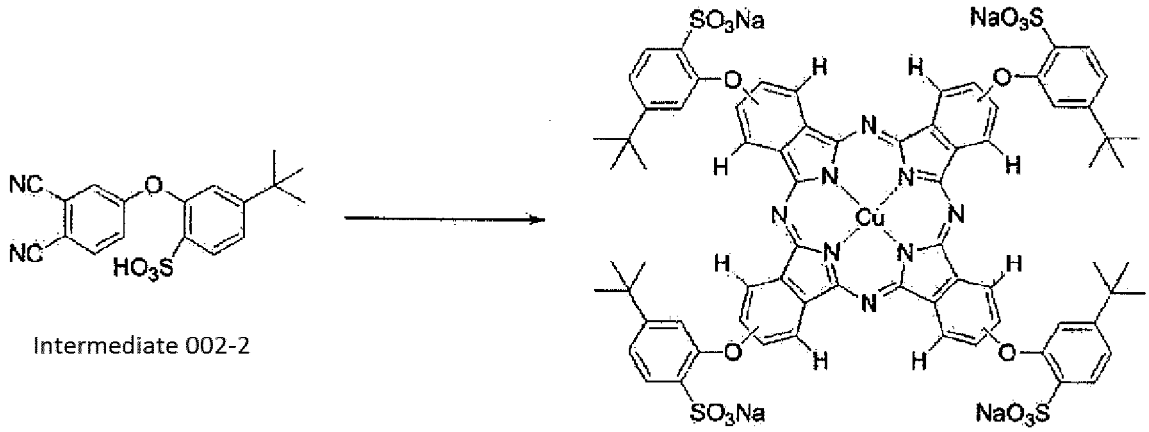

Intermediate 002-2

Compound 002

The Intermediate 002-2 (2.0 g), sodium acetate (0.55 g), and n-propyl alcohol (10 mL) were added to a flask, the mixture was heated to 130°C, and the solvent was distilled off. Toluene (15 mL) was added thereto, and similarly, the solvent was distilled off. The temperature was adjusted to 110°C, subsequently diethylene glycol (10 mL), acetic acid (0.2 mL), and triethyl ortho-acetate (1.5 mL) were added thereto, and the mixture was stirred for 30 minutes. The temperature was lowered to 100°C, ammonium benzoate (1.6 g) and copper(II) chloride (188 mg) were added thereto, and the mixture was stirred for 20 hours. The temperature was lowered to 80°C, concentrated hydrochloric acid (0.5 mL) was added thereto, and the mixture was stirred for 1.5 hours. Isopropyl alcohol (40 mL) was added thereto, and the mixture was stirred. This reaction solution was added to isopropyl alcohol (160 mL) at room temperature, and precipitated crystals were collected by filtration. The crystals thus collected by filtration were dissolved in water (30 mL), and a 1 M aqueous solution of sodium hydroxide was added threto to adjust the pH to 10. This solution was subjected to dust removal using Celite, subsequently the solution was added to acetone (600 mL), and precipitated crystals were collected by filtration. The crystals were dried in air, and thus 1.0 g of a Compound 002 was obtained.
λmax of solution spectrum = 682 nm (DMF)

[Example 28]

<Synthesis of Compound 003>

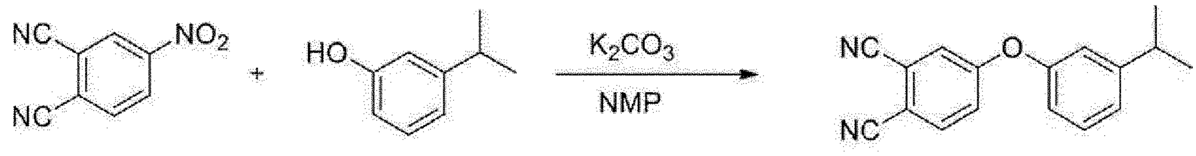


Intermediate 003-1

4-Nitrophthalonitrile (10.4 g), 3-i-propylphenyl (8.2 g), potassium carbonate (12.4 g), and NMP (50 mL) were introduced into a flask, and the mixture was stirred for 2 hours at 100°C. The reaction liquid thus obtained was added to water (250 mL), and an aqueous layer of the supernatant was removed. The residue thus obtained was purified by silica gel column chromatography (developing liquid: hexane/ethyl acetate = 2/1), and thus 14.1 g of an Intermediate 003-1 was obtained.
1H NMR: δ=1.09(d,6H), 3.35(sept,1H), 6.96(dd,1H), 7.04(dd,1H), 7.28(d,1H), 7.32(dd,1H), 7.38(dd,1H), 7.74(d,1H), 8.08(d,1H) 300 MHz in DMSO-d6

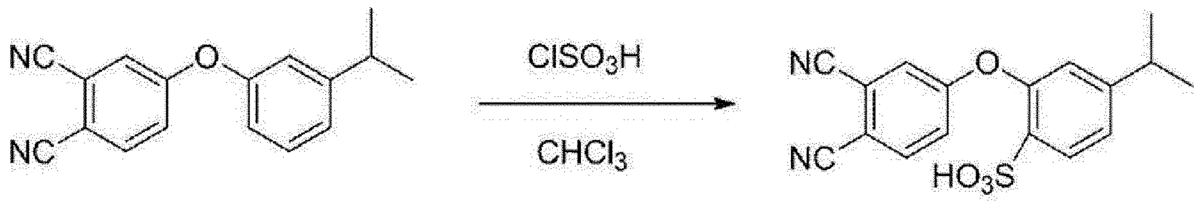


Intermediate 003-1

Intermediate 003-2

The Intermediate 003-1 (13 g) and chloroform (130 mL) were introduced into a flask, and the mixture was stirred under ice-cooling. Chlorosulfuric acid (13 mL) was added thereto, and the mixture was stirred for 5 minutes and then was stirred for 30 minutes at room temperature. The reaction solution thus obtained was added to ice (100 g), and hexane (300 mL) and saturated brine (40 mL) were further added thereto. Precipitated crystals were collected by filtration, water (40 mL) and concentrated hydrochloric acid (20 mL) were added to the crystals to disperse and wash the crystals, and the crystals were collected by filtration and dried in air. Thus, 8.4 g of an Intermediate 003-2 was obtained.
1H NMR: δ=1.15(s,6H), 4.18(sept,1H), 6.89(dd,1H), 7.12(d,1H), 7.35(dd,1H), 7.81(d,1H), 7.85(d,1H), 8.09(d,1H) 300 MHz in DMSO-d6

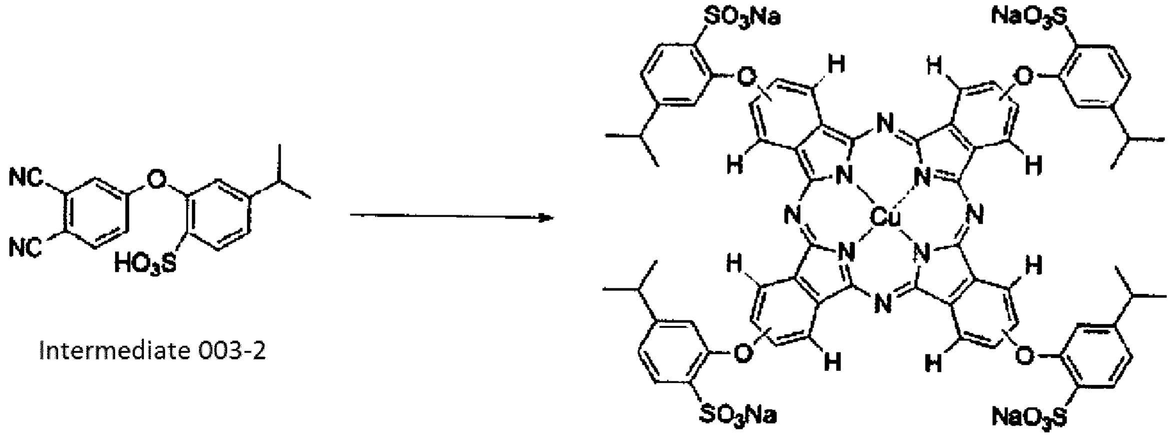

Intermediate 003-2

Compound 003

The Intermediate 003-2 (6.9 g), sodium acetate (3.3 g), and n-propyl alcohol (20 mL) were introduced into a flask, the mixture was heated to 130°C, and the solvent was distilled off. Toluene (15 mL) was added thereto, and similarly the solvent was distilled off. The temperature was adjusted to 110°C, subsequently diethylene glycol (20 mL), acetic acid (0.5 mL), and triethyl ortho-acetate (5.0 mL) were added thereto, and the mixture was stirred for 30 minutes. The temperature was lowered to 100°C, ammonium benzoate (5.6 g) and copper(II) chloride (0.67 mg) were added

thereto, and the mixture was stirred for 15 hours. The temperature was lowered to 80°C, concentrated hydrochloric acid (1.75 mL) was added thereto, and the mixture was stirred for 0.5 hours. Isopropyl alcohol (150 mL) was added thereto, and the mixture was stirred. This reaction solution was cooled to room temperature, and precipitated crystals were collected by filtration. The crystals thus collected by filtration were dissolved in water (100 mL), and a 1 M aqueous solution of sodium hydroxide was added to this solution to adjust the pH to 10. This solution was subjected to dust removal using Celite, subsequently the solution was added to acetone (1400 mL), and precipitated crystals were collected by filtration. The crystals were dried in air, and thus 3.8 g of a Compound 003 was obtained.
λmax of solution spectrum = 679 nm (DMF)

[Example 29]

<Synthesis of Compound 004>

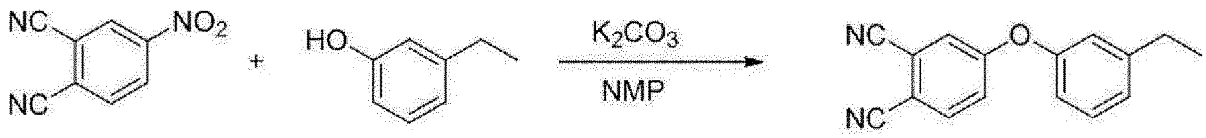


Intermediate 004-1

4-Nitrophthalonitrile (10.4 g), 3-ethylphenol (7.3 g), potassium carbonate (12.4 g), and NMP (50 mL) were introduced into a flask, and the mixture was stirred for 2 hours at 100°C. The reaction liquid thus obtained was added to water (250 mL), and an aqueous layer of the supernatant was removed. The residue thus obtained was purified by silica gel column chromatography (developing liquid: hexane/ethyl acetate = 2/1), and thus 14.1 g of an Intermediate 004-1 was obtained.
1H NMR: δ=1.20(t,3H), 2.68(d,2H), 7.00(d,1H), 7.06(s,1H), 7.18(d,1H), 7.35(dd,1H), 7.42(dd,1H), 7.78(d,1H), 8.10(d,1H) 300 MHz in DMSO-d6

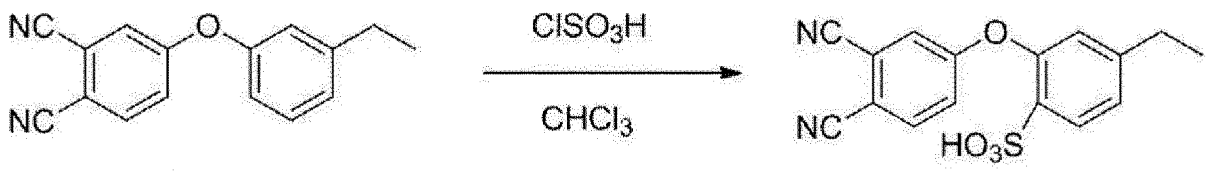


Intermediate 004-1

Intermediate 004-2

The Intermediate 004-1 (13 g) and chloroform (130 mL) were introduced into a flask, and the mixture was stirred under ice-cooling. Chlorosulfuric acid (13 mL) was added thereto, and the mixture was stirred for 5 minutes and then was stirred for 30 minutes at room temperature. The reaction solution thus obtained was added to ice (100 g), and hexane (300 mL) and saturated brine (1000 mL) were further added thereto. Precipitated crystals were collected by filtration, and water (120 mL) was added to the crystals to disperse and wash the crystals. The crystals were collected by filtration, and were dried in air. Thus, 11.8 g of an Intermediate 004-2 was obtained.
1H NMR: δ=1.20(t,3H), 3.03(d,2H), 6.92(dd,1H), 7.01(d,1H), 7.38(dd,1H), 7.81(d,1H), 7.85(d,1H), 8.09(d,1H) 300 MHz in DMSO-d6

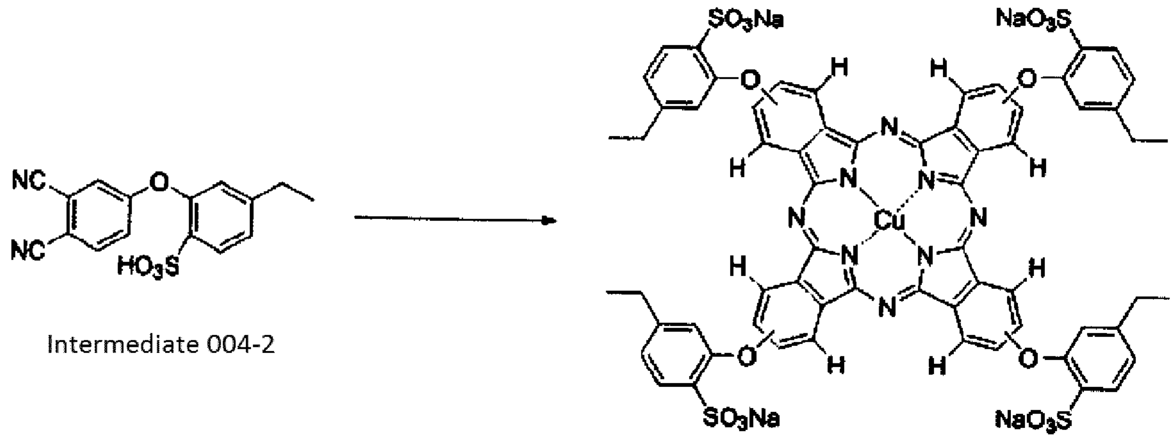

Intermediate 004-2

Compound 004

The Intermediate 004-2 (6.6 g), sodium acetate (3.3 g), and n-propyl alcohol (20 mL) were introduced into a flask, the mixture was heated to 130°C, and the solvent was distilled off. Toluene (15 mL) was added thereto, and similarly the solvent was distilled off. The temperature was adjusted to 110°C, subsequently diethylene glycol (20 mL), acetic acid (0.5 mL), and triethyl ortho-acetate (5.0 mL) were added thereto, and the mixture was stirred for 30 minutes. The temperature was lowered to 100°C, ammonium benzoate (5.6 g) and copper(II) chloride (0.67 mg) were added thereto, and the mixture was stirred for 15 hours. The temperature was lowered to 80°C, concentrated hydrochloric acid (1.75 mL) was added thereto, and the mixture was stirred for 0.5 hours. Isopropyl alcohol (150 mL) was added thereto, and the mixture was stirred. This reaction solution was cooled to room temperature, and precipitated crystals were collected by filtration. The crystals thus collected by filtration were dissolved in water (100 mL), and a 1 M aqueous solution of sodium hydroxide was added to this solution to adjust the pH to 10. This solution was subjected to dust removal using Celite, subsequently the solution was added to acetone (1400 mL), and precipitated crystals were collected by filtration. The crystals were dried in air, and thus 4.5 g of a Compound 004 was obtained.
$\lambda$max of solution spectrum = 678 nm (DMF)

[Example 30]

<Synthesis of Compound 005>

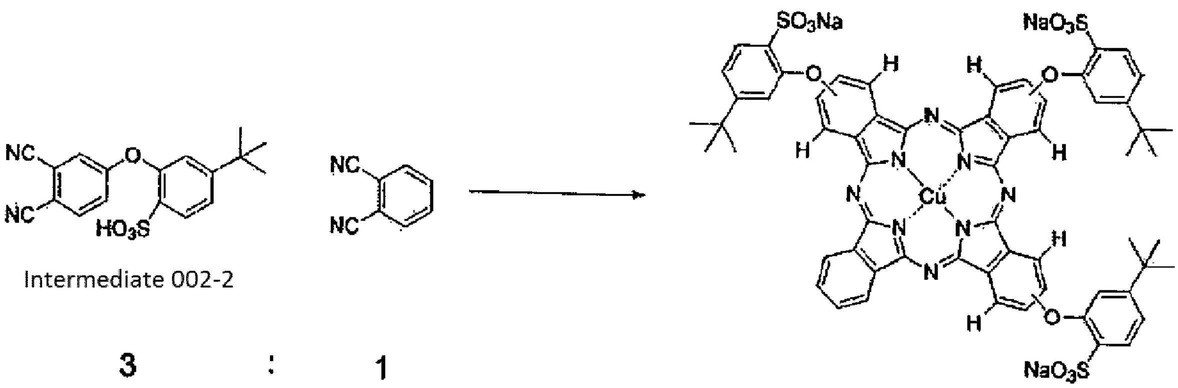

Intermediate 002-2

3 : 1

Compound 005

The Intermediate 002-2 (3.0 g), phthalonitrile (0.36 g), sodium acetate (0.83 g), and n-propyl alcohol (20 mL) were added to a flask, the mixture was heated to 130°C, and the solvent was distilled off. Toluene (20 mL) was added thereto, and similarly the solvent was distilled off. The temperature was adjusted to 110°C, subsequently diethylene glycol (20 mL), acetic acid (0.5 mL), and triethyl ortho-acetate (3 mL) were added thereto, and the mixture was stirred

for 30 minutes. The temperature was lowered to 100°C, ammonium benzoate (3.1 g) and copper(II) chloride (378 mg) were added thereto, and the mixture was stirred for 60 hours. The temperature was lowered to 80°C, concentrated hydrochloric acid (1 mL) was added thereto, and the mixture was stirred for 1.5 hours. Isopropyl alcohol (400 mL) was added thereto, and the mixture was stirred. This reaction solution was cooled to room temperature, and then precipitated crystals were collected by filtration. The crystals thus collected by filtration were dissolved in water (100 mL), and a 1 M aqueous solution of sodium hydroxide was added to this solution to adjust the pH to 10. This solution was subjected to dust removal using Celite, the solution was added to acetone (2000 mL), and precipitated crystals were collected by filtration. The crystals were dried in air, and thus 2.1 g of a Compound 005 was obtained.
λmax of solution spectrum = 618 nm (water)

[Example 31]

<Synthesis of Compound 006>

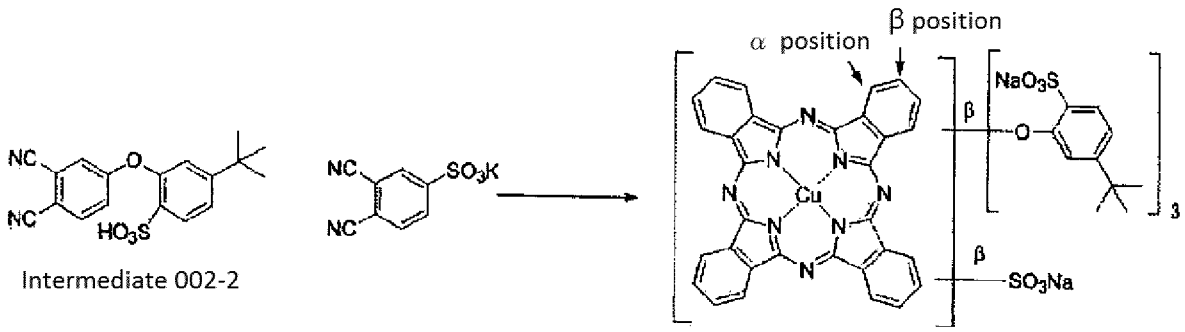


Intermediate 002-2

3 : 1

Compound 006

The Intermediate 002-2 (3.6 g), potassium 3,4-dicyanobenzenesulfonate (0.82 g), sodium acetate (0.98 g), and n-propyl alcohol (10 mL) were introduced into a flask, the mixture was heated to 130°C, and the solvent was distilled off. Toluene (15 mL) was added thereto, and similarly the solvent was distilled off. The temperature was adjusted to 110°C, subsequently diethylene glycol (10 mL), acetic acid (0.5 mL), and triethyl ortho-acetate (3.5 mL) were added thereto, and the mixture was stirred for 30 minutes. The temperature was lowered to 100°C, ammonium benzoate (3.7 g) and copper(II) chloride (448 mg) were added thereto, and the mixture was stirred for 16 hours. The temperature was lowered to 80°C, concentrated hydrochloric acid (1.2 mL) was added thereto, and the mixture was stirred for 1.5 hours. Isopropyl alcohol (250 mL) was added thereto, and the mixture was stirred. This reaction solution was cooled to room temperature, and then precipitated crystals were collected by filtration. The crystals thus collected by filtration were dissolved in water (60 mL), and a 1 M aqueous solution of sodium hydroxide was added to this solution to adjust the pH to 10. This solution was subjected to dust removal using Celite, subsequently the solution was added to acetone (2000 mL), and precipitated crystals were collected by filtration. The crystals were dried in air, and thus 2.2 g of a Compound 006 was obtained.
λmax of solution spectrum = 634 nm (water)

[Example 32]

<Synthesis of Compound 007>

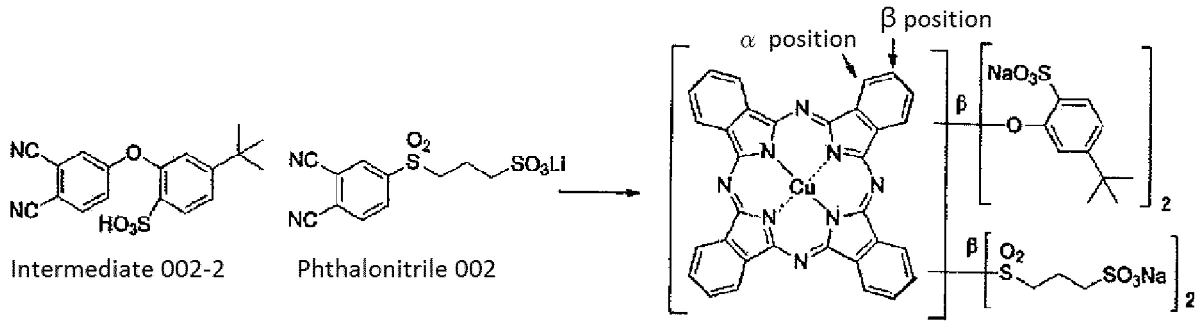


Intermediate 002-2 Phthalonitrile 002

2 : 2

Compound 007

The Intermediate 002-2 (2.14 g), phthalonitrile 002 (1.83 g), sodium acetate (0.59 g), and n-propyl alcohol (10 mL) were introduced into a flask, the mixture was heated to 130°C, and the solvent was distilled off. Toluene (10 mL) was added thereto, and similarly the solvent was distilled off. The temperature was adjusted to 110°C, subsequently diethylene glycol (10 mL), acetic acid (0.5 mL), and triethyl ortho-acetate (3.1 mL) were added thereto, and the mixture was stirred for 30 minutes. The temperature was lowered to 100°C, ammonium benzoate (3.3 g) and copper(II) chloride (403 mg) were added thereto, and the mixture was stirred for 20 hours. The temperature was lowered to 80°C, concentrated hydrochloric acid (1.2 mL) was added thereto, and the mixture was stirred for 1.5 hours. Isopropyl alcohol (150 mL) was added thereto, and the mixture was stirred. This reaction solution was cooled to room temperature, and then precipitated crystals were collected by filtration. The crystals thus collected by filtration were dissolved in water (70 mL), and a 1 M aqueous solution of sodium hydroxide was added to this solution to adjust the pH to 10. This solution was subjected to dust removal using Celite, subsequently the solution was added to acetone (1500 mL), and precipitated crystals were collected by filtration. The crystals were dried in air, and thus 2.3 g of a Compound 007 was obtained.
λmax of solution spectrum = 626 nm (water)

[Example 33]

<Synthesis of Compound 008>

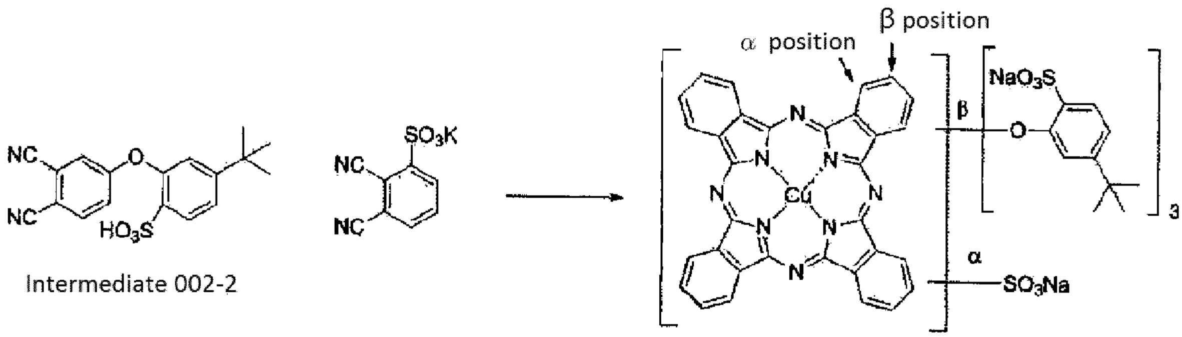


Intermediate 002-2

3 : 1

Compound 008

The Intermediate 002-2 (3.6 g), potassium 2,3-dicyanobenzenesulfonate (0.82 g), sodium acetate (0.98 g), and n-propyl alcohol (10 mL) were introduced into a flask, the mixture was heated to 130°C, and the solvent was distilled off. Toluene (15 mL) was added thereto, and similarly the solvent was distilled off. The temperature was adjusted to 110°C, subsequently diethylene glycol (10 mL), acetic acid (0.5 mL), and triethyl ortho-acetate (3.5 mL) were added thereto, and the mixture was stirred for 30 minutes. The temperature was lowered to 100°C, ammonium benzoate (3.7 g) and copper(II) chloride (448 mg) were added thereto, and the mixture was stirred for 16 hours. The temperature was lowered to 80°C, concentrated hydrochloric acid (1.2 mL) was added thereto, and the mixture was stirred for 1.5 hours. Isopropyl alcohol (250 mL) was added thereto, and the mixture was stirred. This reaction solution was cooled to room temperature, and then precipitated crystals were collected by filtration. The crystals thus collected by filtration were

dissolved in water (75 mL), and a 1 M aqueous solution of sodium hydroxide was added to this solution to adjust the pH to 10. This solution was subjected to dust removal using Celite, subsequently the solution was added to acetone (2000 mL), and precipitated crystals were collected by filtration. The crystals were dried in air, and thus 2.1 g of a Compound 008 was obtained.

λmax of solution spectrum = 636 nm (water)

[Example 34]

<Synthesis of Compound 009>

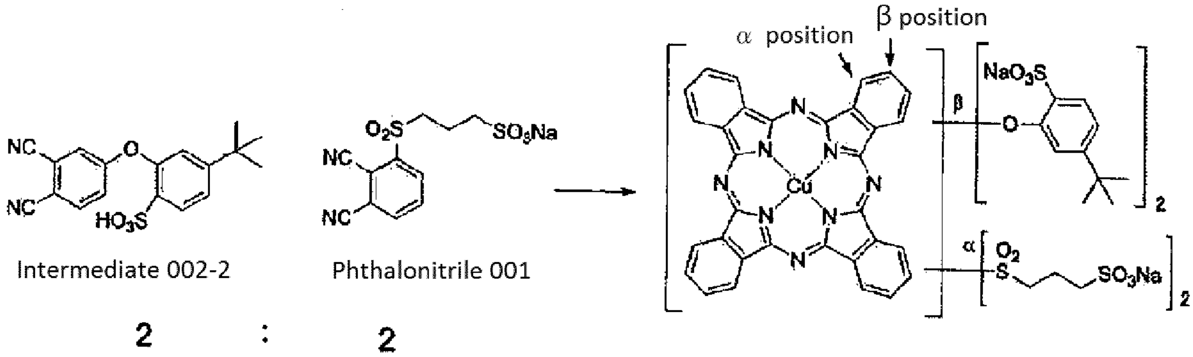


Intermediate 002-2

Phthalonitrile 001

Compound 009

The Intermediate 002-2 (2.14 g), phthalonitrile 001 (1.92 g), sodium acetate (0.59 g), and n-propyl alcohol (10 mL) were introduced to a flask, the mixture was heated to 130°C, and the solvent was distilled off. 10 mL of toluene was added thereto, and similarly the solvent was distilled off. The temperature was lowered to 110°C, subsequently diethylene glycol (10 mL), acetic acid (0.5 mL), and triethyl ortho-acetate (3.1 mL) were added thereto, and the mixture was stirred for 30 minutes. The temperature was lowered to 100°C, ammonium benzoate (3.3 g) and copper(II) chloride (403 mg) were added thereto, and the mixture was stirred for 20 hours. The temperature was lowered to 80°C, concentrated hydrochloric acid (1.2 mL) was added thereto, and the mixture was stirred for 1.5 hours. Isopropyl alcohol (150 mL) was added thereto, and the mixture was stirred. This reaction solution was cooled to room temperature, and then precipitated crystals were collected by filtration. The crystals thus collected by filtration were dissolved in water (80 mL), and a 1 M aqueous solution of sodium hydroxide was added to this solution to adjust the pH to 10. This solution was subjected to dust removal using Celite, subsequently the solution was added to acetone (1500 mL), and precipitated crystals were collected by filtration. The crystals were dried in air, and thus 2.3 g of a Compound 009 was obtained.

λmax of solution spectrum = 630 nm (water)

[Example 35]

<Synthesis of Compound 010>

The Compound 001 (1.0 g) was dissolved in pure water (50 mL), and then the solution was passed through a column packed with a strongly acidic ion exchange resin (manufactured by Dow Chemical Co., AMBERLITE IR120) in which cations had been exchanged in advance with Li ions. Thus, Na ions in the Compound 001 were exchanged with Li ions. Water was evaporated from the solution thus obtained, and thus 0.9 g of a Compound 010 represented by the following formula was obtained.

λmax of solution spectrum = 694 nm (MeOH)

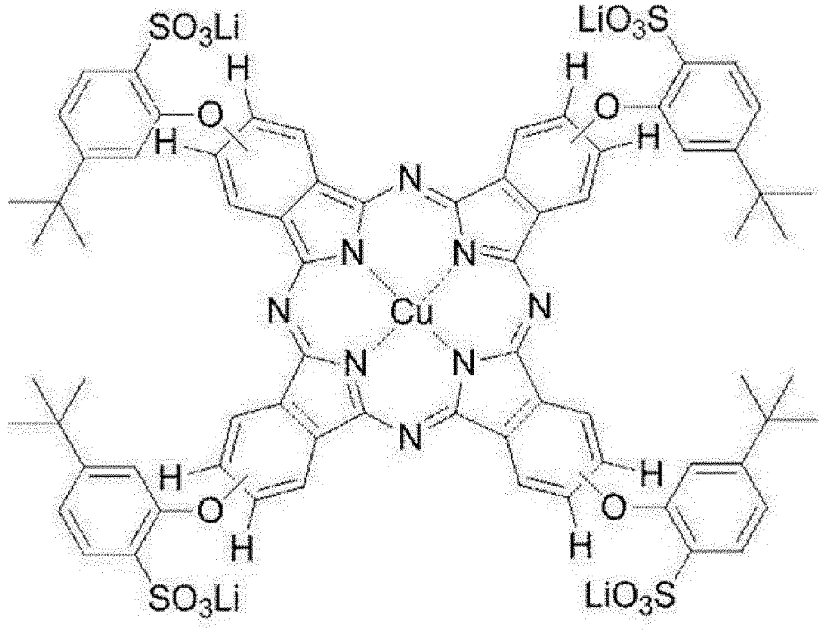

Compound 010

[Example 36]

<Synthesis of Compound 011>

The Compound 001 (1.0 g) was dissolved in pure water (50 mL), and then the solution was passed through a column packed with a strongly acidic ion exchange resin (manufactured by Dow Chemical Co., AMBERLITE IR120) in which cations had been exchanged in advance with K ions. Thus, Na ions in the Compound 001 were exchanged with K ions. Water was evaporated from the solution thus obtained, and thus 0.9 g of a Compound 011 represented by the following formula was obtained.
λmax of solution spectrum = 693 nm (MeOH)

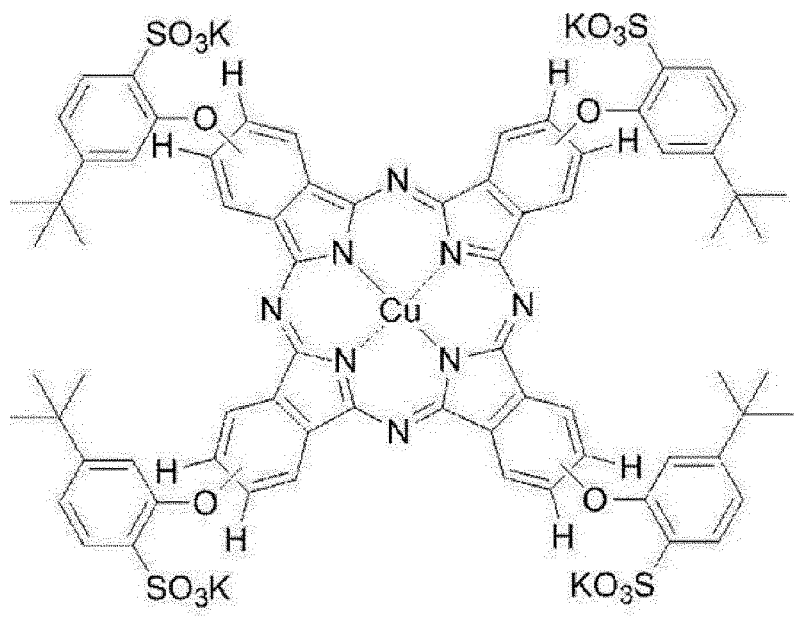

Compound 011

[Example 37 to Example 47]

Ink 37 to Ink 47 of Example 37 to Example 47 were prepared in the same manner as in the preparation of Ink 1, except that the dye was changed to the dyes indicated in Table 4.

The dyes used in the preparation of Ink 37 to Ink 47 indicated in Table 4 are the Compound 001 to Compound 011 synthesized as described above.

<Production of textile printed sample>

In Example 37 to Example 47, a silk fabric and a nylon 6 taffeta fabric were used as the fabric.

The pretreatment of these fabrics was carried out in the same manner as in Example 1.

Subsequently, solid images were printed on the treated fabrics thus obtained, in the same manner as in the production of the textile printed sample of Example 1, except that the various inks thus obtained (Ink 37 to Ink 47) were mounted in the inkjet printer (manufactured by Fujifilm Dimatix, Inc., DMP-2381) instead of Ink 1.

The printed fabrics were dried, and then the dyes were fixed to the fibers of the fabrics by steaming the fabrics at 100°C for 60 minutes under saturated steam during a steaming step. Thereafter, the fabrics were washed for 10 minutes with cold water and for 5 minutes with warm water at 60°C, and then the fabrics were dried.

<Evaluation>

1. Evaluation of color optical density (OD value)

The OD-Cyan was colorimetrically measured for each solid image formed on each fabric, using an X-Rite spectrocolorimeter (manufactured by X-Rite, Inc., "X-RITE 938"). Regarding the OD value, a higher OD value indicates superior dyeing affinity.

2. Evaluation of light resistance

For the various fabrics having solid images formed thereon, light resistance was evaluated according to ISO 105-B02 using a xenon fade meter. The acceptable level for light resistance is Grade 3 or higher.

The results obtained as described above are respectively indicated in Table 4.

In Table 4, the term "Pc dye" represents a "phthalocyanine dye", and the column for "Pc dye" shows the constitutions of the dyes used in Examples and Comparative Examples. The "Kind" in the column for "Pc dye" indicates the kind of the various dyes, and the term "(particular)" means that the dye is the particular dye, while "(general-purpose)" means that the dye is a general-purpose dye.

[Table 4]

| | Ink | Pc dye | Nylon 6 | | Silk |
|---|---|---|---|---|---|
| | Kind | Kind | OD value | Light resistance | OD value |
| Example 37 | 37 | Compound 001 (particular) | 1.6 | Grade 4 | 1.6 |
| Example 38 | 38 | Compound 002 (particular) | 1.6 | Grade 4 | 1.6 |
| Example 39 | 39 | Compound 003 (particular) | 1.6 | Grade 4 | 1.5 |
| Example 40 | 40 | Compound 004 (particular) | 1.6 | Grade 4 | 1.5 |
| Example 41 | 41 | Compound 005 (particular) | 1.5 | Grade 4 | 1.5 |
| Example 42 | 42 | Compound 006 (particular) | 1.5 | Grade 4 | 1.5 |
| Example 43 | 43 | Compound 007 (particular) | 1.4 | Grade 3-4 | 1.5 |
| Example 44 | 44 | Compound 008 (particular) | 1.5 | Grade 4 | 1.5 |
| Example 45 | 45 | Compound 009 (particular) | 1.4 | Grade 3-4 | 1.4 |
| Example 46 | 46 | Compound 010 (particular) | 1.6 | Grade 4 | 1.6 |
| Example 47 | 47 | Compound 011 (particular) | 1.6 | Grade 4 | 1.6 |
| Comparative Example 4 | 104 | DB87 (general-purpose) | 1.3 | ≤ Grade 2 | 1.4 |

The term "Grade 3-4" indicated in the column for the evaluation of light resistance in Table 4 means that the results for the evaluation of light resistance are between Grade 3 and Grade 4.

From the results of Table 4, it was understood that when phenoxy groups are introduced, light resistance is enhanced. Furthermore, a tendency that when the number of phenoxy groups having a sulfonate group introduced at the ortho-position is larger in the particular dye, the OD value is higher (dyeing affinity and color developability are enhanced) was recognized.

The entirety of the disclosures of Japanese Patent Application Nos. 2012-050902, 2012-113691, 2012-189163, and 2012-248534 are incorporated herein by reference.

All publications, patent applications, and technical standards mentioned in this specification are herein incorporated by reference to the same extent as if each individual publication, patent application, or technical standard was specifically and individually indicated to be incorporated by reference.

## Claims

1. A coloring composition for textile printing, comprising:

   a dye represented by the following Formula (X), and
   water:

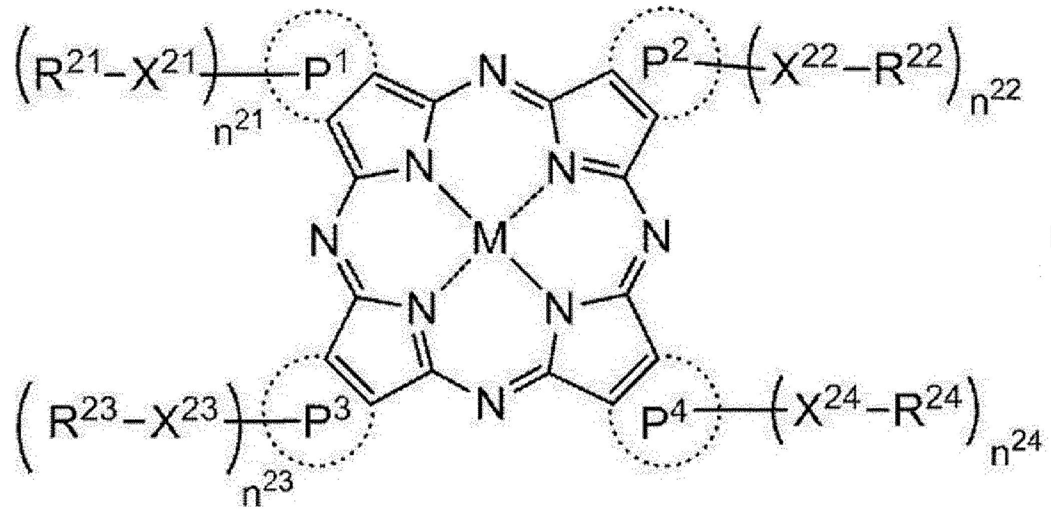

Formula (X)

wherein, in Formula (X), each of $X^{21}$, $X^{22}$, $X^{23}$ and $X^{24}$ independently represents an oxygen atom or a sulfur atom; each of $R^{21}$, $R^{22}$, $R^{23}$ and $R^{24}$ represents an alkyl group, an aryl group, or a heteroaryl group; M represents a hydrogen atom, a metal element, a metal oxide, a metal hydroxide, or a metal halide; each of $P^1$, $P^2$, $P^3$ and $P^4$ independently represents an aromatic ring, and the aromatic ring may have a substituent selected from a halogen atom, an alkyl group, an aralkyl group, an alkenyl group, an alkynyl group, a cycloalkyl group, a cycloalkenyl group, an aryl group, a heterocyclic group, an alkyloxy group, an aryloxy group, an acylamino group, an alkylamino group, an anilino group, a ureido group, a sulfamoylamino group, an alkylthio group, an arylthio group, an alkyloxycarbonylamino group, a sulfonamide group, a carbamoyl group, a sulfamoyl group, a sulfo group, a sulfonyl group, an alkyloxycarbonyl group, a heterocyclic oxy group, an azo group, an acyloxy group, a carbamoyloxy group, a silyloxy group, an aryloxycarbonylamino group, an imide group, a heterocyclic thio group, a sulfinyl group, a phosphonyl group, an aryloxycarbonyl group, an acyl group, an ionic hydrophilic group, a cyano group, a hydroxyl group, a nitro group, an amino group, a carbonylalkyl group, or a carbonylamino group; each of $n^{21}$, $n^{22}$, $n^{23}$ and $n^{24}$ independently represents from 0 to 4; and the sum of $n^{21}$, $n^{22}$, $n^{23}$ and $n^{24}$ is at least 1; provided that the structure of Formula (X) contains at least two ionic hydrophilic groups.

2. The coloring composition for textile printing according to claim 1, wherein the sum of $n^{21}$, $n^{22}$, $n^{23}$ and $n^{24}$ in Formula (X) is from 2 to 3.

3. The coloring composition for textile printing according to claim 1 or 2, wherein each of $P^1$, $P^2$, $P^3$ and $P^4$ in Formula (X) represents a benzene ring.

**4.** The coloring composition for textile printing according to any one of claims 1 to 3, wherein the dye represented by Formula (X) is a dye represented by the following Formula (I):

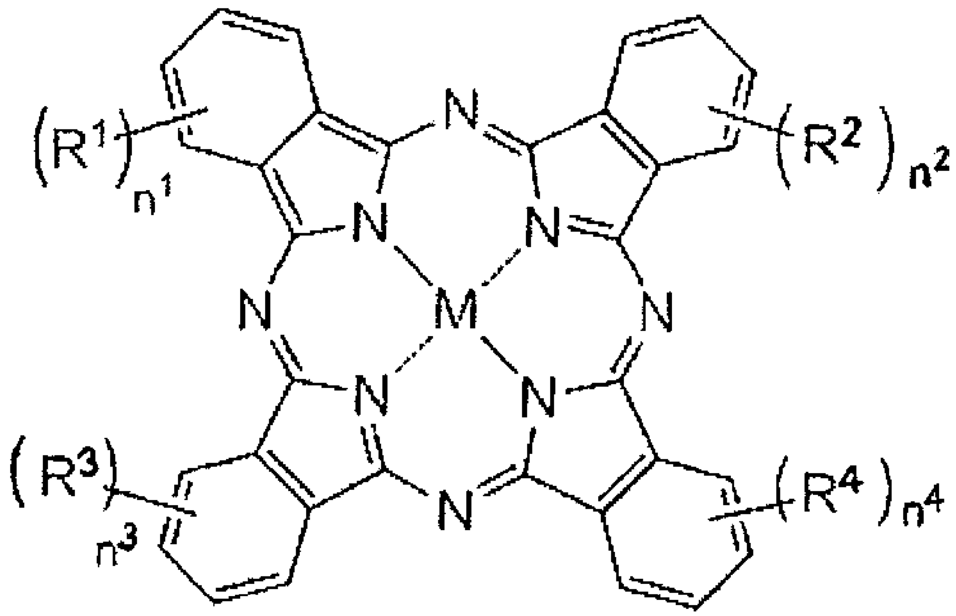

Formula (I)

wherein, in Formula (I), each of $R^1$, $R^2$, $R^3$ and $R^4$ independently represents a sulfo group, an alkyl group, an aryl group, or $-XR^{10}$; X represents an oxygen atom or a sulfur atom; $R^{10}$ represents an alkyl group or an aryl group; M represents a hydrogen atom, a metal element, a metal oxide, a metal hydroxide, or a metal halide; each of $n^1$, $n^2$, $n^3$ and $n^4$ independently represents from 0 to 4, and the sum of $n^1$, $n^2$, $n^3$ and $n^4$ is at least 1; provided that the structure of Formula (I) contains at least two ionic hydrophilic groups, at least one of $R^1$, $R^2$, $R^3$ and $R^4$ represents $-XR^{10}$, and $R^{10}$ has at least one ionic hydrophilic group.

**5.** The coloring composition for textile printing according to claim 4, wherein each of $R^1$, $R^2$, $R^3$ and $R^4$ in Formula (I) represents an alkyl group, an aryl group, or $-XR^{10}$.

**6.** The coloring composition for textile printing according to claim 4 or 5, wherein each of $R^1$, $R^2$, $R^3$ and $R^4$ in Formula (I) represents $-XR^{10}$.

**7.** The coloring composition for textile printing according to any one of claims 1 to 6, wherein the ionic hydrophilic group is a carboxyl group, a sulfo group, or a phosphoric acid group.

**8.** The coloring composition for textile printing according to any one of claims 4 to 7, wherein, in the dye represented by Formula (I), $R^{10}$ has two or three of $-XR^{10}$ in which $R^{10}$ has a sulfo group.

**9.** The coloring composition for textile printing according to claim 1 or 4, wherein the dye represented by Formula (I) is a dye represented by the following Formula (Y):

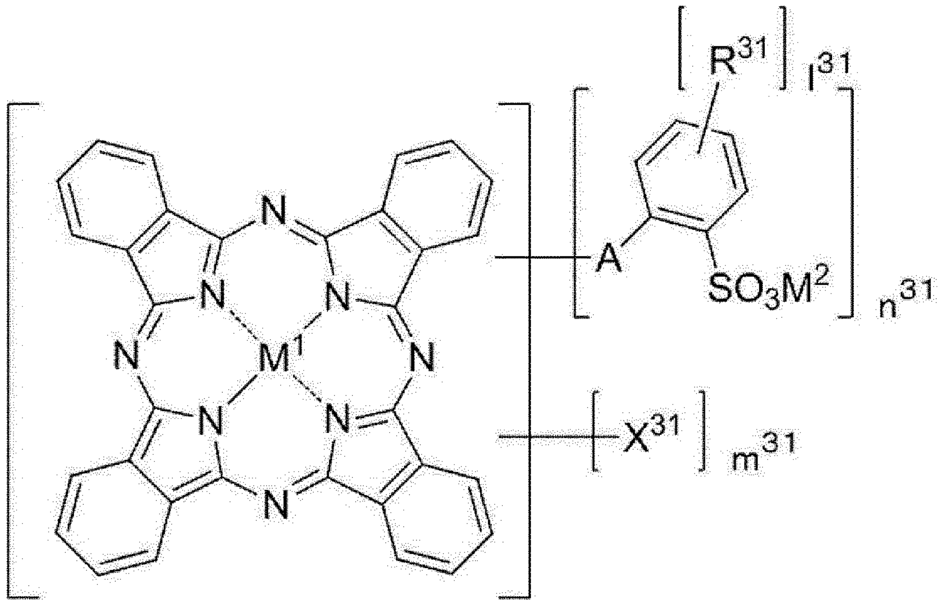

Formula (Y)

wherein, in Formula (Y), $X^{31}$ represents a halogen atom, an alkyl group, an aralkyl group, an alkenyl group, an alkynyl group, a cycloalkyl group, a cycloalkenyl group, an aryl group, a heterocyclic group, an alkyloxy group, an aryloxy group, an acylamino group, an alkylamino group, an anilino group, a ureido group, a sulfamoylamino group, an alkylthio group, an arylthio group, an alkyloxycarbonylamino group, a sulfonamide group, a carbamoyl group, a sulfamoyl group, a sulfo group, a sulfonyl group, an alkyloxycarbonyl group, a heterocyclic oxy group, an azo group, an acyloxy group, a carbamoyloxy group, a silyloxy group, an aryloxycarbonylamino group, an imide group, a heterocyclic thio group, a sulfinyl group, a phosphonyl group, an aryloxycarbonyl group, an acyl group, an ionic hydrophilic group, a cyano group, a hydroxyl group, a nitro group, an amino group, a carbonylalkyl group, or a carbonylamino group, and when there are plural $X^{31}$'s, each $X^{31}$ may be identical with or different from each other; A represents an oxygen atom or a sulfur atom, and when there are plural A's, each A may be identical with or different from each other; $M^1$ represents copper, zinc, nickel, or cobalt; $M^2$ represents a hydrogen atom, lithium, potassium, sodium, or ammonium, and when there are plural $M^2$'s, each $M^2$ may be identical with or different from each other; $R^{31}$ has the same meaning as $X^{31}$, and when there are plural $R^{31}$'s, each $R^{31}$ may be identical with or different from each other; $l^{31}$ represents an integer of 0 or more; $m^{31}$ represents an integer of 0 or more; and $n^{31}$ represents an integer from 1 to 4; provided that the structure of Formula (Y) contains at least two ionic hydrophilic groups.

**10.** The coloring composition for textile printing according to claim 9, wherein A in Formula (Y) represents an oxygen atom.

**11.** The coloring composition for textile printing according to claim 9 or 10, wherein $M^1$ in Formula (Y) represents copper.

**12.** The coloring composition for textile printing according to any one of claims 9 to 11, wherein, in Formula (Y), $R^{31}$ represents an alkyl group and $l^{31}$ represents 1.

**13.** The coloring composition for textile printing according to any one of claims 1 to 12, further comprising a dye represented by the following Formula (III):

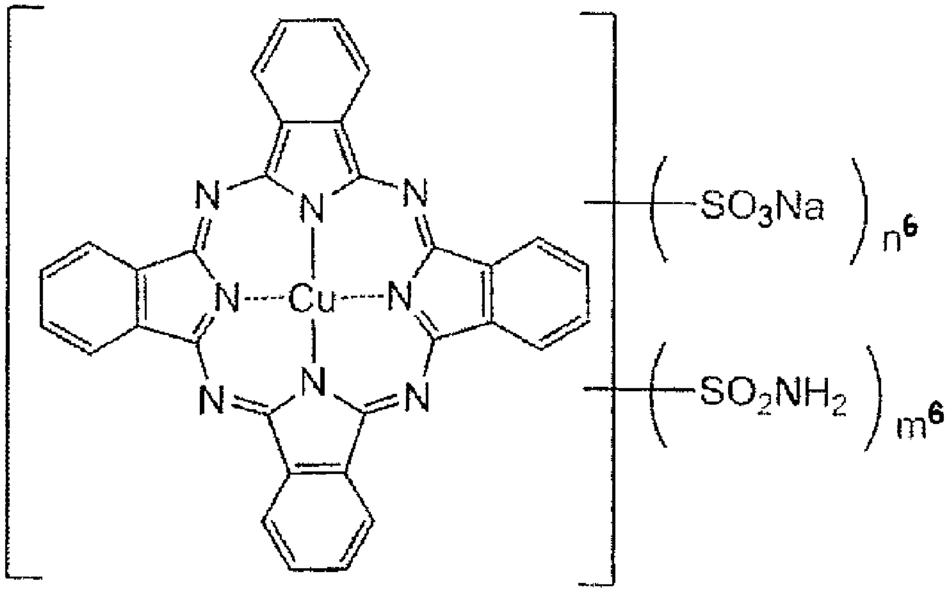

Formula (III)

wherein, in Formula (III), $n^6$ represents from 0.5 to 6; and $m^6$ represents from 0 to 3.

**14.** The coloring composition for textile printing according to any one of claims 1 to 13, for use as an inkjet ink.

**15.** A textile printing method, comprising:

applying, by an inkjet method, the coloring composition for textile printing according to claim 14 onto a fabric containing nylon.

**16.** A fabric that has been subjected to textile printing by the textile printing method according to claim 15.

**17.** A compound represented by the following Formula (Y):

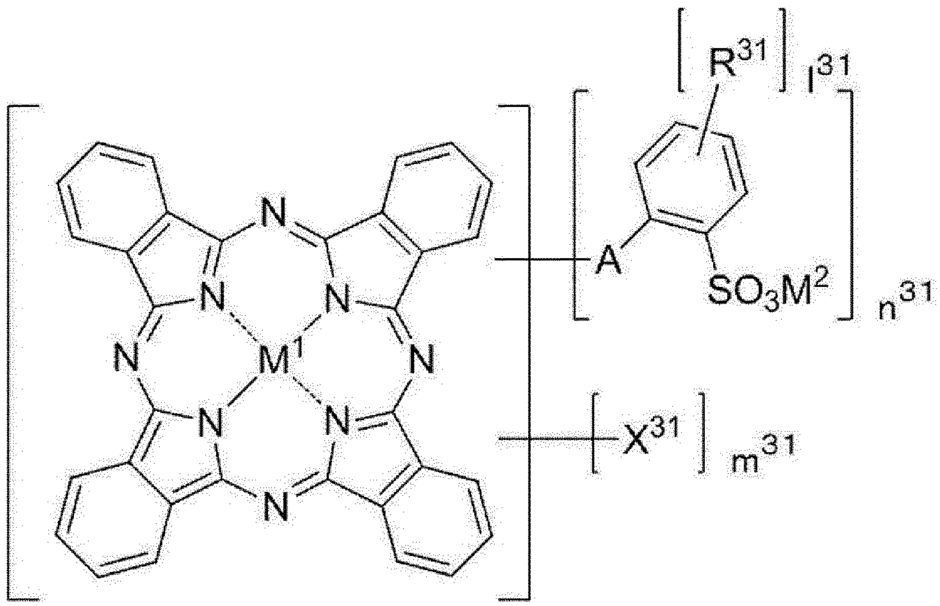

Formula (Y)

wherein, in Formula (Y), $X^{31}$ represents a halogen atom, an alkyl group, an aralkyl group, an alkenyl group, an alkynyl group, a cycloalkyl group, a cycloalkenyl group, an aryl group, a heterocyclic group, an alkyloxy group, an aryloxy group, an acylamino group, an alkylamino group, an anilino group, a ureido group, a sulfamoylamino group,

an alkylthio group, an arylthio group, an alkyloxycarbonylamino group, a sulfonamide group, a carbamoyl group, a sulfamoyl group, a sulfo group, a sulfonyl group, an alkyloxycarbonyl group, a heterocyclic oxy group, an azo group, an acyloxy group, a carbamoyloxy group, a silyloxy group, an aryloxycarbonylamino group, an imide group, a heterocyclic thio group, a sulfinyl group, a phosphonyl group, an aryloxycarbonyl group, an acyl group, an ionic hydrophilic group, a cyano group, a hydroxyl group, a nitro group, an amino group, a carbonylalkyl group, or a carbonylamino group, and when there are plural $X^{31}$'s, each $X^{31}$ may be identical with or different from each other; A represents an oxygen atom or a sulfur atom, and when there are plural A's, each A may be identical with or different from each other; $M^1$ represents copper, zinc, nickel, or cobalt; $M^2$ represents a hydrogen atom, lithium, potassium, sodium, or ammonium, and when there are plural $M^2$'s, each $M^2$ may be identical with or different from each other; $R^{31}$ represents a halogen atom, an alkyl group, an alkoxy group, an aryloxy group, an alkylthio group, or an arylthio group, and when there are plural $R^{31}$'s, each $R^{31}$ may be identical with or different from each other; $l^{31}$ represents an integer of 0 or more; $m^{31}$ represents an integer of 0 or more; and $n^{31}$ represents an integer from 1 to 4; provided that the structure of Formula (Y) contains at least two ionic hydrophilic groups.

**18.** The compound according to claim 17, wherein A in Formula (Y) represents an oxygen atom.

**19.** The compound according to claim 17 or 18, wherein $M^1$ in Formula (Y) represents copper.

**20.** The compound according to any one of claims 17 to 19, wherein, in Formula (Y), $R^{31}$ represents an alkyl group and $l^{31}$ represents 1.

FIG.1

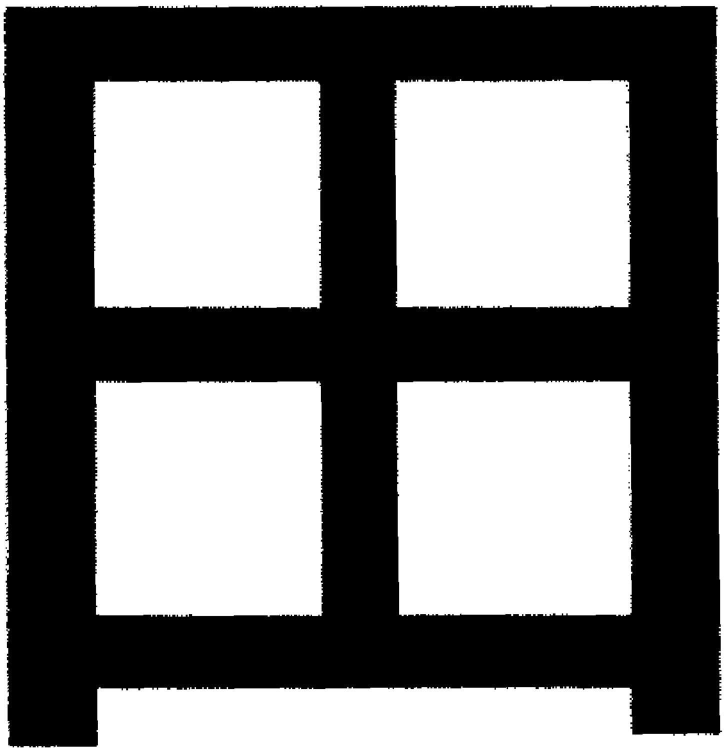

FIG.2

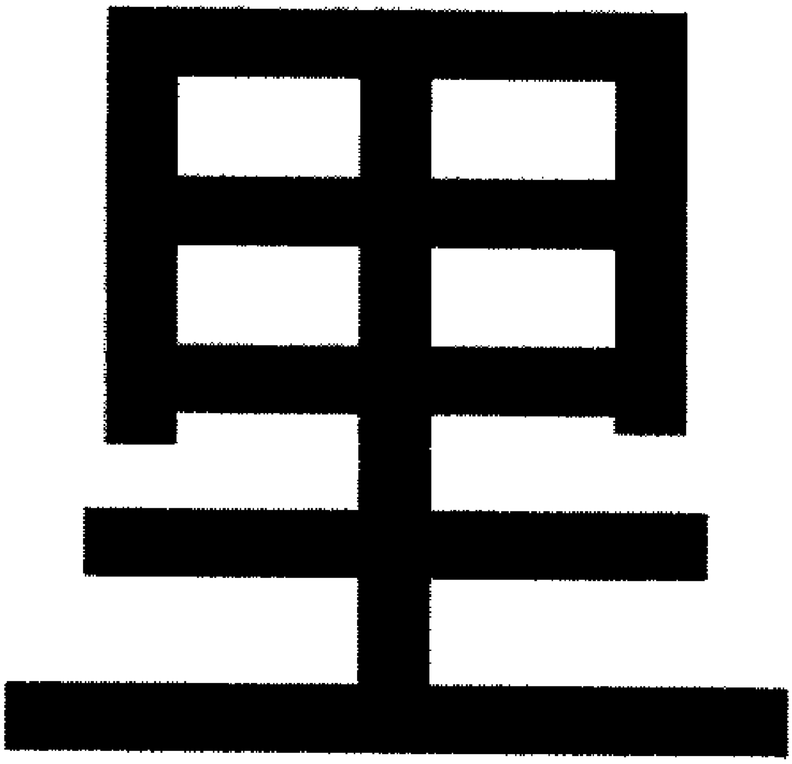

FIG.3

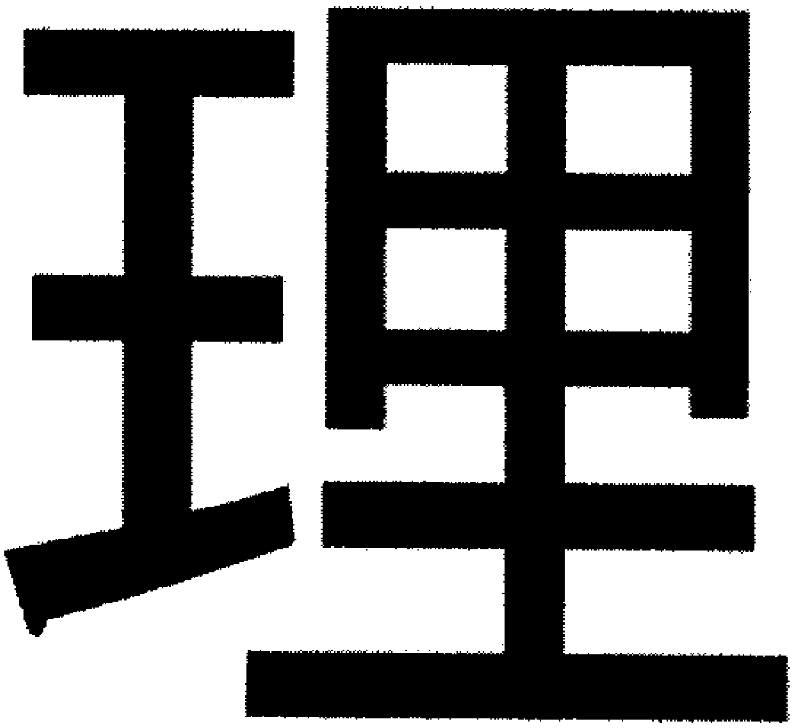

FIG.4

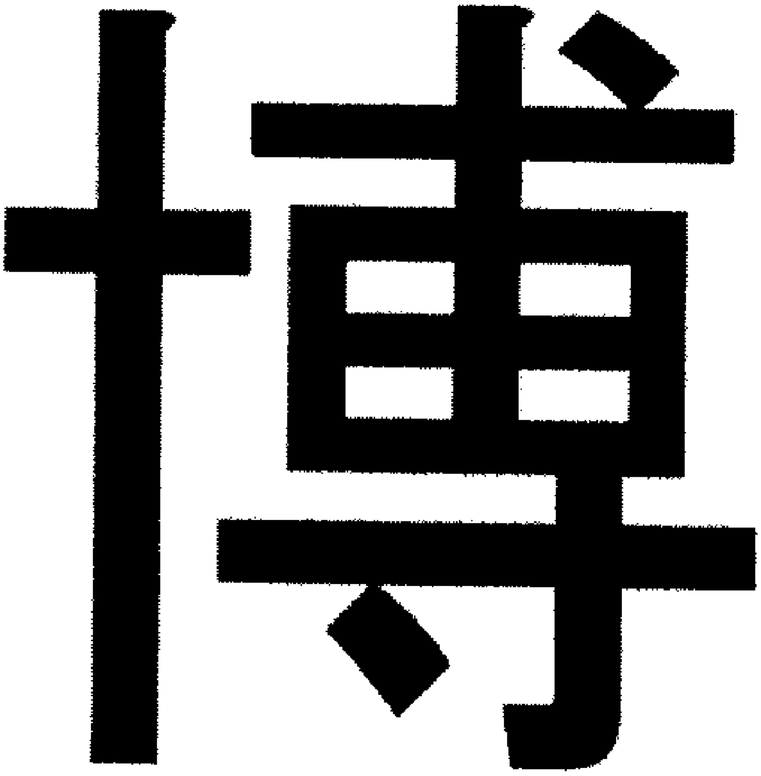

**INTERNATIONAL SEARCH REPORT**

International application No.
PCT/JP2012/082391

A. CLASSIFICATION OF SUBJECT MATTER
*C09B47/18*(2006.01)i, *B41J2/01*(2006.01)i, *B41M5/00*(2006.01)i, *C09B67/20*(2006.01)i, *C09D11/00*(2006.01)i, *D06P1/14*(2006.01)i, *D06P3/24*(2006.01)i, *D06P5/00*(2006.01)i

According to International Patent Classification (IPC) or to both national classification and IPC

B. FIELDS SEARCHED

Minimum documentation searched (classification system followed by classification symbols)
C09B47/18, B41J2/01, B41M5/00, C09B67/20, C09D11/00, D06P1/14, D06P3/24, D06P5/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
CAPLUS/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br><br>Y | JP 2001-213884 A (Yamada Chemical Co., Ltd.), 07 August 2001 (07.08.2001), claims; paragraph [0013]; example 1 (Family: none) | 1-12,14, 16-20<br>13,15 |
| X<br><br>Y | WO 2009/133668 A1 (Nippon Kayaku Co., Ltd.), 05 November 2009 (05.11.2009), claims; paragraph [0074]; examples & TW 201000575 A | 1,3-7,9,11, 14-17,19<br>2,8,10,12, 13,18,20 |
| Y | JP 2011-153166 A (Independent Administrative Institution National Institute for Materials Science), 11 August 2011 (11.08.2011), claims; paragraphs [0007], [0012]; drawings (Family: none) | 1-20 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>12 March, 2013 (12.03.13) | Date of mailing of the international search report<br>26 March, 2013 (26.03.13) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No. PCT/JP2012/082391

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2005-179656 A (Canon Inc.), 07 July 2005 (07.07.2005), claims; paragraph [0036] (Family: none) | 13 |
| Y | JP 2007-217526 A (Brother Industries, Ltd.), 30 August 2007 (30.08.2007), claims & US 2007/0186808 A1 & EP 1820831 A1 & DE 602007000069 D & AT 404645 T | 13 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3011830 B
- JP 2002302626 A
- JP 2003138180 A
- JP S59157636 A
- JP S58185677 A
- JP S61190537 A
- JP H02782 A
- JP H05197075 A
- JP H0934057 A
- JP S462784 A
- JP H05194483 A
- US 3214463 A
- JP S4830492 B
- JP 56021141 B
- JP H1088106 A
- JP H04298503 A
- JP 8053427 A
- JP H08239368 A
- JP H10182621 A
- JP H08501291 A
- JP S62215272 A
- US 5356443 A
- JP 2000355665 A
- JP 2005126725 A
- JP 2012050902 A
- JP 2012113691 A
- JP 2012189163 A
- JP 2012248534 A


### Non-patent literature cited in the description


- *Research Disclosure No. 308119,* 1989